# EUROPEAN PATENT APPLICATION

(11) **EP 4 848 838 A1**
(43) Date of publication of application: **02.12.2026**
(21) Application number: 25751036.2
(22) Date of filing: 07.01.2025
(51) Int. Cl.: H04W 52/32

(54) **COMMUNICATION METHOD AND APPARATUS**

(30) Priority: 07.02.2024 CN 202410176094
(71) Applicant: Huawei Technologies Co., Ltd., Shenzhen, Guangdong 518129 (CN)
(72) Inventor: HU, Mengshi, Shenzhen, Guangdong 518129 (CN); YU, Jian, Shenzhen, Guangdong 518129 (CN); GAN, Ming, Shenzhen, Guangdong 518129 (CN)
(74) Representative: Huawei European IPR
(86) International application number: PCT/CN2025/070955
(87) International publication number: WO 2025/167434

(57) **Abstract**

A communication method and apparatus are provided. This application supports IEEE protocols, for example, IEEE 802.11be/Wi-Fi 7/EHT, IEEE 802.11bn/UHR/Wi-Fi 8, IEEE 802.15/UWB, and IEEE 802.11bf/sensing. This application provides a tone plan. A communication apparatus may transmit a pilot signal by using the tone plan. The tone plan meets the following conditions: A part of subcarriers of each of K resource units RUs appear cyclically at an equal interval in a partial frequency domain range; and the K RUs include a first RU and a second RU, and a relative position of a first pilot subcarrier in the first RU is different from a relative position of a second pilot subcarrier in the second RU. In this way, pilot subcarriers are more distributed, helping improve phase estimation and frequency correction performance.

## Description

This application claims priority to Chinese Patent Application No. 202410176094.1, filed with the China National Intellectual Property Administration on February 7, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a low power indoor (low power indoor, LPI) communication mode, a maximum sending power and a maximum frequency spectrum density of a communication device are limited. For example, for an access point (access point, AP), a maximum sending power is 30 decibel-milliwatts (decibel-milliwatts, dBm) and a maximum power spectrum density is 5 dBm/megahertz (MHz). For a station (station, STA), a maximum sending power is 24 dBm and a maximum power spectrum density is -1 dBm/MHz. Based on this, when the maximum power spectrum density is limited, the communication device may send signals on a larger bandwidth through more distributed subcarriers, to implement a higher sending power.

However, pilot subcarriers in the subcarriers may be excessively close to each other, affecting phase estimation and frequency correction performance.

### SUMMARY

To resolve the foregoing technical problem, this application provides a communication method and apparatus, to alleviate a problem that pilot subcarriers are excessively close to each other, and improve phase estimation and frequency correction performance. To achieve the foregoing objective, this application uses the following technical solutions.

According to a first aspect, a communication method is provided. The method may be performed by a first communication apparatus, or may be performed by a component (for example, a processor, a chip, or a chip system) of the first communication apparatus, or may be performed by a logical module or software that can implement all or a part of functions of the first communication apparatus. The first communication apparatus is a Wi-Fi device, for example, an access point AP or a station STA. The following provides descriptions by using an example in which the execution body is the first communication apparatus. The method includes:
generating a pilot signal of a third resource unit RU; and sending the pilot signal on a pilot subcarrier of the third RU, where the third RU belongs to a first bandwidth, the third RU includes one or more RUs in K RUs, the K RUs are RUs included in a tone plan of the first bandwidth, each of the K RUs includes 26 subcarriers, and K is a positive integer greater than or equal to 2.

The tone plan of the first bandwidth meets the following two conditions.

A first condition is that a part of subcarriers of each of the K RUs appear cyclically at an equal interval in a partial frequency domain range. For example, in the partial frequency range, in a plurality of subcarriers from a low frequency to a high frequency, every K-1 subcarriers belong to a same RU.

A second condition is that the K RUs include a first RU and a second RU, the first RU includes a first pilot subcarrier, the second RU includes a second pilot subcarrier, and a relative position of the first pilot subcarrier in the first RU is different from a relative position of the second pilot subcarrier in the second RU.

The pilot subcarrier of the third RU includes a part or all of pilot subcarriers of at least one RU in the one or more RUs.

For example, the first pilot subcarrier may be two pilot subcarriers, for example, a pilot subcarrier 1 and a pilot subcarrier 2. The second pilot subcarrier may also be two pilot subcarriers, for example, a pilot subcarrier 3 and a pilot subcarrier 4.

The relative position of the first pilot subcarrier in the first RU is a relative position of the pilot subcarrier 1 in the first RU and a relative position of the pilot subcarrier 2 in the first RU.

The relative position of the second pilot subcarrier in the second RU is a relative position of the pilot subcarrier 3 in the second RU and a relative position of the pilot subcarrier 4 in the second RU.

That the relative position of the first pilot subcarrier in the first RU is different from the relative position of the second pilot subcarrier in the second RU may be understood as that a relative position of at least one pilot subcarrier in the first RU is different from relative positions of all pilot subcarriers in the second RU. For example, the following three cases may be included.

Case 1: The relative position of the pilot subcarrier 1 in the first RU is the same as the relative position of the pilot subcarrier 3 in the second RU. In addition, the relative position of the pilot subcarrier 2 in the first RU is different from the relative position of the pilot subcarrier 4 in the second RU.

Case 2: The relative position of the pilot subcarrier 1 in the first RU is different from the relative position of the pilot subcarrier 3 in the second RU. In addition, the relative position of the pilot subcarrier 2 in the first RU is the same as the relative position of the pilot subcarrier 4 in the second RU.

Case 3: The relative position of the pilot subcarrier 1 in the first RU is different from the relative position of the pilot subcarrier 3 in the second RU. In addition, the relative position of the pilot subcarrier 2 in the first RU is different from the relative position of the pilot subcarrier 4 in the second RU.

In other words, when the first bandwidth meets the first tone plan, it may be understood that the K RUs are distributed RUs. For the K distributed RUs, at least two RUs meet the second tone plan, that is, the two distributed RUs use subcarriers at different relative positions as pilot subcarriers. In this way, in comparison with a case in which all RUs use subcarriers at a same relative position as pilot subcarriers, in this application, at least two RUs in the K RUs use subcarriers at different relative positions as pilot subcarriers, to reduce a possibility that pilot subcarriers of the K RUs are centralized, and alleviate a problem that "positions of pilot subcarriers are excessively close" to an extent.

Further, because the third RU includes the one or more RUs in the K RUs, and the pilot subcarrier of the third RU includes the part or all of the pilot subcarriers of the at least one RU in the one or more RUs, a possibility that the pilot signal sent on the pilot subcarrier of the third RU is affected by narrowband interference is reduced, helping improve phase estimation and frequency correction performance.

According to a second aspect, a communication method is provided. The method may be performed by a second communication apparatus, or may be performed by a component (for example, a processor, a chip, or a chip system) of the second communication apparatus, or may be performed by a logical module or software that can implement all or a part of functions of the second communication apparatus. The second communication apparatus is a Wi-Fi device, for example, an access point AP or a station STA. The following provides descriptions by using an example in which the execution body is the second communication apparatus. The method includes:
receiving a pilot signal on a pilot subcarrier of a third resource unit RU, and parsing the pilot signal.

The third RU belongs to a first bandwidth, the third RU includes one or more RUs in K RUs, the K RUs are RUs included in a tone plan of the first bandwidth, each of the K RUs includes 26 subcarriers, and K is a positive integer greater than or equal to 2.

The tone plan of the first bandwidth meets the following two conditions.

A first condition is that a part of subcarriers of each of the K RUs appear cyclically at an equal interval in a partial frequency domain range.

A second condition is that the K RUs include a first RU and a second RU, the first RU includes a first pilot subcarrier, the second RU includes a second pilot subcarrier, and a relative position of the first pilot subcarrier in the first RU is different from a relative position of the second pilot subcarrier in the second RU.

The pilot subcarrier of the third RU includes a part or all of pilot subcarriers of at least one RU in the one or more RUs.

With reference to the first aspect or the second aspect, in a possible design, the K RUs further include a fourth RU, the fourth RU includes a third pilot subcarrier, and a relative position of the third pilot subcarrier in the fourth RU is the same as the relative position of the second pilot subcarrier in the second RU.

That the relative position of the third pilot subcarrier in the fourth RU is the same as the relative position of the second pilot subcarrier in the second RU may be understood as that relative positions of all pilot subcarriers in the fourth RU are same as relative positions of all pilot subcarriers in the second RU.

For example, from a perspective of cyclic units, there may be two cyclic units, for example, a cyclic unit 1 and a cyclic unit 2. The cyclic unit 1 and the cyclic unit 2 each include K subcarriers. The K subcarriers include one subcarrier of each of the K RUs.

The second pilot subcarrier includes two subcarriers, which are distributed in the cyclic unit 1 and the cyclic unit 2. The third pilot subcarrier includes two subcarriers, which are distributed in the cyclic unit 1 and the cyclic unit 2. For example, an identifier of the second RU is 1, and an identifier of the third RU is 6.

In this way, the relative position of the third pilot subcarrier in the fourth RU is the same as the relative position of the second pilot subcarrier in the second RU.

For another example, from a perspective of relative positions, there are two initial relative positions, for example, a first relative position and a second relative position.

The first relative position indicates that an a₁^{th} subcarrier and a b₁^{th} subcarrier in an RU are pilot subcarriers. The first relative position corresponds to a first part of RUs in the K RUs, and the first part of RUs includes the first RU. For example, identifiers of the first part of RUs include 1, 6, 3, and 8.

The second relative position indicates that an a₂^{th} subcarrier and a b₂^{th} subcarrier in an RU are pilot subcarriers. The second relative position corresponds to a second part of RUs in the K RUs, and the second part of RUs includes the second RU and the fourth RU. For example, identifiers of the second part of RUs include 2, 7, and 4. Alternatively, the identifiers of the second part of RUs include 2, 7, 4, 9, and 5.

Values of the parameters a₁, b₁, a₂, and b₂ are positive integers. Values of the parameters a₁ and b₁ are different, and values of the parameters a₂ and b₂ are different. Values of the parameters a₁ and a₂ are different, and/or values of the parameters b₁ and b₂ are different. For example, a₁=6, b₁=20, a₂=7, and b₂=21. Alternatively, a₁=6, b₁=21, a₂=7, and b₂=20.

With reference to the first aspect or the second aspect, in a possible design, the first pilot subcarrier includes one subcarrier in a first cyclic unit and one subcarrier in a second cyclic unit, the first cyclic unit is different from the second cyclic unit, and the relative position of the first pilot subcarrier in the first RU is determined based on the first cyclic unit and the second cyclic unit.

The second pilot subcarrier includes one subcarrier in a third cyclic unit and one subcarrier in a fourth cyclic unit, the third cyclic unit is different from the fourth cyclic unit, and the relative position of the second pilot subcarrier in the second RU is determined based on the third cyclic unit and the fourth cyclic unit.

The first cyclic unit is different from the third cyclic unit, and/or the second cyclic unit is different from the fourth cyclic unit; and the first cyclic unit, the second cyclic unit, the third cyclic unit, and the fourth subcarrier each include one subcarrier of each of the K RUs.

In other words, the pilot subcarriers may be allocated based on a cyclic unit. Pilot subcarriers of a same RU are distributed in different cyclic units. For example, the first pilot subcarrier is distributed in the first cyclic unit and the second cyclic unit, and the second pilot subcarrier is distributed in the third cyclic unit and the fourth cyclic unit. When the first cyclic unit is different from the third cyclic unit, and/or the second cyclic unit is different from the fourth cyclic unit, the relative position of the first pilot subcarrier in the first RU is different from the relative position of the second pilot subcarrier in the second RU, so that the pilot subcarriers become more distributed.

With reference to the first aspect or the second aspect, in a possible design, cyclic positions of the first pilot subcarrier in the first cyclic unit and the second cyclic unit are determined based on the following two items: an identifier of the first RU and K RU identifiers. Cyclic positions of the second pilot subcarrier in the third cyclic unit and the fourth cyclic unit are determined based on the following two items: an identifier of the second RU and the K RU identifiers. The K RU identifiers are in a one-to-one correspondence with the K RUs.

With reference to the first aspect or the second aspect, in a possible design, the identifier of the first RU is an M₁^{th} identifier in the K RU identifiers, the identifier of the second RU is an (M₁+N₁)^{th} identifier in the K RU identifiers, M₁ and N₁ are positive integers, and a sum of M₁ and N₁ is a positive integer less than or equal to K.

The first pilot subcarrier includes an M₁^{th} subcarrier in the first cyclic unit and an M₁^{th} subcarrier in the second cyclic unit, where the M₁^{th} subcarrier corresponds to the identifier of the first RU.

The second pilot subcarrier includes an (M₁+N₁)^{th} subcarrier in the third cyclic unit and an (M₁+N₁)^{th} subcarrier in the fourth cyclic unit, where the (M₁+N₁)^{th} subcarrier corresponds to the identifier of the second RU.

In other words, for at least two RUs (for example, the first RU or the second RU), a cyclic position of a pilot subcarrier of each of the at least two RUs in a cyclic unit is related to an identifier of the RU and the K RU identifiers, so that distribution of the pilot subcarriers is more distributed.

With reference to the first aspect or the second aspect, in a possible design, the K RU identifiers include 1, 6, 3, 8, 2, 7, 4, 9, and 5, and the K RU identifiers are in a one-to-one correspondence with the K RUs. An identifier of the second RU is different from an identifier of the fourth RU.

In a first example, the identifier of the second RU is one of the following: 1, 6, 3, and 8, and the identifier of the fourth RU is one of the following: 1, 6, 3, and 8. Alternatively, the identifier of the second RU is one of the following: 2, 7, and 4, and the identifier of the fourth RU is one of the following: 2, 7, and 4. Alternatively, the identifier of the second RU is one of the following: 9 and 5, and the identifier of the fourth RU is one of the following: 9 and 5.

In a second example, the identifier of the second RU is one of the following: 1, 6, 3, and 8, and the identifier of the fourth RU is one of the following: 1, 6, 3, and 8. Alternatively, the identifier of the second RU is one of the following: 2, 7, 4, 9, and 5, and the identifier of the fourth RU is one of the following: 2, 7, 4, 9, and 5.

In other words, a specific quantity (for example, less than K) of relative positions may be defined, and some RUs in the K RUs use a same relative position, so that the problem that "positions of pilot subcarriers are excessively close" can be alleviated, a type of an RU can be simplified, and processing complexity can be reduced.

For example, at least three relative positions are respectively denoted as a third relative position, a fourth relative position, and a fifth relative position. The third relative position is applicable to RUs whose identifiers are 1, 6, 3, and 8. The fourth relative position is applicable to RUs whose identifiers are 2, 7, and 4. The fifth relative position is applicable to RUs whose identifiers are 9 and 5.

For another example, at least two relative positions are respectively denoted as a third relative position and a fourth relative position. The third relative position is applicable to RUs whose identifiers are 1, 6, 3, and 8. The fourth relative position is applicable to RUs whose identifiers are 2, 7, 4, 9, and 5.

With reference to the first aspect or the second aspect, in a possible design, the first pilot subcarrier includes an X₃^{th} subcarrier and a Y₃^{th} subcarrier of the first RU, and the second pilot subcarrier includes an X₄^{th} subcarrier and a Y₄th subcarrier of the second RU. X₃=6, Y₃=20, X₄=7, and Y₄=21; or X₃=6, Y₃=21, X₄=7, and Y₄=20; or X₃=7, Y₃=21, X₄=7, and Y₄=22; or X₃=6, Y₃=20, X₄=7, and Y₄=22; or X₃=7, Y₃=20, X₄=7, and Y₄=21; or X₃=6, Y₃=21, X₄=7, and Y₄=21, so that the pilot subcarriers are more distributed and even.

With reference to the first aspect or the second aspect, in a possible design, the K RUs further include a fifth RU, and the fifth RU includes a fourth pilot subcarrier, and a cyclic unit in which the fourth pilot subcarrier is located is the same as a cyclic unit in which the second pilot subcarrier is located.

That the cyclic unit in which the fourth pilot subcarrier is located is the same as the cyclic unit in which the second pilot subcarrier is located may be understood as that all cyclic units in which pilot subcarriers in the fifth RU are located are the same as all cyclic units in which pilot subcarriers in the second RU are located.

With reference to the first aspect or the second aspect, in a possible design, the K RU identifiers include 1, 6, 3, 8, 2, 7, 4, 9, and 5, and the K RU identifiers are in a one-to-one correspondence with the K RUs. An identifier of the second RU is different from an identifier of the fifth RU. The identifier of the second RU is one of the following: 2, 7, and 4, and the identifier of the fifth RU is one of the following: 2, 7, and 4. In this case, a relative position of the fourth pilot subcarrier in the fifth RU is the same as the relative position of the second pilot subcarrier in the second RU. In other words, a sequence of the pilot subcarriers is neater, and the second communication apparatus can further conveniently receive the pilot signal.

With reference to the first aspect or the second aspect, in a possible design, the fourth pilot subcarrier includes an X₅^{th} subcarrier and a Y₅^{th} subcarrier of the fifth RU. X₅=6 and Y₅=20; or X₅=7 and Y₅=21; or X₅=7 and Y₅=22; or X₅=6 and Y₅=21; or X₅=7 and Y₅=20; or X₅=7 and Y₅=21, so that the sequence of the pilot subcarriers is more distributed.

With reference to the first aspect or the second aspect, in a possible design, an identifier of the first RU is an M₂^{th} RU identifier in K RU identifiers, the K RU identifiers are in a one-to-one correspondence with the K RUs, and M₂ is a positive integer less than or equal to K.

The first pilot subcarrier includes an (X₁-a)^{th} subcarrier in the first RU and a (Y₁-a)^{th} subcarrier in the first RU, where a=k-M₂, k is a positive integer less than or equal to K, and X₁ and Y₁ are positive integers.

Herein, k, X₁, and Y₁ are predefined or preconfigured parameters.

For example, the parameter k indicates one of the K RU identifiers. The RU identifier indicated by the parameter k is an RU reference identifier. For example, k=5.

For example, the parameters X₁ and Y₁ indicate a first relative position, and the first relative position indicates that an X₁^{th} subcarrier and a Y₁^{th} subcarrier in an RU are pilot subcarriers. For example, X₁=7 and Y₁=20.

In this way, the relative position of the first pilot subcarrier in the first RU may be determined based on the parameters k, X₁, and Y₁. For example, a shift is performed based on the first relative position. The parameter a used during the shift is determined based on the RU reference identifier and the identifier of the first RU.

With reference to the first aspect or the second aspect, in a possible design, both the parameters X₁ and Y₁ are associated with a first part of identifiers in the K RU identifiers, and the first part of identifiers includes the identifier of the first RU.

For example, the K RU identifiers include 1, 6, 3, 8, 2, 7, 4, 9, and 5, and the first part of identifiers includes 1, 6, 3, 8, 2, 7, and 4.

In other words, in RUs corresponding to the first part of identifiers, relative positions of pilot subcarriers of different RUs may be determined based on the parameters k, X₁, and Y₁. For example, a shift is performed based on the first relative position, helping simplify processing complexity.

With reference to the first aspect or the second aspect, in a possible design, X₁=7, and Y₁=20.

With reference to the first aspect or the second aspect, in a possible design, an identifier of the second RU is an N₂^{th} RU identifier in the K RU identifiers, and N₂ is a positive integer less than or equal to K. The second pilot subcarrier includes an (X₁-b)^{th} subcarrier in the second RU and a (Y₁-b)^{th} subcarrier in the second RU, where b=k-N₂.

In other words, the relative position of the second pilot subcarrier in the second RU may also be determined based on the parameters k, X₁, and Y₁. For example, a shift is performed based on the first relative position. The parameter a used during the shift is determined based on the RU reference identifier and the identifier of the second RU, so that pilot subcarriers of different RUs are as distributed as possible.

With reference to the first aspect or the second aspect, in a possible design, both the parameters X₁ and Y₁ are associated with a first part of identifiers in the K RU identifiers, and the first part of identifiers includes the identifier of the second RU.

With reference to the first aspect or the second aspect, in a possible design, the first subcarrier includes a 3^{rd} subcarrier and a 16^{th} subcarrier of the first RU, and the second subcarrier includes a 4^{th} subcarrier and a 17^{th} subcarrier of the second RU.

With reference to the first aspect or the second aspect, in a possible design, the first subcarrier includes a 4^{th} subcarrier and a 17^{th} subcarrier of the first RU, and the second subcarrier includes a 5^{th} subcarrier and an 18^{th} subcarrier of the second RU.

With reference to the first aspect or the second aspect, in a possible design, the first subcarrier includes a 5^{th} subcarrier and an 18^{th} subcarrier of the first RU, and the second subcarrier includes a 6^{th} subcarrier and a 19^{th} subcarrier of the second RU.

With reference to the first aspect or the second aspect, in a possible design, the first subcarrier includes a 6^{th} subcarrier and a 19^{th} subcarrier of the first RU, and the second subcarrier includes a 7^{th} subcarrier and a 20^{th} subcarrier of the second RU.

With reference to the first aspect or the second aspect, in a possible design, the first subcarrier includes a 7^{th} subcarrier and a 20^{th} subcarrier of the first RU, and the second subcarrier includes an 8^{th} subcarrier and a 21^{st} subcarrier of the second RU.

With reference to the first aspect or the second aspect, in a possible design, the first subcarrier includes an 8^{th} subcarrier and a 21^{st} subcarrier of the first RU, and the second subcarrier includes a 9^{th} subcarrier and a 22^{nd} subcarrier of the second RU.

With reference to the first aspect or the second aspect, in a possible design, the first subcarrier includes a 9^{th} subcarrier and a 22^{nd} subcarrier of the first RU, and the second subcarrier includes a 10^{th} subcarrier and a 23^{rd} subcarrier of the second RU.

With reference to the first aspect or the second aspect, in a possible design, the first subcarrier includes a 10^{th} subcarrier and a 23^{rd} subcarrier of the first RU, and the second subcarrier includes an 11^{th} subcarrier and a 24^{th} subcarrier of the second RU.

With reference to the first aspect or the second aspect, in a possible design, an identifier of the second RU is an N₃^{th} RU identifier in the K RU identifiers, and N₃ is a positive integer less than or equal to K.

The second pilot subcarrier includes an (X₂-c)^{th} subcarrier in the second RU and a (Z₂-c)^{th} subcarrier in the second RU, where c=k-N₃, X₂ and Y₂ are positive integers, and values of X₁ and X₂ are different, and/or values of Y₁ and Y₂ are different.

Herein, X₂ and Y₂ are predefined or preconfigured parameters.

For example, the parameters X₂ and Y₂ indicate a second relative position, and the second relative position is that an X₂^{th} subcarrier and a Y₂^{th} subcarrier in an RU are pilot subcarriers. For example, X₂=7 and Y₂=21.

In this way, the relative position of the second pilot subcarrier in the second RU may be determined based on the parameters k, X₂, and Y₂. For example, a shift is performed based on the second relative position. The parameter a used during the shift is determined based on the RU reference identifier and the identifier of the second RU.

With reference to the first aspect or the second aspect, in a possible design, both the parameters X₂ and Y₂ are associated with a second part of identifiers in the K RU identifiers, and the second part of identifiers includes the identifier of the second RU.

For example, the K RU identifiers include 1, 6, 3, 8, 2, 7, 4, 9, and 5, and the second part of identifiers includes 9 and 5.

In other words, in RUs corresponding to the second part of identifiers, relative positions of pilot subcarriers of different RUs may be determined based on the parameters k, X₂, and Y₂. For example, a shift is performed based on the second relative position, helping simplify processing complexity.

With reference to the first aspect or the second aspect, in a possible design, X₂=7, and Y₂=21.

With reference to the first aspect or the second aspect, in a possible design, the first subcarrier includes a 3^{rd} subcarrier and a 16^{th} subcarrier of the first RU, and the second subcarrier includes a 4^{th} subcarrier and a 17^{th} subcarrier of the second RU.

With reference to the first aspect or the second aspect, in a possible design, the first subcarrier includes a 4^{th} subcarrier and a 17^{th} subcarrier of the first RU, and the second subcarrier includes a 5^{th} subcarrier and an 18^{th} subcarrier of the second RU.

With reference to the first aspect or the second aspect, in a possible design, the first subcarrier includes a 5^{th} subcarrier and an 18^{th} subcarrier of the first RU, and the second subcarrier includes a 6^{th} subcarrier and a 19^{th} subcarrier of the second RU.

With reference to the first aspect or the second aspect, in a possible design, the first subcarrier includes a 6^{th} subcarrier and a 19^{th} subcarrier of the first RU, and the second subcarrier includes a 7^{th} subcarrier and a 20^{th} subcarrier of the second RU.

With reference to the first aspect or the second aspect, in a possible design, the first subcarrier includes a 7^{th} subcarrier and a 20^{th} subcarrier of the first RU, and the second subcarrier includes an 8^{th} subcarrier and a 21^{st} subcarrier of the second RU.

With reference to the first aspect or the second aspect, in a possible design, the first subcarrier includes an 8^{th} subcarrier and a 21^{st} subcarrier of the first RU, and the second subcarrier includes a 9^{th} subcarrier and a 22^{nd} subcarrier of the second RU.

With reference to the first aspect or the second aspect, in a possible design, the first subcarrier includes a 9^{th} subcarrier and a 22^{nd} subcarrier of the first RU, and the second subcarrier includes a 10^{th} subcarrier and a 24^{th} subcarrier of the second RU.

With reference to the first aspect or the second aspect, in a possible design, the first subcarrier includes a 10^{th} subcarrier and a 24^{th} subcarrier of the first RU, and the second subcarrier includes an 11^{th} subcarrier and a 25^{th} subcarrier of the second RU.

According to a third aspect, an embodiment of this application provides a communication apparatus, configured to perform the method according to any one of the first aspect or the possible implementations. The communication apparatus includes a module configured to perform the method according to any one of the first aspect or the possible implementations.

According to a fourth aspect, an embodiment of this application provides a communication apparatus, configured to perform the method according to any one of the second aspect or the possible implementations. The communication apparatus includes a module configured to perform the method according to any one of the second aspect or the possible implementations.

According to a fifth aspect, an embodiment of this application provides a communication apparatus. The communication apparatus includes a processor configured to perform the method according to any one of the first aspect or the possible implementations. The processor is configured to execute a program stored in a memory. When the program is executed, the method according to the first aspect or any possible implementation is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together. For example, the communication apparatus may be a chip.

In a possible implementation, the communication apparatus further includes a transceiver. The transceiver is configured to receive information or send information.

According to a sixth aspect, an embodiment of this application provides a communication apparatus. The communication apparatus includes a processor configured to perform the method according to any one of the second aspect or the possible implementations. The processor is configured to execute a program stored in a memory. When the program is executed, the method according to the second aspect or any possible implementation is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together. For example, the communication apparatus may be a chip.

In a possible implementation, the communication apparatus further includes a transceiver. The transceiver is configured to receive information or send information.

According to a seventh aspect, an embodiment of this application provides a communication apparatus. The communication apparatus includes a logic circuit and an interface. The logic circuit is coupled to the interface. The interface is configured to input and/or output information. The logic circuit is configured to perform the method according to any one of the first aspect or the possible implementations.

According to an eighth aspect, an embodiment of this application provides a communication apparatus. The communication apparatus includes a logic circuit and an interface. The logic circuit is coupled to the interface. The interface is configured to input and/or output information. The logic circuit is configured to perform the method according to any one of the second aspect or the possible implementations.

According to a ninth aspect, an embodiment of this application provides a computer-readable storage medium. The computer-readable storage medium is configured to store a computer program, and when the computer program is run on a computer, the method according to any one of the first aspect and the second aspect or the possible implementations is performed.

According to a tenth aspect, an embodiment of this application provides a computer program product. When the computer program product runs on a computer, the method according to any one of the first aspect and the second aspect or the possible implementations is performed.

According to an eleventh aspect, an embodiment of this application provides a computer program. When the computer program is run on a computer, the method according to any one of the first aspect and the second aspect or the possible implementations is performed.

According to a twelfth aspect, an embodiment of this application provides a communication system. The communication system includes a first communication apparatus and/or a second communication apparatus, the first communication apparatus is configured to perform the method according to any one of the first aspect or the possible implementations of the first aspect, and the second communication apparatus is configured to perform the method according to any one of the second aspect or the possible implementations of the second aspect.

For technical effect achieved in any design manner in the third aspect to the twelfth aspect, refer to technical effect achieved in different design manners in the first aspect. Details are not described herein again.

### BRIEF DESCRIPTION OF DRAWINGS

FIG. 1 is a diagram of an architecture of a communication system according to an embodiment of this application;
FIG. 2 is a diagram of subcarrier distribution and resource unit RU distribution of 20 MHz according to an embodiment of this application;
FIG. 3 is a diagram of subcarrier distribution and resource unit RU distribution of 40 MHz according to an embodiment of this application;
FIG. 4 is a diagram of subcarrier distribution and resource unit RU distribution of 80 MHz according to an embodiment of this application;
FIG. 5 is a diagram of a distributed resource unit RU according to an embodiment of this application;
FIG. 6 is a diagram of another distributed resource unit RU according to an embodiment of this application;
FIG. 7 is a diagram of distribution of pilot subcarriers according to an embodiment of this application;
FIG. 8 is a diagram of a principle of narrowband interference according to an embodiment of this application;
FIG. 9 is a schematic flowchart of a communication method according to an embodiment of this application;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of another communication apparatus according to an embodiment of this application.

### DESCRIPTION OF EMBODIMENTS

The following describes technical solutions of this application with reference to accompanying drawings.

For ease of understanding of this application, the following descriptions are provided before embodiments of this application are described.
1. In this application, terms "system" and "network" are interchangeable. All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In this application, words such as "in an example" or "for example" are used to represent giving an example, an illustration, or a description. Any embodiment or design scheme described as an "example" in this application should not be explained as being more preferred or having more advantages than another embodiment or design scheme. Exactly, the word "example" is used to present a concept in a specific manner.

In this application, "of (of)", "relevant (corresponding, relevant)", and "corresponding (corresponding)" may be interchangeably used sometimes. It should be noted that meanings expressed by the terms are consistent when differences are not emphasized.

In this application, for ease of description, when numbering is involved, numbering may be performed consecutively starting from 1, may be performed consecutively starting from 0, or may be performed starting from any parameter. It should be understood that the foregoing descriptions are all settings for ease of describing the technical solutions provided in embodiments of this application, but are not intended to limit the scope of embodiments of this application.

2. In embodiments of this application, "indication" may include a direct indication and an indirect indication, or may include an explicit indication and an implicit indication. Information indicated by information is referred to as to-be-indicated information. In a specific implementation process, the to-be-indicated information may be indicated in a plurality of manners, for example, but not limited to, a manner of directly indicating the to-be-indicated information. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that are pre-agreed on (for example, stipulated in a protocol), to reduce indication overheads to some extent. In addition, a common part of all the pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmitting end device by sending configuration information to a receiving end device.

3. "Predefinition" or "pre-configuration" may be implemented by pre-storing corresponding code or a corresponding table in a device, or may be implemented in another manner that may indicate related information. A specific implementation thereof is not limited in embodiments of this application. "Storing" may mean storing in one or more memories. The one or more memories may be separately disposed, or may be integrated into an encoder, a decoder, a processor, or a communication apparatus. Alternatively, a part of the one or more memories may be separately disposed, and a part may be integrated into a decoder, a processor, or a communication apparatus. A type of the memory may be a storage medium in any form. This is not limited in embodiments of this application.

4. In embodiments of this application, descriptions such as "when ...", "in a case that ...", and "if" all mean that a device performs corresponding processing in an objective case, are not intended to limit time, do not require the device to perform a determining action during implementation, and do not mean any other limitation.

5. In the descriptions of this application, "/" represents an "or" relationship between associated objects unless otherwise specified. For example, A/B may represent A or B. The term "and/or" in embodiments of this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of embodiments of this application, unless otherwise specified, "a plurality of" means two or more. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, words such as "first" and "second" are used in embodiments of this application to distinguish between same items or similar items that provide basically same functions or purposes. A person skilled in the art may understand that the words such as "first" and "second" do not limit a quantity and an execution order, and the words such as "first" and "second" are not limited to be necessarily different.

Network architectures and service scenarios described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to similar technical problems as a network architecture evolves and a new service scenario emerges.

Technical solutions provided in embodiments of this application may be applied to a wireless local area network (wireless local area network, WLAN) system, for example, Wi-Fi. The method provided in embodiments of this application is applicable to the Institute of Electrical and Electronics Engineers IEEE 802.11 series protocols, for example, the 802.11a/b/g, 802.11n, 802.11ac, 802.11ax, 802.11be, 802.11bn protocols, or a next-generation protocol of the 802.11bn, or a protocol that supports ambient power (ambient power, AMP). Examples are not enumerated herein. The 802.11n standard may be referred to as a high throughput (high throughput, HT), the 802.11ac standard may be referred to as a very high throughput (very high throughput, VHT), the 802.11ax (Wi-Fi 6) may be referred to as high efficient (high efficient, HE), the 802.11be may be referred to as a very high throughput (extremely high throughput, EHT) or Wi-Fi 7, and the 802.11bn may be referred to as ultra high reliability (ultra high reliability, UHR), ultra high reliability and throughput (ultra high reliability and throughput, UHRT), or Wi-Fi 8. Standards earlier than HT, such as 802.11a/b/g, can be referred to as a non-high throughput (non-high throughput, Non-HT).

The technical solutions provided in embodiments of this application may be further applied to a wireless personal area network (wireless personal area network, WPAN) that is based on millimeter wave (millimeter wave, MMW) and ultra-wideband (ultra-wideband, UWB) technologies. The method provided in embodiments of this application is applicable to the IEEE 802.15 series protocols, for example, 802.15.4a, 802.15.4z, or 802.15.4ab, or a future generation UWB WPAN protocol, or an integrated millimeter wave (Integrated mmWave, IMMW) protocol, or IEEE 802.11bf/sensing/sensing. Examples are not enumerated herein.

The technical solutions provided in embodiments of this application may be further applied to the following communication systems, for example, an internet of things (internet of things, IoT) system, vehicle-to-everything (vehicle-to-everything, V2X, where X may represent anything), device-to-device (device-to-device, D2D), a narrowband internet of things (narrowband internet of things, NB-IoT) system, a long term evolution (long term evolution, LTE) system, a 5th generation (5th generation, 5G) communication system, a new communication system emerging in future communication development, and the like. For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

In this application, the WLAN system may provide high-rate and low-latency transmission. With continuous evolution of WLAN application scenarios, the WLAN system is to be applied to more scenarios or industries, for example, an internet of things industry, an internet of vehicles industry, a banking industry, enterprise offices, stadiums and exhibition halls, concert halls, hotel rooms, dormitories, wards, classrooms, supermarkets, squares, streets, production workshops, and warehousing. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, and a washing machine) in a smart home, an internet of things node, an entertainment terminal (for example, a wearable device like an augmented reality (augmented reality, AR) or virtual reality (virtual reality, VR) device), a smart device (for example, a printer, a projector, a loudspeaker, or a speaker) in smart office, an internet of vehicles device in the internet of vehicles, an infrastructure in a daily life scenario (for example, a vending machine, a self-service navigation console of a supermarket, a self-service cashier device, and a self-service ordering machine), a device in a large sports and music venue, and the like.

Although embodiments of this application mainly use a WLAN as an example, especially a network applied to the IEEE 802.11 series standards, various aspects in embodiments of this application may be extended to other networks that use various standards or protocols, for example, Bluetooth (Bluetooth), a high performance radio LAN (high performance radio LAN, HIPERLAN) (a wireless standard similar to the IEEE 802.11 standards), a wide area network (wide area network, WAN), or other networks known or developed in the future.

In a possible implementation, the method provided in embodiments of this application may be implemented by a communication apparatus in a communication system. For example, the communication apparatus may be an access point (access point, AP) or a station (station, STA).

The AP is an apparatus having a wireless communication function, supports communication, sensing, or power transfer by using a WLAN protocol, has a function of communicating with, sensing, or transferring power to another device (for example, a non-access point station (non-access point station, non-AP STA) or another access point) in a WLAN network, and certainly may further have a function of communicating with, sensing, or transferring power to another device. Alternatively, the access point is equivalent to a bridge that connects a wired network and a wireless network, and a main function is to connect various wireless network clients together and then connect the wireless network to the Ethernet. In the WLAN system, the access point may be referred to as an access point station (access point station, AP STA). The apparatus having the wireless communication function may be an entire device, or may be a chip, a processing system, a functional module, or the like mounted in an entire device. The device in which the chip, the processing system, or the functional module is mounted may implement a method, a function, and the like in embodiments of this application under control of the chip, the processing system, or the functional module. The AP in embodiments of this application is an apparatus that provides a service for the non-AP STA, and may support the 802.11 series protocols, subsequent protocols, or the like. For example, the access point may be an access point for a terminal (for example, a mobile phone) to access a wired (or wireless) network, and is mainly deployed in a home, a building, and a park. A typical coverage radius is tens to hundreds of meters. Certainly, the access point may alternatively be deployed outdoors. For another example, the AP may be a communication entity, for example, a communication server, a router, a switch, or a bridge, or the AP may include various forms of macro base stations, micro base stations, relay stations, and the like. Certainly, the AP may alternatively be a chip, a processing system, or a module in the foregoing devices in various forms, to implement a method and a function in embodiments of this application.

The STA is an apparatus having a wireless communication function, supports communication, sensing, or power transfer by using a WLAN protocol, and has a capability of communicating with, sensing, or transferring power to another non-AP STA or access point in a WLAN network. In the WLAN system, the station may be referred to as a non-AP STA. For example, the STA is any user communication device that allows a user to communicate with, sense, or transfer power to an AP for further communication with a WLAN. The apparatus having the wireless communication function may be an entire device, or may be a chip, a processing system, a functional module, or the like mounted in an entire device. The device in which the chip, the processing system, or the functional module is mounted may implement a method and a function in embodiments of this application under control of the chip, the processing system, or the functional module. For example, the STA may be a wireless communication chip, a wireless sensor, or a wireless communication terminal, and may also be referred to as a user. For another example, the STA may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function. Certainly, the STA may alternatively be a chip, a processing system, or a module in the foregoing devices in various forms, to implement a method and a function in embodiments of this application.

For example, a communication system to which the method provided in embodiments of this application may be applied may include an access point and a station. For example, embodiments of this application may be applied to a scenario of communication or sensing between an AP and a STA, between APs, or between STAs in a WLAN. This is not limited in embodiments of this application. Optionally, the AP may communicate with or sense a single STA, or the AP may simultaneously communicate with or sense a plurality of STAs. Specifically, communication or sensing between the AP and the plurality of STAs may be classified into downlink transmission in which the AP simultaneously sends signals to the plurality of STAs and uplink transmission in which the plurality of STAs send signals to the AP. A WLAN communication protocol may be supported between an AP and a STA, between APs, and between STAs. The communication protocol may include the IEEE 802.11 series protocols, for example, is applicable to the 802.11 bn protocol, and certainly is also applicable to a protocol after the 802.11 bn.

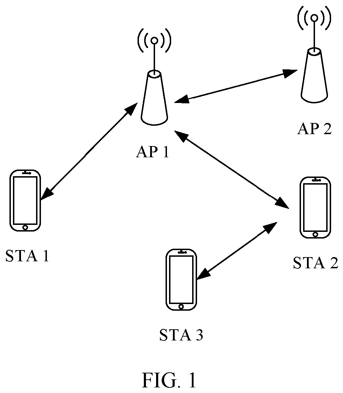

FIG. 1 is a diagram of an architecture of a communication system according to an embodiment of this application. The communication system may include one or more APs and one or more STAs. FIG. 1 shows two access points, for example, an AP 1 and an AP 2, and three stations, for example, a STA 1, a STA 2, and a STA 3. In an example, the method provided in embodiments of this application is applicable to data communication, sensing, power transfer, or the like between one AP and one or more STAs, for example, communication, sensing, or the like between the AP 1 and the STA 1 shown in FIG. 1, or communication, sensing, or the like between the AP 1 and the STA 1 or the STA 2 shown in FIG. 1. In another example, the method provided in embodiments of this application is applicable to communication between APs, for example, communication or sensing between the AP 1 and the AP 2 shown in FIG. 1. In another example, the method provided in embodiments of this application is applicable to communication, sensing, or the like between STAs, for example, communication, sensing, or the like between the STA 2 and the STA 3 shown in FIG. 1.

In FIG. 1, an example in which the STA is a mobile phone and the AP is a router is used. This does not mean that types of the AP and the STA in embodiments of this application are limited. In addition, a quantity of APs and a quantity of STAs shown in FIG. 1 are merely examples. During specific implementation, the quantity of APs or STAs may be larger or smaller. This is not limited in embodiments of this application.

From different perspectives of sending a signal and receiving a signal, in the following descriptions, a first communication apparatus may be understood as a communication apparatus that sends a signal, and a second communication apparatus may be understood as a communication apparatus that receives a signal. Alternatively, the first communication apparatus may be referred to as a transmit end, and the second communication apparatus may be referred to as a receive end.

From a perspective of different devices, in an example, the first communication apparatus and the second communication apparatus may be Wi-Fi chips, functional modules, processing systems, or the like disposed in different Wi-Fi devices. In another example, the first communication apparatus may be an AP, and the second communication apparatus may be a non-AP STA. In another example, the first communication apparatus and the second communication apparatus each may be a non-AP STA or an AP. In another example, the first communication apparatus may be a non-AP STA, and the second communication apparatus may be an AP. In another example, at least one of the first communication apparatus and the second communication apparatus may be a multi-link device (multi-link device, MLD), or the like. Examples are not enumerated in embodiments of this application. For example, the MLD is a device that simultaneously includes a plurality of stations (such as APs or non-AP STAs) respectively operating on different frequency bands or channels. The multi-link device includes a plurality of affiliated stations. The affiliated stations may be physical stations, or may be logical stations. Each station may operate on one link, one frequency band, one channel, or the like. The affiliated station may be an AP or a non-AP STA. The multi-link device (for example, a non-AP MLD or an AP MLD) may be a communication apparatus having a wireless communication function. The communication apparatus may be an entire device, or may be a chip, a processing system, a module, or the like mounted in an entire device. The device in which the chip, the processing system, or the module is mounted may implement a method and a function in embodiments of this application under control of the chip, the processing system, or the module. The multi-link device may implement wireless communication in compliance with the 802.11 series protocols, to communicate with another device. The another device herein may be a multi-link device, or may not be a multi-link device. Frequency bands on which the multi-link device operates may include but are not limited to sub 1 GHz, 2.4 GHz, 5 GHz, 6 GHz, and the like. Examples are not enumerated herein.

In embodiments of this application, the method provided in embodiments of this application is described from two sides: the first communication apparatus and the second communication apparatus. However, in a signal transmission process between the first communication apparatus and the second communication apparatus, a signal may be further forwarded through another apparatus. For example, a signal between the first communication apparatus and the second communication apparatus is forwarded through a forwarding apparatus. An apparatus other than the first communication apparatus and the second communication apparatus is not limited in embodiments of this application.

For ease of understanding embodiments of this application, the following first briefly describes terms in embodiments of this application. It should be understood that these descriptions are merely for ease of understanding embodiments of this application, and should not constitute any limitation on this application.

### 1. Maximum power and maximum power spectrum density

In recent years, a communication committee issued a regulation on the 6 gigahertz (GHz) spectrum, which defines a low power indoor (low power indoor, LPI) communication mode and limits a maximum sending power and a maximum frequency spectrum density. The maximum power spectrum density refers to a maximum sending power of 1 MHz, or the maximum power spectrum density is limited in a form in which a sending power of 1 MHz does not exceed x dBm (dBm=10lg(mW), where lg represents a base-10 logarithm). A minimum granularity of the maximum power spectrum density may be 1 MHz.

For an access point (access point, AP), a maximum sending power is 30 decibel-milliwatts (decibel-milliwatts, dBm) and a maximum power spectrum density is 5 decibel-milliwatts/megahertz (decibel-milliwatts/megahertz, dBm/MHz).

For a station (station, STA), a maximum sending power is 24 dBm and a maximum power spectrum density is -1 dBm/MHz.

In other words, a sending power of a device is limited by both a maximum sending power and a maximum power spectrum density. In other words, the sending power of the device cannot exceed the maximum sending power, and also cannot exceed the maximum power spectrum density (that is, a sending power of each MHz cannot exceed a given value).

Refer to Table 1. Table 1 shows maximum powers of the AP or the STA in different transmit bandwidths in an LPI scenario. For the AP, the maximum power spectrum density may be 5 dBm/MHz. For the STA, the maximum power spectrum density may be -1 dBm/MHz.

**Table 1**

| Transmit bandwidth | Maximum power of the AP | Maximum power of the STA |
|---|---|---|
| 20 MHz | 18 dBm | 12 dBm |
| 40 MHz | 21 dBm | 15 dBm |
| 80 MHz | 24 dBm | 18 dBm |
| 160 MHz | 27 dBm | 21 dBm |
| 320 MHz | 30 dBm | 24 dBm |

In Table 1, 20 MHz is used as an example. For the AP, 18 dBm-5 dBm=13 dBm, and 13 dBm=10^{1.3}≈20. It can be learned that, for the AP, a maximum power in a transmit bandwidth may be approximately equal to a value when each MHz reaches the maximum power.

It should be understood that the maximum power spectrum densities shown in Table 1 and herein are merely examples. As a standard progresses, the maximum power or the maximum power spectrum density may be updated accordingly. This is not limited in embodiments of this application.

Based on this, when a power spectrum density is limited, the sending power of the device may be increased by broadening the transmit bandwidth. From a perspective of subcarriers, subcarriers allocated to a device may become distributed in frequency domain to increase the sending power. In this case, although the subcarriers allocated to the device are not increased, a total power may be increased due to the increase of the transmit bandwidth. The total power is increased because a quantity of subcarriers per MHz is decreased. Therefore, a higher sending power can be obtained from the perspective of subcarriers. For example, when 1 MHz corresponds to 13 consecutive subcarriers, based on a limitation of the power spectrum density, for example, a sending power of each subcarrier may be w/13. When the 13 subcarriers become distributed, for example, 1 MHz corresponds to five subcarriers, the sending power of each subcarrier may be w/5. Herein, w may represent the sending power of each MHz, and a unit may be mW.

Therefore, when the sending power of 1 MHz does not change, that is, when the power spectrum density is limited, the sending power of the subcarrier may be increased through discretization of subcarriers of a RU. In other words, for consecutive resource units (resource units, RUs) with a same quantity of subcarriers, it is easier for a communication device to increase a signal sending power by sending a signal on a distributed RU.

### 2. RU-based tone plan (tone plan)

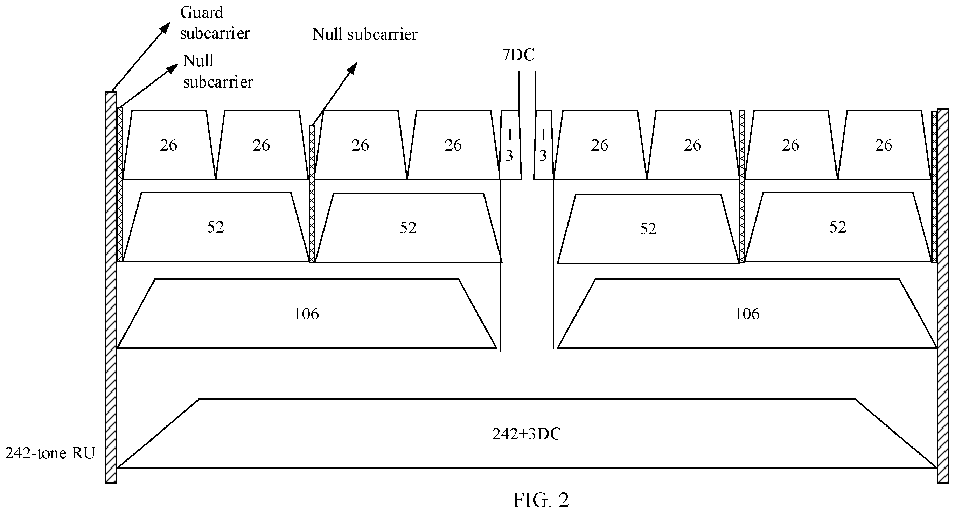

In an example, when a bandwidth is 20 MHz, the entire bandwidth (that is, 20 MHz) may include one entire 242-tone RU, or may include various combinations of a 26-tone RU, a 52-tone RU, and a 106-tone RU. FIG. 2 is a diagram of a tone plan and RU distribution of 20 MHz according to an embodiment of this application. As shown in FIG. 2, 20 MHz may include nine 26-tone RUs, four 52-tone RUs, two 106-tone RUs, or one 242-tone RU.

In this application, the 26-tone RU is an RU including 26 subcarriers, the 52-tone RU is an RU including 52 subcarriers, the 106-tone RU is an RU including 106 subcarriers, the 242-tone RU is an RU including 242 subcarriers, and the rest may be deduced by analogy. Each RU may include a data subcarrier and a pilot subcarrier. For example, the data subcarrier may be used to carry data information, and the pilot subcarrier may be used to estimate a phase offset and/or a frequency offset. In addition to the RU, the 20 MHz bandwidth may further include at least one of the following: one or more guard (guard) subcarriers, one or more null (null) subcarriers, or one or more direct current (direct current, DC) subcarriers. For a subcarrier range (subcarrier range) included in each RU, refer to a related standard or protocol. Details are not described herein again. The descriptions of the RU or the subcarrier herein are also applicable to another bandwidth shown below, and details are not described again below. The descriptions of the subcarrier herein are also applicable to the following descriptions of the distributed RU, and details are not described again below.

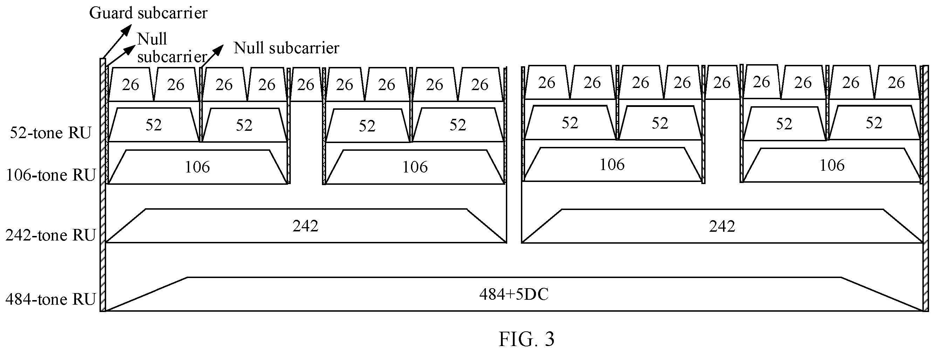

In another example, when a bandwidth is 40 MHz, the entire bandwidth (that is, 40 MHz) may include one entire 484-tone RU, or may include various combinations of a 26-tone RU, a 52-tone RU, a 106-tone RU, and a 242-tone RU. The entire bandwidth is roughly equivalent to two replication of the tone plan of 20 MHz. As shown in FIG. 3, 40 MHz may include eighteen 26-tone RUs, eight 52-tone RUs, four 106-tone RUs, two 242-tone RUs, or one 484-tone RU.

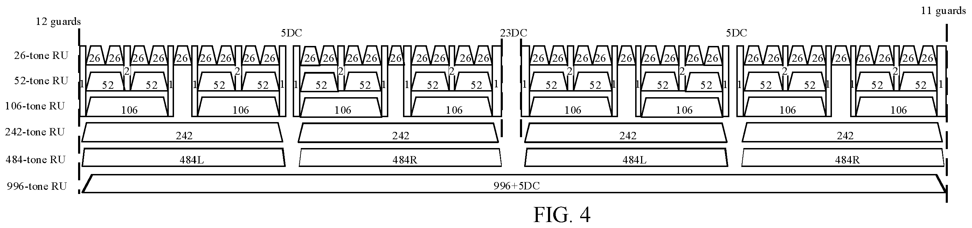

In another example, when a bandwidth is 80 MHz, the entire bandwidth (that is, 80 MHz) may include one entire 996-tone RU, or may include various combinations of a 26-tone RU, a 52-tone RU, a 106-tone RU, a 242-tone RU, and a 484-tone RU. As shown in FIG. 4, 80 MHz may include thirty-six 26-tone RUs, sixteen 52-tone RUs, eight 106-tone RUs, four 242-tone RUs, two 484-tone RUs, or one 996-tone RU. In FIG. 4, 484L represents a left half part of the 484-tone RU, and 484R represents a right half part of the 484-tone RU. 484L and 484R each include 242 subcarriers, and are another representation of 484+5DC. For example, a subcarrier range of the 484-tone RU is [-500: -12], where "484L" is a low frequency part relative to a frequency center of the 484-tone RU, that is, [-500: -259], and "484R" is a high frequency part relative to the frequency domain center of the 484-tone RU, that is, [-253: -12]. Similarly, for example, a subcarrier range of the 484-tone RU is [12: 500], where "484L" is [12: 253], and "484R" is [259: 500]. Examples are not enumerated herein.

In another example, when a bandwidth is 160 MHz, the entire bandwidth may be considered as two replications of a tone plan of 80 MHz. For example, the entire bandwidth may include an entire 2*996-tone RU, or may include various combinations of a 26-tone RU, a 52-tone RU, a 106-tone RU, a 242-tone RU, 484-tone RU, and a 996-tone RU. When a bandwidth is 320 MHz, the entire bandwidth may be considered as four replications of the tone plan of 80 MHz. Examples are not enumerated herein.

In the foregoing tone plans, the 242-tone RU (that is, 20 MHz) is used as a unit. A leftmost frequency in FIG. 2 to FIG. 4 may be a lowest frequency, and a rightmost frequency in FIG. 2 to FIG. 4 may be a highest frequency. From left to right, the 242-tone RU may be numbered as follows: 1^{st} (1^{st}), 2^{nd} (2^{nd}), ..., and 16^{th} (16^{th}). For example, a bandwidth is 320 MHz, a data (data) field in a radio frame may occupy a maximum of sixteen 242-tone RUs. In other words, in the data field, a maximum of sixteen 242-tone RUs may be in a one-to-one correspondence with sixteen 20 MHz channels in ascending order of frequencies.

Generally, one STA can be allocated with a plurality of RUs, that is, a plurality of RUs can be combined and allocated to one STA. Therefore, the 802.11be standard supports a multiple resource unit (multiple RU, MRU). In other words, in the 802.11be standard, in addition to the RUs mentioned above, some MRUs are further included. For example, one 52-tone RU and one 26-tone RU form a 52+26-tone MRU. For another example, one 106-tone RU and one 26-tone RU form a 106+26-tone MRU. For another example, one 996-tone RU and one 484-tone RU form a 996+484-tone MRU. For another example, two 996-tone RUs and one 484-tone RU form a 2*996+484-tone MRU. For another example, three 996-tone RUs form a 3*996-tone MRU. For another example, three 996-tone RUs and one 484-tone RU form a 3*996+484-tone MRU. The symbol "*" in this application represents "multiply" or "multiplied by".

In terms of bandwidths, when a subcarrier spacing is 78.125 kHz, the 26-tone RU approximately corresponds to 2 MHz (26*78.125 kHz=2031.25 kHz≈2 MHz), the 52-tone RU approximately corresponds to 4 MHz, the 106-tone RU approximately corresponds to 8 MHz, and the 242-tone RU approximately corresponds to 20 MHz. A size of another RU may be deduced by performing addition or multiplication accordingly. Details are not described herein again.

The foregoing RU may be referred to as a regular RU (regular RU, which may be denoted as an rRU). Compared with a distributed RU (distributed RU, which may be denoted as a dRU), the regular RU has a smaller bandwidth and a lower sending power. The "lower" shown herein is relative to the distributed RU. For example, relative to the regular RU, the distributed RU may have a higher sending power.

### 3. Distributed RU

The distributed RU includes a plurality of subcarriers that are distributed in frequency domain, or includes a plurality of subcarriers whose index values are distributed, or includes a plurality of subcarriers whose index values are non-consecutive. The plurality of distributed subcarriers may be partially distributed or fully distributed. For example, the plurality of distributed subcarriers may include some subcarriers that are consecutive in frequency, and include some subcarriers that are non-consecutive in frequency. For another example, the plurality of distributed subcarriers may alternatively be fully non-consecutive in frequency. The foregoing "consecutive in frequency" may alternatively mean that index values of the subcarriers are consecutive, and the foregoing "non-consecutive in frequency" may alternatively mean that index values of the subcarriers are non-consecutive. The distributed RU may also be denoted as a dRU.

In addition, the distributed RU may have another name, for example, a distributed RU. The distributed RU is used as an example for description in this application, and should not be construed as a limitation on this application.

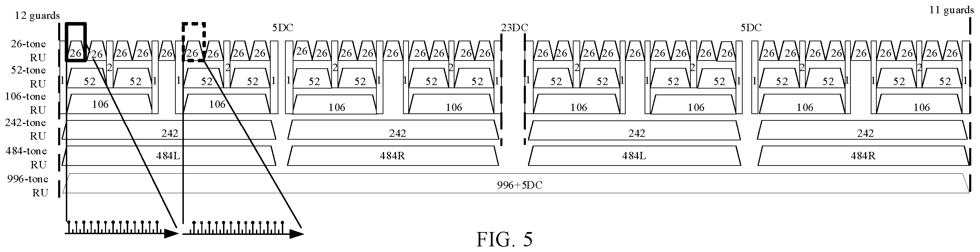

For example, a 26-tone RU has distributed subcarriers. In the RU, there are 24 data subcarriers and 2 pilot subcarriers, and there are a total of 26 subcarriers. The 26 subcarriers may be designed to be pairwise non-adjacent. As shown in FIG. 5, an odd-numbered subcarrier in the 52 subcarriers belongs to a 1^{st} RU, namely, an RU shown in a thick solid line block. An even-numbered subcarrier in the 52 subcarriers belongs to a 2^{nd} RU, namely, an RU shown in a thick dashed line block. It should be understood that the 26-tone RU with distributed subcarriers may have another design. This is not limited.

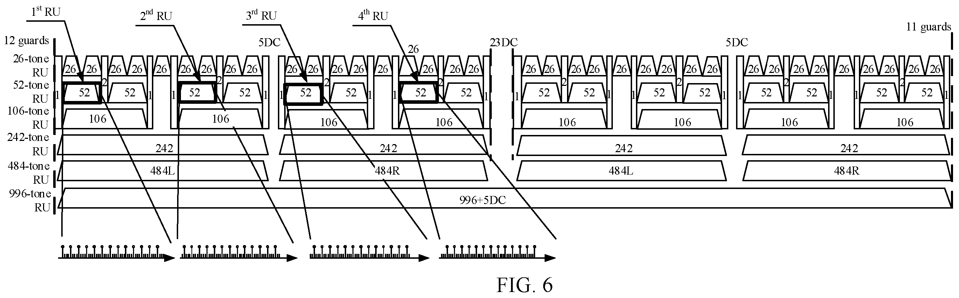

For another example, a 52-tone RU has distributed subcarriers. In the RU, there are 48 data subcarriers and 4 pilot subcarriers, and there are a total of 52 subcarriers. The 52 subcarriers may be designed to be pairwise non-adjacent. As shown in FIG. 6, four RUs are shown in thick solid line blocks. A subcarrier for which a number has a remainder of 1 after being divided by 4 in the 208 subcarriers belongs to a 1^{st} RU, a subcarrier for which a number has a remainder of 2 after being divided by 4 in the 208 subcarriers belongs to a 2^{nd} RU, a subcarrier for which a number has a remainder of 3 after being divided by 4 in the 208 subcarriers belongs to a 3^{rd} RU, and a subcarrier for which a number is exactly divided by 4 in the 208 subcarriers belongs to a 4^{th} RU. It should be understood that the 52-tone RU with distributed subcarriers may have another design. This is not limited.

For a distributed RU and a regular RU that include a same quantity of subcarriers, a bandwidth spanned by the distributed RU from a low-frequency start position to a high-frequency end position in frequency domain is greater than a bandwidth occupied by the regular RU. In this way, when maximum power spectrum densities are the same, a total sending power of the distributed RU is greater than a total sending power of the regular RU. In other words, when the power spectrum density is limited, subcarriers (for example, 26 subcarriers included in a consecutive 26-tone RU) with a limited quantity are distributedly allocated to a wider bandwidth, that is, to more subcarriers (for example, odd-numbered subcarriers in two consecutive 26-tone RUs), to increase the sending power. Therefore, in comparison with the regular RU, when data transmission is performed by using a distributed RU, a sending power on a single subcarrier can be increased, and a signal-to-noise ratio (signal-to-noise ratio, SNR) can be improved.

### 4. Even distributed RU design

The even allocation method can make subcarriers of different distributed RUs more evenly distributed. For clarity of description, the following uses Table 2 and Table 3 as examples for description.

For example, Table 2 shows an example of 20 MHz.

**Table 2**

| Colu mn 1 | Colu mn 2 | Colu mn 3 | Colu mn 4 | Colu mn 5 | Colu mn 6 | Colu mn 7 | Colu mn 8 | Colu mn 9 | Colu mn 10 | Col umn 11 | Colu mn 12 | Colu mn 13 | Colu mn 14 | Colu mn 15 | Colu mn 16 |
|---|---|---|---|---|---|---|---|---|---|---|---|---|---|---|---|
| -128 | | -96 | **4** | -64 | **3** | -32 | 9 | 0 | DC | 32 | **5** | 64 | **2** | 96 | **1** |
| -127 | | -95 | **9** | -63 | **8** | -31 | 5 | 1 | DC | 33 | 1 | 65 | **7** | 97 | **6** |
| -126 | | -94 | **5** | -62 | **2** | -30 | **1** | 2 | 106-2 | 34 | 6 | 66 | **4** | 98 | **3** |
| -125 | | -93 | 1 | -61 | **7** | -29 | **6** | 3 | 106-1 | 35 | 3 | 67 | **9** | 99 | **8** |
| -124 | | -92 | 6 | -60 | **4** | -28 | **3** | 4 | 9 | 36 | 8 | 68 | **5** | 100 | **2** |
| -123 | | -91 | 3 | -59 | **9** | -27 | **8** | 5 | 5 | 37 | 2 | 69 | 1 | 101 | **7** |
| -122 | | -90 | 8 | -58 | **5** | -26 | **2** | 6 | **1** | 38 | 7 | 70 | 6 | 102 | **4** |
| -121 | | -89 | 2 | -57 | 1 | -25 | **7** | 7 | **6** | 39 | 4 | 71 | 3 | 103 | **9** |
| -120 | **1** | -88 | 7 | -56 | 6 | -24 | **4** | 8 | **3** | 40 | 9 | 72 | 8 | 104 | **5** |
| -119 | **6** | -87 | 4 | -55 | 3 | -23 | **9** | 9 | **8** | 41 | 5 | 73 | 2 | 105 | 1 |
| -118 | **3** | -86 | 9 | -54 | 8 | -22 | **5** | 10 | **2** | 42 | **1** | 74 | 7 | 106 | 6 |
| -117 | **8** | -85 | 5 | -53 | 2 | -21 | 1 | 11 | **7** | 43 | **6** | 75 | 4 | 107 | 3 |
| -116 | **2** | -84 | **1** | -52 | 7 | -20 | 6 | 12 | **4** | 44 | **3** | 76 | 9 | 108 | 8 |
| -115 | **7** | -83 | **6** | -51 | 4 | -19 | 3 | 13 | **9** | 45 | **8** | 77 | 5 | 109 | 2 |
| -114 | **4** | -82 | **3** | -50 | 9 | -18 | 8 | 14 | **5** | 46 | **2** | 78 | **1** | 110 | 7 |
| -113 | **9** | -81 | **8** | -49 | 5 | -17 | 2 | 15 | 1 | 47 | **7** | 79 | **6** | 111 | 4 |
| -112 | **5** | -80 | **2** | -48 | **1** | -16 | 7 | 16 | 6 | 48 | **4** | 80 | **3** | 112 | 9 |
| -111 | 1 | -79 | **7** | -47 | **6** | -15 | 4 | 17 | 3 | 49 | **9** | 81 | **8** | 113 | 5 |
| -110 | 6 | -78 | **4** | -46 | **3** | -14 | 9 | 18 | 8 | 50 | **5** | 82 | **2** | 114 | **1** |
| -109 | 3 | -77 | **9** | -45 | **8** | -13 | 5 | 19 | 2 | 51 | 1 | 83 | **7** | 115 | **6** |
| -108 | 8 | -76 | **5** | -44 | **2** | -12 | **1** | 20 | 7 | 52 | 6 | 84 | **4** | 116 | **3** |
| -107 | 2 | -75 | 1 | -43 | **7** | -11 | **6** | 21 | 4 | 53 | 3 | 85 | **9** | 117 | **8** |
| -106 | 7 | -74 | 6 | -42 | **4** | -10 | **3** | 22 | 9 | 54 | 8 | 86 | **5** | 118 | **2** |
| -105 | 4 | -73 | 3 | -41 | **9** | -9 | **8** | 23 | 5 | 55 | 2 | 87 | 1 | 119 | **7** |
| -104 | 9 | -72 | 8 | -40 | **5** | -8 | **2** | 24 | **1** | 56 | 7 | 88 | 6 | 120 | **4** |
| -103 | 5 | -71 | 2 | -39 | 1 | -7 | **7** | 25 | **6** | 57 | 4 | 89 | 3 | 121 | |
| -102 | **1** | -70 | 7 | -38 | 6 | -6 | **4** | 26 | **3** | 58 | 9 | 90 | 8 | 122 | |
| -101 | **6** | -69 | 4 | -37 | 3 | -5 | **9** | 27 | **8** | 59 | 5 | 91 | 2 | 123 | |
| -100 | **3** | -68 | 9 | -36 | 8 | -4 | **5** | 28 | **2** | 60 | **1** | 92 | 7 | 124 | |
| -99 | **8** | -67 | 5 | -35 | 2 | -3 | 106-1 | 29 | **7** | 61 | **6** | 93 | 4 | 125 | |
| -98 | **2** | -66 | **1** | -34 | 7 | -2 | 106-2 | 30 | **4** | 62 | **3** | 94 | 9 | 126 | |
| -97 | **7** | -65 | **6** | -33 | 4 | -1 | DC | 31 | **9** | 63 | **8** | 95 | 5 | 127 | |

As shown in Table 2, odd-numbered columns (such as columns 1/3/5/7/9/11/13/15) show subcarrier numbers, and even-numbered columns (such as columns 2/4/6/8/10/12/14/16) show RU numbers, direct current subcarriers, other subcarriers, or the like. The 20 MHz bandwidth corresponds to 256 subcarriers, and these subcarriers are numbered from -128 to +127.

If the right of a grid corresponds to a value (for example, 1 to 9), the value corresponding to the right of the grid indicates a number of a 26-tone RU belonging to 20 MHz, that is, indicates that the subcarrier belongs to an x^{th} 26-tone RU. The x^{th} 26-tone RU may be denoted as a 26-tone RU x. Further, if the RU is a distributed RU (namely, a dRU), it may be understood that an x^{th} 26-tone dRU may be denoted as a 26-tone dRU x. It should be understood that this application is a technical solution for the distributed RU. In the following Implementation 1 and Implementation 2, a mentioned RU, distributed RU, and dRU have a same meaning, and may be replaced with each other.

For example, a grid being -120 indicates a subcarrier numbered -120, and a value corresponding to the right of the grid being 1 indicates that the subcarrier numbered -120 belongs to a 26-tone RU 1. Other grids may be deduced by analogy, and details are not described again.

If the right of a grid is empty (as shown as a rectangular box), a subcarrier corresponding to the grid is a guard subcarrier or a null subcarrier.

If the right of a grid corresponds to "106-1", subcarriers corresponding to the grid are two additional subcarriers in a 106-tone RU 1.

If the right of a grid corresponds to "106-2", subcarriers corresponding to the grid are two additional subcarriers in a 106-tone RU 2.

If the right of a grid corresponds to "DC", a subcarrier corresponding to the grid is a direct current subcarrier.

It can be learned from Table 2 that, for the 26-tone RU 1, numbers of subcarriers of the RU include -120, -111, -102, -93, -84, -75, -66, -57, -48, -39, -30, -21, -12, 6, 15, 24, 33, 42, 51, 60, 69, 78, 87, 96, 105, and 114, that is, subcarriers of the RU are more evenly distributed in 256 subcarriers. Other RUs may be deduced by analogy, and details are not described again.

It can be learned from Table 2 that, for the nine 26-tone RUs, namely, the 26-tone RU 1 to the 26-tone RU 9, the nine 26-tone RUs appear round by round in a specific sequence. For example, a sequence used in Table 2 is 1, 6, 3, 8, 2, 7, 4, 9, and 5. In addition, the sequence may also make subcarriers of the 52-tone RU and the 106-tone RU evenly or approximately evenly separated.

In addition, it should be noted that a cyclic sequence of numbers of the nine 26-tone RUs is: 1, 6, 3, 8, 2, 7, 4, 9, and 5. A manner of determining the cyclic sequence is as follows:

A 5^{th} 26-tone dRU 5 is not discussed first, and to-be-circulated values are arranged in ascending order as follows:
1, 2, 3, 4, 6, 7, 8, 9

A second half part is placed in a row 2:
1, 2, 3, 4
6, 7, 8, 9

Second half parts are placed in a row 3 and a row 4:
1, 2
6, 7
3, 4
8, 9

Second half parts are placed in rows 5, 6, 7, and 8. Reading is performed by column, and the following information may be obtained: 1, 6, 3, 8, 2, 7, 4, and 9.

The sequence (namely, 1, 6, 3, 8, 2, 7, 4, and 9) may make subcarriers of a 52-tone RU and a 106-tone RU formed by the 26-tone RU more evenly distributed. The cyclic sequence 1, 6, 3, 8, 2, 7, 4, 9, and 5 may be further obtained by placing 5 behind.

For another example, Table 3 shows an example of 40 MHz.

**Table 3**

| Colu mn 1 | Colu mn 2 | Colu mn 3 | Colu mn 4 | Colu mn 5 | Colu mn 6 | Colu mn 7 | Colu mn 8 | Colu mn 9 | Colu mn 10 | Col umn 11 | Colu mn 12 | Colu mn 13 | Colu mn 14 | Colu mn 15 | Colu mn 16 |
|---|---|---|---|---|---|---|---|---|---|---|---|---|---|---|---|
| -256 | | -192 | **13** | -128 | **8** | -64 | 18 | 0 | DC | 64 | 1 | 128 | 11 | 192 | 6 |
| -255 | | -191 | **9** | -127 | **17** | -63 | 5 | 1 | DC | 65 | 10 | 129 | 7 | 193 | 15 |
| -254 | | -190 | **18** | -126 | **14** | -62 | **1** | 2 | DC | 66 | 6 | 130 | 16 | 194 | 3 |
| -253 | | -189 | **5** | -125 | **2** | -61 | **10** | 3 | 242-1 | 67 | 15 | 131 | 4 | 195 | 12 |
| -252 | | -188 | 1 | -124 | **11** | -60 | **6** | 4 | 242-2 | 68 | 3 | 132 | 13 | 196 | 8 |
| -251 | | -187 | 10 | -123 | **7** | -59 | **15** | 5 | 106-1 | 69 | 12 | 133 | 9 | 197 | 17 |
| -250 | | -186 | 6 | -122 | **16** | -58 | **3** | 6 | 106-3 | 70 | 8 | 134 | 18 | 198 | 14 |
| -249 | | -185 | 15 | -121 | **4** | -57 | **12** | 7 | 106-2 | 71 | 17 | 135 | 5 | 199 | 2 |
| -248 | | -184 | 3 | -120 | **13** | -56 | **8** | 8 | 106-4 | 72 | 14 | 136 | **1** | 200 | 11 |
| -247 | | -183 | 12 | -119 | **9** | -55 | **17** | 9 | 242-1 | 73 | 2 | 137 | **10** | 201 | 7 |
| -246 | | -182 | 8 | -118 | **18** | -54 | **14** | 10 | **1** | 74 | 11 | 138 | **6** | 202 | 16 |
| -245 | | -181 | 17 | -117 | **5** | -53 | **2** | 11 | **10** | 75 | 7 | 139 | **15** | 203 | 4 |
| -244 | 242-1 | -180 | 14 | -116 | 1 | -52 | **11** | 12 | **6** | 76 | 16 | 140 | **3** | 204 | 13 |
| -243 | 242-2 | -179 | 2 | -115 | 10 | -51 | **7** | 13 | **15** | 77 | 4 | 141 | **12** | 205 | 9 |
| -242 | **1** | -178 | 11 | -114 | 6 | -50 | **16** | 14 | **3** | 78 | 13 | 142 | **8** | 206 | 18 |
| -241 | **10** | -177 | 7 | -113 | 15 | -49 | **4** | 15 | **12** | 79 | 9 | 143 | **17** | 207 | 5 |
| -240 | **6** | -176 | 16 | -112 | 3 | -48 | **13** | 16 | **8** | 80 | 18 | 144 | **14** | 208 | **1** |
| -239 | **15** | -175 | 4 | -111 | 12 | -47 | **9** | 17 | **17** | 81 | 5 | 145 | **2** | 209 | **10** |
| -238 | **3** | -174 | 13 | -110 | 8 | -46 | **18** | 18 | **14** | 82 | **1** | 146 | **11** | 210 | **6** |
| -237 | **12** | -173 | 9 | -109 | 17 | -45 | **5** | 19 | **2** | 83 | **10** | 147 | **7** | 211 | **15** |
| -236 | **8** | -172 | 18 | -108 | 14 | -44 | 1 | 20 | **11** | 84 | **6** | 148 | **16** | 212 | **3** |
| -235 | **17** | -171 | 5 | -107 | 2 | -43 | 10 | 21 | **7** | 85 | **15** | 149 | **4** | 213 | **12** |
| -234 | **14** | -170 | **1** | -106 | 11 | -42 | 6 | 22 | **16** | 86 | **3** | 150 | **13** | 214 | **8** |
| -233 | **2** | -169 | **10** | -105 | 7 | -41 | 15 | 23 | **4** | 87 | **12** | 151 | **9** | 215 | **17** |
| -232 | **11** | -168 | **6** | -104 | 16 | -40 | 3 | 24 | **13** | 88 | **8** | 152 | **18** | 216 | **14** |
| -231 | **7** | -167 | **15** | -103 | 4 | -39 | 12 | 25 | **9** | 89 | **17** | 153 | **5** | 217 | **2** |
| -230 | **16** | -166 | **3** | -102 | 13 | -38 | 8 | 26 | **18** | 90 | **14** | 154 | 1 | 218 | **11** |
| -229 | **4** | -165 | **12** | -101 | 9 | -37 | 17 | 27 | **5** | 91 | **2** | 155 | 10 | 219 | **7** |
| -228 | **13** | -164 | **8** | -100 | 18 | -36 | 14 | 28 | 1 | 92 | **11** | 156 | 6 | 220 | **16** |
| -227 | **9** | -163 | **17** | -99 | 5 | -35 | 2 | 29 | 10 | 93 | **7** | 157 | 15 | 221 | **4** |
| -226 | **18** | -162 | **14** | -98 | **1** | -34 | 11 | 30 | 6 | 94 | **16** | 158 | 3 | 222 | **13** |
| -225 | **5** | -161 | **2** | -97 | **10** | -33 | 7 | 31 | 15 | 95 | **4** | 159 | 12 | 223 | **9** |
| -224 | 1 | -160 | **11** | -96 | **6** | -32 | 16 | 32 | 3 | 96 | **13** | 160 | 8 | 224 | **18** |
| -223 | 10 | -159 | **7** | -95 | **15** | -31 | 4 | 33 | 12 | 97 | **9** | 161 | 17 | 225 | **5** |
| -222 | 6 | -158 | **16** | -94 | **3** | -30 | 13 | 34 | 8 | 98 | **18** | 162 | 14 | 226 | 1 |
| -221 | 15 | -157 | **4** | -93 | **12** | -29 | 9 | 35 | 17 | 99 | **5** | 163 | 2 | 227 | 10 |
| -220 | 3 | -156 | **13** | -92 | **8** | -28 | 18 | 36 | 14 | 100 | 1 | 164 | 11 | 228 | 6 |
| -219 | 12 | -155 | **9** | -91 | **17** | -27 | 5 | 37 | 2 | 101 | 10 | 165 | 7 | 229 | 15 |
| -218 | 8 | -154 | **18** | -90 | **14** | -26 | **1** | 38 | 11 | 102 | 6 | 166 | 16 | 230 | 3 |
| -217 | 17 | -153 | **5** | -89 | **2** | -25 | **10** | 39 | 7 | 103 | 15 | 167 | 4 | 231 | 12 |
| -216 | 14 | -152 | 1 | -88 | **11** | -24 | **6** | 40 | 16 | 104 | 3 | 168 | 13 | 232 | 8 |
| -215 | 2 | -151 | 10 | -87 | **7** | -23 | **15** | 41 | 4 | 105 | 12 | 169 | 9 | 233 | 17 |
| -214 | 11 | -150 | 6 | -86 | **16** | -22 | **3** | 42 | 13 | 106 | 8 | 170 | 18 | 234 | 14 |
| -213 | 7 | -149 | 15 | -85 | **4** | -21 | **12** | 43 | 9 | 107 | 17 | 171 | 5 | 235 | 2 |
| -212 | 16 | -148 | 3 | -84 | **13** | -20 | **8** | 44 | 18 | 108 | 14 | 172 | **1** | 236 | 11 |
| -211 | 4 | -147 | 12 | -83 | **9** | -19 | **17** | 45 | 5 | 109 | 2 | 173 | **10** | 237 | 7 |
| -210 | 13 | -146 | 8 | -82 | **18** | -18 | **14** | 46 | **1** | 110 | 11 | 174 | **6** | 238 | 16 |
| -209 | 9 | -145 | 17 | -81 | **5** | -17 | **2** | 47 | **10** | 111 | 7 | 175 | **15** | 239 | 4 |
| -208 | 18 | -144 | 14 | -80 | 1 | -16 | **11** | 48 | **6** | 112 | 16 | 176 | **3** | 240 | 13 |
| -207 | 5 | -143 | 2 | -79 | 10 | -15 | **7** | 49 | **15** | 113 | 4 | 177 | **12** | 241 | 9 |
| -206 | **1** | -142 | 11 | -78 | 6 | -14 | **16** | 50 | **3** | 114 | 13 | 178 | **8** | 242 | 18 |
| -205 | **10** | -141 | 7 | -77 | 15 | -13 | **4** | 51 | **12** | 115 | 9 | 179 | **17** | 243 | 5 |
| -204 | **6** | -140 | 16 | -76 | 3 | -12 | **13** | 52 | **8** | 116 | 18 | 180 | **14** | 244 | 242-2 |
| -203 | **15** | -139 | 4 | -75 | 12 | -11 | **9** | 53 | **17** | 117 | 5 | 181 | **2** | 245 | |
| -202 | **3** | -138 | 13 | -74 | 8 | -10 | **18** | 54 | **14** | 118 | **1** | 182 | **11** | 246 | |
| -201 | **12** | -137 | 9 | -73 | 17 | -9 | **5** | 55 | **2** | 119 | **10** | 183 | **7** | 247 | |
| -200 | **8** | -136 | 18 | -72 | 14 | -8 | 106-1 | 56 | **11** | 120 | **6** | 184 | **16** | 248 | |
| -199 | **17** | -135 | 5 | -71 | 2 | -7 | 106-3 | 57 | **7** | 121 | **15** | 185 | **4** | 249 | |
| -198 | **14** | -134 | **1** | -70 | 11 | -6 | 106-2 | 58 | **16** | 122 | **3** | 186 | **13** | 250 | |
| -197 | **2** | -133 | **10** | -69 | 7 | -5 | 106-4 | 59 | **4** | 123 | **12** | 187 | **9** | 251 | |
| -196 | **11** | -132 | **6** | -68 | 16 | -4 | 242-1 | 60 | **13** | 124 | **8** | 188 | **18** | 252 | |
| -195 | **7** | -131 | **15** | -67 | 4 | -3 | 242-2 | 61 | **9** | 125 | **17** | 189 | **5** | 253 | |
| -194 | **16** | -130 | **3** | -66 | 13 | -2 | DC | 62 | **18** | 126 | **14** | 190 | 1 | 254 | |
| -193 | **4** | -129 | **12** | -65 | 9 | -1 | DC | 63 | **5** | 127 | **2** | 191 | 10 | 255 | |

As shown in Table 3, odd-numbered columns (such as columns 1/3/5/7/9/11/13/15) show subcarrier numbers, and even-numbered columns (such as columns 2/4/6/8/10/12/14/16) show RU numbers, direct current subcarriers, other subcarriers, or the like. The 40 MHz bandwidth corresponds to 512 subcarriers, and these subcarriers are numbered from -256 to +255.

If the right of a grid corresponds to a value (for example, 1 to 9), the value corresponding to the right of the grid indicates a number of a 26-tone RU belonging to 40 MHz, that is, indicates that the subcarrier belongs to an x^{th} 26-tone RU. The x^{th} 26-tone RU may be denoted as a 26-tone RU x.

For example, a grid being -242 indicates a subcarrier numbered -242, and a value corresponding to the right of the grid being 1 indicates that the subcarrier numbered -242 belongs to a 26-tone RU 1. Other grids may be deduced by analogy, and details are not described again.

If the right of a grid is empty (as shown as a rectangular box), a subcarrier corresponding to the grid is a guard subcarrier or a null subcarrier.

If the right of a grid corresponds to "106-1", subcarriers corresponding to the grid are two additional subcarriers in a 106-tone RU 1.

If the right of a grid corresponds to "106-2", subcarriers corresponding to the grid are two additional subcarriers in a 106-tone RU 2.

If the right of a grid corresponds to "106-3", subcarriers corresponding to the grid are two additional subcarriers in a 106-tone RU 3.

If the right of a grid corresponds to "106-4", subcarriers corresponding to the grid are two additional subcarriers in a 106-tone RU 4.

If the right of a grid corresponds to "242-1", subcarriers corresponding to the grid are four additional subcarriers in a 242-tone RU 1.

If the right of a grid corresponds to "242-2", subcarriers corresponding to the grid are four additional subcarriers in a 242-tone RU 2.

If the right of a grid corresponds to "DC", a subcarrier corresponding to the grid is a direct current subcarrier.

It can be learned from Table 3 that, for the 26-tone RU 1, numbers of subcarriers of the RU include -242, -224, -206, -188, -170, -152, -134, -116, -98, -80, -62, -44, -26, 10, 28, 46, 64, 82, 100, 118, 136, 154, 172, 190, 208, and 226, that is, subcarriers of the RU are more evenly distributed in 512 subcarriers. Other RUs may be deduced by analogy, and details are not described again.

It can be learned from Table 3 that, for the eighteen 26-tone RUs, namely, the 26-tone RU 1 to the 26-tone RU 18, the eighteen 26-tone RUs appear round by round in a specific sequence. For example, a sequence used in Table 3 is 1, 10, 6, 15, 3, 12, 8, 17, 14, 2, 11, 7, 16, 4, 13, 9, 18, and 5. In addition, the sequence may also make subcarriers of the 52-tone RU and the 106-tone RU evenly or approximately evenly separated.

In addition, it should be noted that a cyclic sequence of numbers of the eighteen 26-tone RUs is: 1, 10, 6, 15, 3, 12, 8, 17, 14, 2, 11, 7, 16, 4, 13, 9, 18, and 5. A manner of determining the cyclic sequence is as follows:

A 5^{th} 26-tone RU 5 and a 14^{th} 26-tone RU 14 are not discussed first, and to-be-circulated values are arranged in ascending order as follows:
1, 2, 3, 4, 6, 7, 8, 9, 10, 11, 12, 13, 15, 16, 17, 18

A second half part is placed in a row 2:
1, 2, 3, 4, 6, 7, 8, 9
10, 11, 12, 13, 15, 16, 17, 18

Second half parts are placed in a row 3 and a row 4:
1, 2, 3, 4
10, 11, 12, 13
6, 7, 8, 9
15, 16, 17, 18

The foregoing operations are repeated, to finally obtain a sequence: 1, 10, 6, 15, 3, 12, 8, 17, 2, 11, 7, 16, 4, 13, 9, and 18. The cyclic sequence 1, 10, 6, 15, 3, 12, 8, 17, 14, 2, 11, 7, 16, 4, 13, 9, 18, and 5 may be obtained by inserting 5 and 14.

In addition, it should be noted that in this application, the cyclic sequence "1, 6, 3, 8, 2, 7, 4, 9, and 5" or the cyclic sequence "1, 10, 6, 15, 3, 12, 8, 17, 14, 2, 11, 7, 16, 4, 13, 9, 18, and 5" is used as an example for description. This should not be construed as a limitation on this application.

In other words, the cyclic sequence "1, 6, 3, 8, 2, 7, 4, 9, and 5" or the cyclic sequence "1, 10, 6, 15, 3, 12, 8, 17, 14, 2, 11, 7, 16, 4, 13, 9, 18, and 5" is merely an example, and does not actually limit a size of the cyclic sequence or a specific sequence arrangement of elements in the cyclic sequence. For example, the cyclic sequence may alternatively be 1, 6, 3, 8, 2, 7, 4, and 9, or the cyclic sequence may alternatively be 1, 6, 8, 3, 2, 7, 4, and 9.

The following briefly describes a transformation method based on the cyclic sequence "1, 6, 3, 8, 2, 7, 4, and 9".

Transformation method 1: Numbers of two 26-tone RUs that form a same 52-tone RU may be interchanged. In this case, the cyclic sequence "1, 6, 3, 8, 2, 7, 4, 9, and 5" may change to "2, 6, 3, 8, 1, 7, 4, 9, and 5".

Transformation method 2: Numbers of two 52-tone RUs that form a same 106-tone RU may be interchanged. In this case, the cyclic sequence "1, 6, 3, 8, 2, 7, 4, 9, and 5" may change to "3, 6, 1, 8, 4, 7, 2, 9, and 5". In other words, 1 and 3 are interchanged, and 2 and 4 are interchanged.

This principle may also be followed for a larger size, and numbers of smaller RUs of a same size that form an RU of a larger size may be interchanged.

Transformation method 3: An RU that does not participate in forming a 52-tone RU or a 106-tone RU, namely, a 26-tone RU 5, may be placed at any position in the cyclic sequence or does not even participate in a cycle.

The foregoing is merely an example of the cyclic sequence, and there may be another sequence. This is not limited in this application. In addition, Table 2 is used as an example to describe a quantity of subcarriers that can be reached in each MHz (namely, a quantity of subcarriers that belong to an RU in each MHz) in this example. As shown in Table 4:

**Table 4**

| RU size | 20 MHz bandwidth | 40 MHz bandwidth | 80 MHz bandwidth |
|---|---|---|---|
| | Quantity of subcarriers/MHz | Quantity of subcarriers/MHz | Quantity of subcarriers/MHz |
| 26-tone RU | 2 | 1 | 1 |
| 52-tone RU | 3 | 2 | 1 |
| 106-tone RU | 6 | 3 | 2 |
| 242-tone RU | The dRU is not supported | 7 | 4 |
| 484-tone RU | The dRU is not supported | The dRU is not supported | 7 |
| 996-tone RU | The dRU is not supported | The dRU is not supported | The dRU is not supported |

In Table 4, a 20 MHz bandwidth is used as an example. For the 26-tone RU, in the 13 subcarriers in each 1 MHz, there are a maximum of two subcarriers belonging to an RU. For the 52-tone RU, in the 13 subcarriers in each 1 MHz, there are a maximum of three subcarriers belonging to an RU. Other details are not described again.

It can be learned from Table 4 that a lower value (namely, the quantity of subcarriers per MHz) is better, and the lower value indicates that a single subcarrier may be allocated with a larger power.

In addition, it should be noted that a relationship between numbers of different distributed RUs in different bandwidths is described as follows:

The subcarrier spacing 78.125 kHz used in both the 802.11be standard and the 802.11bn standard is used as an example, and 1 MHz/0.078125 MHz=12.8, that is, 13 subcarrier positions (or referred to as 13 subcarriers) specified in the standards may be included within each 1-MHz range.

For example, a subcarrier spacing is 78.125 kHz, and 20 MHz may include 256 subcarriers. For example, indexes of the 256 subcarriers may range from -128 to +127, for example, may be denoted as [-128: +127]. 40 MHz may include 512 subcarriers. For example, indexes of the 512 subcarriers may range from -256 to +255, for example, may be denoted as [-256: +255]. 80 MHz may include 1024 subcarriers. For example, indexes of the 1024 subcarriers may range from -512 to +511, for example, may be denoted as [-512: +511]. A quantity of subcarriers of 160 MHz and indexes of the subcarriers, and a quantity of subcarriers of 320 MHz and indexes of the subcarriers may be deduced by analogy. Details are not described again.

The 20 MHz bandwidth is used as an example. Table 5 shows a relationship between numbers of different distributed RUs when the bandwidth is 20 MHz. The 40 MHz bandwidth is used as an example. Table 6 shows a relationship between numbers of different distributed RUs when the bandwidth is 40 MHz. To distinguish between different numbers, in Table 5 or Table 6, "x1", "x2", ..., and "x18" are used as an example to distinguish between different 26-tone RUs, "y1", "y2", and the like are used as an example to distinguish between different 52-tone RUs, "z1", "z2", and the like are used as an example to distinguish between different 106-tone RUs, and "t1" and "t2" are used as an example to distinguish between different 242-tone RUs. For ease of description, the following uses x1=1, x2=2, ..., and x18=18 as an example for description, uses y1=1, y2=2, ..., and y8=8 as an example for description, uses z1=1, z2=2, z3=3, and z4=4 as an example for description, and uses t1=1 and t2=2 as an example for description. This is described herein once for all, and details are not described below again.

**Table 5**

| Bandwidth | RU size | Number of a distributed RU |
|---|---|---|
| 20 MHz | 26-tone RU | 26-tone RU x1; 26-tone RU x2; 26-tone RU x3; |
| | | 26-tone RU x4; 26-tone RU x5; 26-tone RU x6; |
| | | 26-tone RU x7; 26-tone RU x8; and 26-tone RU x9 |
| | 52-tone RU | 52-tone RU y1 (26-tone RU x1+26-tone RU x2); |
| | | 52-tone RU y2 (26-tone RU x3+26-tone RU x4); |
| | | 52-tone RU y3 (26-tone RU x6+26-tone RU x7); and |
| | | 52-tone RU y4 (26-tone RU x8+26-tone RU x9) |
| | 106-tone RU | 106-tone RU z1 (52-tone RU y1+52-tone RU y2+two additional subcarriers); and |
| | | 106-tone RU z2 (52-tone RU y3+52-tone RU y4+two additional subcarriers) |
| | 242-tone RU | N/A |

**Table 6**

| Bandwidth | RU size | Number of a distributed RU |
|---|---|---|
| 40 MHz | 26-tone RU | 26-tone RU x1; 26-tone RU x2; 26-tone RU x3; |
| | | 26-tone RU x4; 26-tone RU x5; 26-tone RU x6; |
| | | 26-tone RU x7; 26-tone RU x8; 26-tone RU x9; |
| | | 26-tone RU x10; 26-tone RU x11; 26-tone RU x12; |
| | | 26-tone RU x13; 26-tone RU x14; 26-tone RU x15; |
| | | 26-tone RU x16; 26-tone RU x17; and 26-tone RU x18 |
| | 52-tone RU | 52-tone RU y1 (26-tone RU x1+26-tone RU x2); |
| | | 52-tone RU y2 (26-tone RU x3+26-tone RU x4); |
| | | 52-tone RU y3 (26-tone RU x6+26-tone RU x7); |
| | | 52-tone RU y4 (26-tone RU x8+26-tone RU x9); |
| | | 52-tone RU y5 (26-tone RU x10+26-tone RU x11); |
| | | 52-tone RU y6 (26-tone RU x12+26-tone RU x13); |
| | | 52-tone RU y7 (26-tone RU x15+26-tone RU x16); and |
| | | 52-tone RU y8 (26-tone RU x17+26-tone RU x18) |
| | 106-tone RU | 106-tone RU z1 (52-tone RU y1+52-tone RU y2+two additional subcarriers); |
| | | 106-tone RU z2 (52-tone RU y3+52-tone RU y4+two additional subcarriers); |
| | | 106-tone RU z3 (52-tone RU y5+52-tone RU y6+two additional subcarriers); and |
| | | 106-tone RU z4 (52-tone RU y7+52-tone RU y8+two additional subcarriers) |
| | 242-tone RU | 242-tone RU t1 (106-tone RU z1+106-tone RU z2+26-tone RU z5+four additional subcarriers); and |
| | | 242-tone RU t2 (106-tone RU z3+106-tone RU z4+26-tone RU z14+four additional subcarriers) |

In Table 5 and Table 6, additional subcarriers (for example, the two additional subcarriers or the four additional subcarriers) may be referred to as subcarriers of a non-26-tone RU in an RU.

When the bandwidth is 80 MHz, 160 MHz, or 320 MHz, different RUs may also have the relationship shown in Table 5 or Table 6. Examples are not enumerated herein.

It can be learned from Table 5 or Table 6 that an RU whose quantity of subcarriers is greater than 26 may be established based on the 26-tone RU. Therefore, the following uses the 26-tone RU as an example to describe the tone plan in this application.

### 5. Pilot designs for a distributed RU

In this embodiment of this application, two pilot design manners for the distributed RU (namely, a dRU) are shown.

Manner 1: A pilot of the distributed RU uses a pilot position corresponding to the pilot in a regular RU. Specifically, for a 26-tone dRU, data subcarriers are distributed, and pilot subcarriers are not distributed, and still uses pilot positions in the regular RU.

For example, numbers of pilot subcarriers of a 26-tone rRU 1 are x1 and x2, and numbers of pilot subcarriers of a 26-tone rRU 2 are y1 and y2. For the 26-tone rRU 1 and the 26-tone rRU 2, the remaining 24 subcarriers in each RU are distributed, to obtain two dRUs.

Manner 2: For all 26-tone dRUs, relative positions of pilot subcarriers of the 26-tone dRUs in the 26-tone dRUs are consistent and fixed, for example, are always a 7^{th} position and a 20^{th} position.

However, in some cases, the pilot subcarriers in the distributed RU may be excessively close to each other, affecting phase estimation and frequency correction performance.

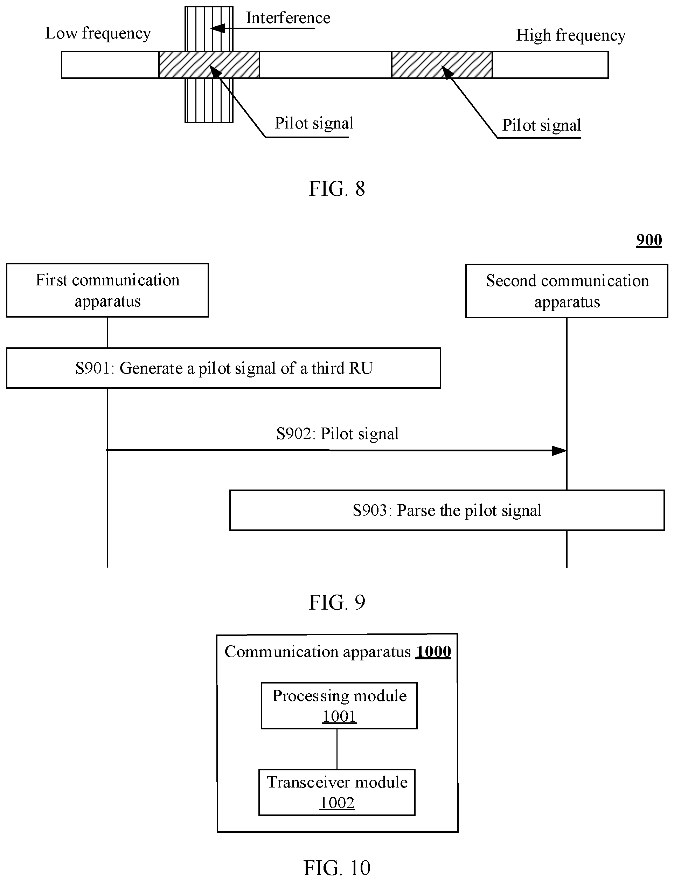

For example, when a distance between pilot subcarriers is excessively short, pilot signals sent on these pilot subcarriers are prone to narrowband interference (interference). As shown in FIG. 8, phase estimation and frequency correction (such as phase correction and frequency correction) performance are affected.

### Implementation 1

This application provides a communication method. The method may be applied to the system shown in FIG. 1. The method is for a tone plan of a first bandwidth. The tone plan of the first bandwidth includes K RUs. The K RUs are RUs of a same size. For example, each of the K RUs includes Q subcarriers, and Q is a positive integer. The following uses Q=26 as an example for description, and this should not be construed as a limitation on this application.

The method includes: A first communication apparatus generates a pilot signal of a third RU, and sends the pilot signal on a pilot subcarrier of the third RU. The third RU belongs to the first bandwidth, the third RU includes one or more RUs in the K RUs, the K RUs are RUs included in the tone plan of the first bandwidth, each of the K RUs includes 26 subcarriers, and K is a positive integer greater than or equal to 2.

The tone plan of the first bandwidth meets the following two conditions.

Condition 1: A part of subcarriers of each of the K RUs appear cyclically at an equal interval in a partial frequency domain range.

Condition 2: The K RUs include a first RU and a second RU. In this application, the first RU and the second RU are 26-tone RUs, and the first RU and the second RU are any two different RUs in the K RUs. The first RU includes a first pilot subcarrier, the second RU includes a second pilot subcarrier, and a relative position of the first pilot subcarrier in the first RU is different from a relative position of the second pilot subcarrier in the second RU.

In Condition 2, the first pilot subcarrier may be two pilot subcarriers, for example, a pilot subcarrier 1 and a pilot subcarrier 2. The second pilot subcarrier may also be two pilot subcarriers, for example, a pilot subcarrier 3 and a pilot subcarrier 4.

The relative position of the first pilot subcarrier in the first RU is a relative position of the pilot subcarrier 1 in the first RU and a relative position of the pilot subcarrier 2 in the first RU. For example, the pilot subcarrier 1 is an x1^{th} subcarrier in the first RU, and the pilot subcarrier 2 is a y1^{th} subcarrier in the first RU. The relative position of the first pilot subcarrier in the first RU is the x1^{th} subcarrier and the y1^{th} subcarrier.

The relative position of the second pilot subcarrier in the second RU is a relative position of the pilot subcarrier 3 in the second RU and a relative position of the pilot subcarrier 4 in the second RU. For example, the pilot subcarrier 3 is an x2^{th} subcarrier in the second RU, and the pilot subcarrier 4 is a y2^{th} subcarrier in the second RU. The relative position of the second pilot subcarrier in the second RU is the x2^{th} subcarrier and the y2^{th} subcarrier.

That the relative position of the first pilot subcarrier in the first RU is different from the relative position of the second pilot subcarrier in the second RU may be understood as that a relative position of at least one pilot subcarrier in the first RU is different from relative positions of all pilot subcarriers in the second RU. For example, the following three cases may be included.

Case 1: The relative position of the pilot subcarrier 1 in the first RU is the same as the relative position of the pilot subcarrier 3 in the second RU. In addition, the relative position of the pilot subcarrier 2 in the first RU is different from the relative position of the pilot subcarrier 4 in the second RU.

Case 2: The relative position of the pilot subcarrier 1 in the first RU is different from the relative position of the pilot subcarrier 3 in the second RU. In addition, the relative position of the pilot subcarrier 2 in the first RU is the same as the relative position of the pilot subcarrier 4 in the second RU.

Case 3: The relative position of the pilot subcarrier 1 in the first RU is different from the relative position of the pilot subcarrier 3 in the second RU. In addition, the relative position of the pilot subcarrier 2 in the first RU is different from the relative position of the pilot subcarrier 4 in the second RU.

The pilot subcarrier of the third RU includes a part or all of pilot subcarriers of at least one RU in the one or more RUs. The "one or more RUs" herein are RUs in the K RUs.

In other words, when the tone plan of the first bandwidth meets Condition 1, it may be understood that the K RUs are distributed RUs. For the K distributed RUs, at least two RUs meet Condition 2, that is, the two distributed RUs use subcarriers at different relative positions as pilot subcarriers. In this way, in comparison with a case in which all RUs use subcarriers at a same relative position as pilot subcarriers, in this application, at least two RUs in the K RUs use subcarriers at different relative positions as pilot subcarriers, to reduce a possibility that pilot subcarriers of the K RUs are centralized, and alleviate a problem that "positions of pilot subcarriers are excessively close" to an extent.

It should be noted that there may be a plurality of pilot design manners for the distributed RU (namely, a dRU). However, in some pilot design manners, the problem that "positions of pilot subcarriers are excessively close" may exist. Examples are as follows:

Manner 1: A pilot of the distributed RU uses a pilot position corresponding to the pilot in a regular RU. For details, refer to the descriptions in the term explanation part.

In Manner 1, pilot subcarriers are not distributed. Compared with scattered pilot subcarriers, the pilot subcarriers in Manner 1 are excessively close (or index values of the pilot subcarriers are excessively close), which easily causes a performance loss.

Manner 2: For all 26-tone dRUs, relative positions of pilot subcarriers of the 26-tone dRUs in the 26-tone dRUs are consistent and fixed, for example, are always a 7^{th} position and a 20^{th} position.

In Manner 2, for a part or all of the dRUs, the problem that pilot subcarriers are excessively close is also likely to occur. With reference to an even dRU design, if the 7^{th} subcarrier and the 20^{th} subcarrier of each 26-tone dRU are used as pilot subcarriers, pilot subcarriers of different dRUs are excessively close to each other, as shown in positions in a bold and underlined format in Table 7.

**Table 7**

| Colu mn 1 | Colu mn 2 | Colu mn 3 | Colu mn 4 | Colu mn 5 | Colu mn 6 | Colu mn 7 | Colu mn 8 | Colu mn 9 | Colu mn 10 | Colu mn 11 | Colu mn 12 | Colu mn 13 | Colu mn 14 | Colu mn 15 | Colu mn 16 |
|---|---|---|---|---|---|---|---|---|---|---|---|---|---|---|---|
| -128 | | -96 | 4 | -64 | 3 | -32 | 9 | 0 | DC | 32 | 5 | 64 | **2** | 96 | 1 |
| -127 | | -95 | 9 | -63 | 8 | -31 | 5 | 1 | DC | 33 | 1 | 65 | **7** | 97 | 6 |
| -126 | | -94 | 5 | -62 | 2 | -30 | 1 | 2 | 106-2 | 34 | 6 | 66 | **4** | 98 | 3 |
| -125 | | -93 | 1 | -61 | 7 | -29 | 6 | 3 | 106-1 | 35 | 3 | 67 | 9 | 99 | 8 |
| -124 | | -92 | 6 | -60 | 4 | -28 | 3 | 4 | 9 | 36 | 8 | 68 | 5 | 100 | 2 |
| -123 | | -91 | 3 | -59 | 9 | -27 | 8 | 5 | 5 | 37 | 2 | 69 | 1 | 101 | 7 |
| -122 | | -90 | 8 | -58 | 5 | -26 | 2 | 6 | 1 | 38 | 7 | 70 | 6 | 102 | 4 |
| -121 | | -89 | 2 | -57 | 1 | -25 | 7 | 7 | 6 | 39 | 4 | 71 | 3 | 103 | 9 |
| -120 | 1 | -88 | 7 | -56 | 6 | -24 | 4 | 8 | 3 | 40 | 9 | 72 | 8 | 104 | 5 |
| -119 | 6 | -87 | 4 | -55 | 3 | -23 | 9 | 9 | 8 | 41 | 5 | 73 | 2 | 105 | 1 |
| -118 | 3 | -86 | 9 | -54 | 8 | -22 | 5 | 10 | 2 | 42 | 1 | 74 | 7 | 106 | 6 |
| -117 | 8 | -85 | 5 | -53 | 2 | -21 | 1 | 11 | 7 | 43 | 6 | 75 | 4 | 107 | 3 |
| -116 | 2 | -84 | 1 | -52 | 7 | -20 | 6 | 12 | 4 | 44 | 3 | 76 | 9 | 108 | 8 |
| -115 | 7 | -83 | 6 | -51 | 4 | -19 | 3 | 13 | 9 | 45 | 8 | 77 | 5 | 109 | 2 |
| -114 | 4 | -82 | 3 | -50 | 9 | -18 | 8 | 14 | 5 | 46 | 2 | 78 | 1 | 110 | 7 |
| -113 | 9 | -81 | 8 | -49 | 5 | -17 | 2 | 15 | 1 | 47 | 7 | 79 | 6 | 111 | 4 |
| -112 | 5 | -80 | 2 | -48 | 1 | -16 | 7 | 16 | 6 | 48 | 4 | 80 | 3 | 112 | 9 |
| -111 | 1 | -79 | 7 | -47 | 6 | -15 | 4 | 17 | 3 | 49 | 9 | 81 | 8 | 113 | 5 |
| -110 | 6 | -78 | 4 | -46 | 3 | -14 | 9 | 18 | 8 | 50 | 5 | 82 | 2 | 114 | 1 |
| -109 | 3 | -77 | 9 | -45 | 8 | -13 | 5 | 19 | 2 | 51 | 1 | 83 | 7 | 115 | 6 |
| -108 | 8 | -76 | 5 | -44 | 2 | -12 | 1 | 20 | 7 | 52 | 6 | 84 | 4 | 116 | 3 |
| -107 | 2 | -75 | **1** | -43 | 7 | -11 | 6 | 21 | 4 | 53 | 3 | 85 | 9 | 117 | 8 |
| -106 | 7 | -74 | **6** | -42 | 4 | -10 | 3 | 22 | 9 | 54 | 8 | 86 | 5 | 118 | 2 |
| -105 | 4 | -73 | **3** | -41 | 9 | -9 | 8 | 23 | 5 | 55 | 2 | 87 | 1 | 119 | 7 |
| -104 | 9 | -72 | **8** | -40 | 5 | -8 | 2 | 24 | 1 | 56 | 7 | 88 | 6 | 120 | 4 |
| -103 | 5 | -71 | **2** | -39 | 1 | -7 | 7 | 25 | 6 | 57 | 4 | 89 | 3 | 121 | |
| -102 | 1 | -70 | **7** | -38 | 6 | -6 | 4 | 26 | 3 | 58 | **9** | 90 | 8 | 122 | |
| -101 | 6 | -69 | **4** | -37 | 3 | -5 | 9 | 27 | 8 | 59 | **5** | 91 | 2 | 123 | |
| -100 | 3 | -68 | **9** | -36 | 8 | -4 | 5 | 28 | 2 | 60 | **1** | 92 | 7 | 124 | |
| -99 | 8 | -67 | **5** | -35 | 2 | -3 | 106-1 | 29 | 7 | 61 | **6** | 93 | 4 | 125 | |
| -98 | 2 | -66 | 1 | -34 | 7 | -2 | 106-2 | 30 | 4 | 62 | **3** | 94 | 9 | 126 | |
| -97 | 7 | -65 | 6 | -33 | 4 | -1 | DC | 31 | 9 | 63 | **8** | 95 | 5 | 127 | |

In Table 7, odd-numbered columns (such as columns 1/3/5/7/9/11/13/15) show subcarrier numbers, and even-numbered columns (such as columns 2/4/6/8/10/12/14/16) show RU numbers, direct current subcarriers, other subcarriers, or the like.

For nine 26-tone dRUs, a number of a 7^{th} subcarrier in a 26-tone dRU 1 is -75, a number of a 7^{th} subcarrier in a 26-tone dRU 6 is -74, a number of a 7^{th} subcarrier in a 26-tone dRU 3 is - 73, a number of a 7^{th} subcarrier in a 26-tone dRU 8 is -72, a number of a 7^{th} subcarrier in a 26-tone dRU 2 is -71, a number of a 7^{th} subcarrier in a 26-tone dRU 7 is -70, a number of a 7^{th} subcarrier in a 26-tone dRU 4 is -69, a number of a 7^{th} subcarrier in a 26-tone dRU 9 is -68, and a number of a 7^{th} subcarrier in a 26-tone dRU 5 is -67. In this case, if the 7^{th} subcarrier of each 26-tone dRU is used as a pilot subcarrier, pilot subcarriers of the nine 26-tone dRUs are centralized, for example, in a subcarrier range of subcarriers numbered from -75 to -66, and a distance between the pilot subcarriers is excessively short. Similarly, if the 20^{th} subcarrier of each 26-tone dRU is used as a pilot subcarrier, pilot subcarriers of the nine 26-tone dRUs are also centralized, for example, in a subcarrier range of subcarriers numbered from 58 to 66, and a distance between pilot subcarriers is excessively short.

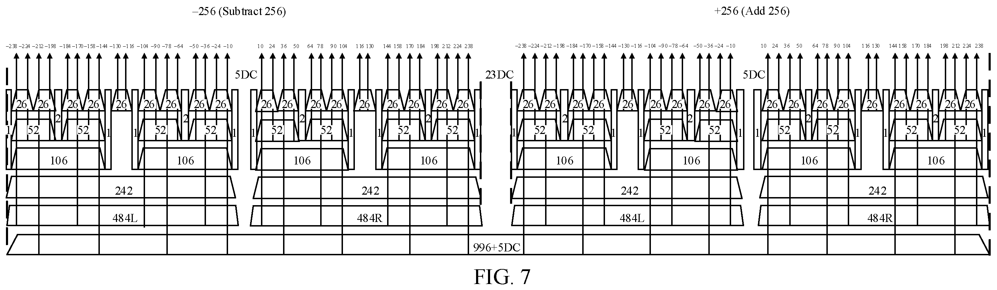

In addition, it should be noted that, for RUs of a larger size, pilot subcarriers of these RUs are selected from pilot subcarriers of smaller RUs that form the RUs. For example, pilot subcarriers of a 52-tone RU include pilot subcarriers of two 26-tone RUs that form the 52-tone RU, and pilots of a 106-tone RU are selected from pilots of two 52-tone RUs that form the 106-tone RU. For example, four pilot subcarriers are selected from eight pilot subcarriers. A pilot design of the dRU is similar to a pilot design of the regular RU (for example, an rRU). For details, refer to the descriptions in FIG. 7. Details are not described temporarily.

With reference to Manner 1 and Manner 2, it can be learned that, for a same distributed RU, if pilot subcarriers are not distributed and are still at positions of pilot subcarriers in the regular RU, the pilot subcarriers are not evenly distributed, and the problem that positions of the pilot subcarriers are excessively close (in other words, index values of the pilots are excessively close) may exist. For different distributed RUs, if the 7^{th} subcarrier and the 20^{th} subcarrier are used as pilot subcarriers in each distributed RU, the problem that positions of the pilot subcarriers are excessively close (in other words, index values of the pilots are excessively close) may exist.

In this application, for two 26-tone RUs in the K 26-tone RUs, a 7^{th} subcarrier and a 20^{th} subcarrier in one 26-tone RU (for example, the first RU) are pilot subcarriers, and a 7^{th} subcarrier and a 21^{st} subcarrier in the other 26-tone RU (for example, the second RU) are pilot subcarriers, or a 6^{th} subcarrier and a 20^{th} subcarrier in the other 26-tone RU (for example, the second RU) are pilot subcarriers, or a 6^{th} subcarrier and a 21^{st} subcarrier in the other 26-tone RU (for example, the second RU) are pilot subcarriers. In this way, at least one of K consecutive subcarriers is not a pilot subcarrier, to reduce a possibility that pilot subcarriers of the K RUs are centralized.

Further, because the third RU includes the one or more RUs in the K RUs, and the pilot subcarrier of the third RU includes the part or all of the pilot subcarriers of the at least one RU in the one or more RUs, a possibility that the pilot signal sent on the pilot subcarrier of the third RU is affected by narrowband interference is reduced, helping improve phase estimation and frequency correction performance.

The following uses the first bandwidth as an example to describe the tone plan of the first bandwidth provided in this application.

For example, the tone plan of the first bandwidth includes K RUs (K is a positive integer greater than or equal to 2), and the tone plan of the first bandwidth meets the following two conditions.

Condition 1: A part of subcarriers of each of the K RUs appear cyclically at an equal interval in a partial frequency domain range.

Condition 2: The K RUs include a first RU and a second RU, the first RU includes a first pilot subcarrier, the second RU includes a second pilot subcarrier, and a relative position of the first pilot subcarrier in the first RU is different from a relative position of the second pilot subcarrier in the second RU. In other words, in the K RUs, at least two RUs meet the following feature: Pilot subcarriers of different RUs have different relative positions in the corresponding RUs.

Condition 1 is described as follows:
In Condition 1, the part of subcarriers of each of the K RUs appear cyclically at the equal interval in the partial frequency domain range. It may be understood that, in the partial frequency domain range, every K-1 subcarriers in a sequence from a low frequency to a high frequency belong to a same RU.

In Condition 1, the part of subcarriers of each of the K RUs may be understood as subcarriers before a direct current subcarrier or subcarriers after the direct current subcarrier.

For example, the first bandwidth is 20 MHz, and the K RUs are nine 26-tone RUs.

For a 26-tone RU 1, numbers of subcarriers of the RU include -120, -111, -102, -93, -84, -75, -66, -57, -48, -39, -30, -21, -12, 6, 15, 24, 33, 42, 51, 60, 69, 78, 87, 96, 105, and 114.

Subcarriers having the following numbers are located before the direct current subcarriers: -120, -111, -102, -93, -84, -75, -66, -57, -48, -39, -30, -21, and -12. In other words, in the partial frequency range before the direct current subcarrier, every eight subcarriers in the plurality of subcarriers from a low frequency to a high frequency belong to the 26-tone RU 1.

Subcarriers having the following numbers are located after the direct current subcarriers: 6, 15, 24, 33, 42, 51, 60, 69, 78, 87, 96, 105, and 114. In other words, in the partial frequency range after the direct current subcarrier, every eight subcarriers in the plurality of subcarriers from a low frequency to a high frequency belong to the 26-tone RU 1.

Other RUs (such as a 26-tone RU 2, a 26-tone RU 3, a 26-tone RU 4, a 26-tone RU 5, a 26-tone RU 6, a 26-tone RU 7, a 26-tone RU 8, and a 26-tone RU 9) in the nine 26-tone RUs may be deduced by analogy. Details are not described again.

For another example, the first bandwidth is 40 MHz, and the K RUs are eighteen 26-tone RUs.

For a 26-tone RU 1, numbers of subcarriers of the RU include -242, -224, -206, -188, -170, -152, -134, -116, -98, -80, -62, -44, -26, 10, 28, 46, 64, 82, 100, 118, 136, 154, 172, 190, 208, and 226.

Subcarriers having the following numbers are located before the direct current subcarriers: -242, -224, -206, -188, -170, -152, -134, -116, -98, -80, -62, -44, and -26. In other words, in the partial frequency range before the direct current subcarrier, every eight subcarriers in the plurality of subcarriers from a low frequency to a high frequency belong to the 26-tone RU 1.

Subcarriers having the following numbers are located after the direct current subcarriers: 10, 28, 46, 64, 82, 100, 118, 136, 154, 172, 190, 208, and 226. In other words, in the partial frequency range after the direct current subcarrier, every eight subcarriers in the plurality of subcarriers from a low frequency to a high frequency belong to the 26-tone RU 1.

Other RUs in the eighteen 26-tone RUs may be deduced by analogy, and details are not described again.

It should be understood that, in this application, the K RUs may be understood as K distributed RUs.

Condition 2 is described as follows:
In Condition 2, the K RUs include the first RU and the second RU, the first RU includes the first pilot subcarrier, the second RU includes the second pilot subcarrier, and the position of the first pilot subcarrier in the first RU is different from the position of the second pilot subcarrier in the second RU.

The first pilot subcarrier may be understood as all pilot subcarriers in the first RU. For example, there are two pilot subcarriers in the first RU, which are respectively denoted as a pilot subcarrier 1 and a pilot subcarrier 2.

In this case, the relative position of the first pilot subcarrier in the first RU may be understood as that the pilot subcarrier 1 is an a₁^{th} pilot subcarrier in the first RU, and the pilot subcarrier 2 is a b₁^{th} pilot subcarrier in the first RU, where a₁ and b₁ are positive integers, and values of a₁ and b₁ are different.

The second pilot subcarrier may be understood as all pilot subcarriers in the second RU. For example, there are two pilot subcarriers in the second RU, which are respectively denoted as a pilot subcarrier 3 and a pilot subcarrier 4.

In this case, the relative position of the second pilot subcarrier in the second RU may be understood as that the pilot subcarrier 3 is an a₂^{th} pilot subcarrier in the second RU, and the pilot subcarrier 4 is a b₂^{th} pilot subcarrier in the second RU, where a₂ and b₂ are positive integers, and values of a₂ and b₂ are different.

In Condition 2, that the relative position of the first pilot subcarrier in the first RU is different from the relative position of the second pilot subcarrier in the second RU may include the following three cases.

Case 1: The relative position of the pilot subcarrier 1 in the first RU is the same as the relative position of the pilot subcarrier 3 in the second RU. In addition, the relative position of the pilot subcarrier 2 in the first RU is different from the relative position of the pilot subcarrier 4 in the second RU.

In other words, values of a₁ and a₂ are the same, and values of b₁ and b₂ are different.

Case 2: The relative position of the pilot subcarrier 1 in the first RU is different from the relative position of the pilot subcarrier 3 in the second RU. In addition, the relative position of the pilot subcarrier 2 in the first RU is the same as the relative position of the pilot subcarrier 4 in the second RU.

In other words, values of a₁ and a₂ are different, and values of b₁ and b₂ are the same.

Case 3: The relative position of the pilot subcarrier 1 in the first RU is different from the relative position of the pilot subcarrier 3 in the second RU. In addition, the relative position of the pilot subcarrier 2 in the first RU is different from the relative position of the pilot subcarrier 4 in the second RU.

In other words, values of a₁ and a₂ are different, and values of b₁ and b₂ are different.

It should be noted that, in this application, conditions met by the tone plan of the first bandwidth include Condition 1 and Condition 2. In other words, the tone plan of the first bandwidth needs to meet Condition 1, and also needs to meet Condition 2, that is, both Condition 1 and Condition 2 are met.

It should be noted that in Condition 2, that the relative position of the first pilot subcarrier in the first RU is different from the relative position of the second pilot subcarrier in the second RU may have a plurality of implementations. This application provides descriptions by using three embodiments (the following Embodiment 1, Embodiment 2, and Embodiment 3).

### Embodiment 1

A core idea of Embodiment 1 is that pilot subcarriers are distributed to different cyclic sequences, which may be referred to as a "cyclic-based pilot position design". Alternatively, it may be described as that pilot subcarriers are distributed to different cyclic units. Alternatively, it may be described as that pilot subcarriers are distributed to different subcarrier groups.

First, the cyclic sequence (or the subcarrier group or the cyclic unit) is described.

For example, the first bandwidth is 20 MHz. For the plurality of subcarriers from the low frequency to the high frequency in the partial frequency range, a sequence used for cyclic occurrence of the nine 26-tone RUs is 1, 6, 3, 8, 2, 7, 4, 9, and 5. Based on the sequence, every nine subcarriers may be considered as one subcarrier group, one cyclic sequence, or one cyclic unit. One subcarrier group (or one cyclic sequence or one cyclic unit) includes one subcarrier of each of the nine 26-tone RUs, and an arrangement sequence is 1, 6, 3, 8, 2, 7, 4, 9, and 5. A quantity of times of occurrence of each subcarrier group (or each cyclic sequence or each cyclic unit) is greater than or equal to 2.

Table 2 is used as an example. Nine subcarriers with subcarrier numbers from -120 to -112 are considered as one subcarrier group (or one cyclic sequence or one cyclic unit). Nine subcarriers with subcarrier numbers from -111 to -103 are considered as one subcarrier group (or one cyclic sequence or one cyclic unit). Nine subcarriers with subcarrier numbers from 96 to 104 are considered as one subcarrier group (or one cyclic sequence or one cyclic unit). Nine subcarriers with subcarrier numbers from 105 to 113 are considered as one subcarrier group (or one cyclic sequence or one cyclic unit). Other subcarrier groups may be deduced by analogy.

It should be noted that, near the direct current subcarrier, nine subcarriers with subcarrier numbers from -12 to -4 are considered as one subcarrier group (or one cyclic sequence or one cyclic unit). Nine subcarriers with subcarrier numbers from 6 to 14 are considered as one subcarrier group (or one cyclic sequence or one cyclic unit).

For another example, the first bandwidth is 40 MHz. For the plurality of subcarriers from the low frequency to the high frequency in the partial frequency range, a sequence used for cyclic occurrence of the eighteen 26-tone RUs is 1, 10, 6, 15, 3, 12, 8, 17, 14, 2, 11, 7, 16, 4, 13, 9, 18, and 5. Based on the sequence, every 18 subcarriers may be considered as one subcarrier group (or one cyclic sequence or one cyclic unit). One subcarrier group (or one cyclic sequence or one cyclic unit) includes one subcarrier of each of the eighteen 26-tone RUs, and an arrangement sequence is 1, 10, 6, 15, 3, 12, 8, 17, 14, 2, 11, 7, 16, 4, 13, 9, 18, and 5. A quantity of times of occurrence of each subcarrier group (or each cyclic sequence or each cyclic unit) is greater than or equal to 2.

Table 3 is used as an example. Eighteen subcarriers with subcarrier numbers from -242 to -225 are considered as one subcarrier group (or one cyclic sequence). Eighteen subcarriers with subcarrier numbers from -224 to -207 are considered as one subcarrier group (or one cyclic sequence). Eighteen subcarriers with subcarrier numbers from 208 to 225 are considered as one subcarrier group (or one cyclic sequence). Eighteen subcarriers with subcarrier numbers from 226 to 243 are considered as one subcarrier group (or one cyclic sequence). Other subcarrier groups may be deduced by analogy.

It should be understood that, in this application, the cyclic sequence may be understood as a sequence in which the K RUs cyclically appear in the partial frequency range. In this application, meanings of the cyclic sequence, the subcarrier group, and the cyclic unit are the same, and may be replaced with each other, or may be replaced with other descriptions, such as a set of subcarriers and a subcarrier set. This is not limited in this application.

It should be understood that, in this application, two cyclic units may be consecutive. For example, for a last subcarrier of a cyclic unit, a next subcarrier of the subcarrier is an initial subcarrier of another cyclic unit.

It should be understood that, in this application, two cyclic units may be nonconsecutive. For example, there may be one or more null subcarriers or other subcarriers between the two cyclic units. For example, "1, 6, 3, 8, 2, 7, 4, 9, 5, null subcarrier, 1, 6, 3, 8, 2, 7, 4, 9, 5" may be understood as that there is a null subcarrier between two cyclic units. Alternatively, in another example, "1, 6, 3, 8, 2, 7, 4, 9, 5, 1, 1, 6, 3, 8, 2, 7, 4, 9, 5" may be understood as that there is a subcarrier numbered 1 between two cyclic units. The following uses the cyclic unit as an example for description, and this should not be construed as a limitation on this application.

In other words, in this application, the cyclic sequence may be understood as a sequence in which different RUs in the K RUs cyclically appear in the partial frequency range.

In Embodiment 1, the first pilot subcarrier and the second pilot subcarrier are described as follows:

First, four cyclic units are defined, which are respectively a first cyclic unit, a second cyclic unit, a third cyclic unit, and a fourth cyclic unit. The four cyclic units each include one subcarrier of each of the K RUs. The first cyclic unit is different from the second cyclic unit. The third cyclic unit is different from the fourth cyclic unit. The first cyclic unit is different from the third cyclic unit, and/or the second cyclic unit is different from the fourth cyclic unit.

The first pilot subcarrier includes one subcarrier in the first cyclic unit and one subcarrier in the second cyclic unit. The relative position of the first pilot subcarrier in the first RU is determined based on the first cyclic unit and the second cyclic unit. For example, the first RU corresponds to 25 cyclic units, and an arrangement sequence of the first cyclic unit and the second cyclic unit in the 25 cyclic units may be used to determine the "relative position of the first pilot subcarrier in the first RU". For example, if the first cyclic unit is a u₁^{th} cyclic unit in the 25 cyclic units, and the second cyclic unit is a v₁^{th} cyclic unit in the 25 cyclic units, the relative position of the first pilot subcarrier in the first RU is as follows: The first pilot subcarrier includes a u₁^{th} subcarrier and a v₁^{th} subcarrier in the first RU.

The second pilot subcarrier includes one subcarrier in the third cyclic unit and one subcarrier in the fourth cyclic unit. The relative position of the second pilot subcarrier in the second RU is determined based on the third cyclic unit and the fourth cyclic unit. For example, the second RU corresponds to 25 cyclic units, and an arrangement sequence of the third cyclic unit and the fourth cyclic unit in the 25 cyclic units may be used to determine the "relative position of the second pilot subcarrier in the second RU". For example, the third cyclic unit is a u₂^{th} cyclic unit in the 25 cyclic units, and the fourth cyclic unit is a v₂^{th} cyclic unit in the 25 cyclic units. In this case, the relative position of the second pilot subcarrier in the second RU is as follows: The second pilot subcarrier includes a u₂^{th} subcarrier and a v₂^{th} subcarrier in the second RU.

For example, the first bandwidth is 20 MHz, and the K RUs are nine 26-tone RUs.

With reference to Table 2, some examples of the cyclic unit are as follows:
In Table 2, there are 25 cyclic sequences in total, which are respectively denoted as cyclic sequences 1 to 25. Alternatively, it may be described as that there are 25 cyclic units, which are respectively denoted as cyclic units 1 to 25. It should be noted that, near the direct current subcarrier, subcarriers identified by subcarrier numbers 4 and 5 do not belong to any cyclic unit. Subcarriers identified by subcarrier numbers 114 to 120 do not belong to any cyclic unit. Therefore, for the nine 26-tone RUs, there are a total of 25 cyclic units. Each cyclic unit is described as follows:
A cyclic unit 1 corresponds to subcarrier numbers -120 to -112. The cyclic unit 1 includes 1^{st} subcarrier in each 26-tone RU.

A cyclic unit 2 corresponds to subcarrier numbers -111 to -103. The cyclic unit 2 includes 2^{nd} subcarrier in each 26-tone RU.

A cyclic unit 3 corresponds to subcarrier numbers -102 to -94. The cyclic unit 3 includes 3^{rd} subcarrier in each 26-tone RU.

A cyclic unit 4 corresponds to subcarrier numbers -93 to -85. The cyclic unit 4 includes 4^{th} subcarrier in each 26-tone RU.

A cyclic unit 5 corresponds to subcarrier numbers -84 to -76. The cyclic unit 5 includes 5^{th} subcarrier in each 26-tone RU.

A cyclic unit 6 corresponds to subcarrier numbers -75 to -67. The cyclic unit 6 includes 6^{th} subcarrier in each 26-tone RU.

A cyclic unit 7 corresponds to subcarrier numbers -66 to -58. The cyclic unit 7 includes 7^{th} subcarrier in each 26-tone RU.

A cyclic unit 8 corresponds to subcarrier numbers -57 to -49. The cyclic unit 8 includes 8^{th} subcarrier in each 26-tone RU.

A cyclic unit 9 corresponds to subcarrier numbers -48 to -40. The cyclic unit 9 includes 9^{th} subcarrier in each 26-tone RU.

A cyclic unit 10 corresponds to subcarrier numbers -39 to -31. The cyclic unit 10 includes 10^{th} subcarrier in each 26-tone RU.

A cyclic unit 11 corresponds to subcarrier numbers -30 to -22. The cyclic unit 11 includes 11^{th} subcarrier in each 26-tone RU.

A cyclic unit 12 corresponds to subcarrier numbers -21 to -14. The cyclic unit 12 includes 12^{th} subcarrier in each 26-tone RU.

A cyclic unit 13 corresponds to subcarrier numbers -13 to -4. The cyclic unit 13 includes 13^{th} subcarrier in each 26-tone RU.

A cyclic unit 14 corresponds to subcarrier numbers 6 to 14. The cyclic unit 14 includes a 14^{th} subcarrier in some 26-tone RUs (for example, 26-tone RUs 1/6/3/8/2/7/4) and a 15^{th} subcarrier in some 26-tone RUs (for example, 26-tone RUs 9/5).

A cyclic unit 15 corresponds to subcarrier numbers 15 to 23. The cyclic unit 15 includes a 15^{th} subcarrier in some 26-tone RUs (for example, 26-tone RUs 1/6/3/8/2/7/4) and a 16^{th} subcarrier in some 26-tone RUs (for example, 26-tone RUs 9/5).

A cyclic unit 16 corresponds to subcarrier numbers 24 to 32. The cyclic unit 16 includes a 16^{th} subcarrier in some 26-tone RUs (for example, 26-tone RUs 1/6/3/8/2/7/4) and a 17^{th} subcarrier in some 26-tone RUs (for example, 26-tone RUs 9/5).

A cyclic unit 17 corresponds to subcarrier numbers 33 to 41. The cyclic unit 17 includes a 17^{th} subcarrier in some 26-tone RUs (for example, 26-tone RUs 1/6/3/8/2/7/4) and an 18^{th} subcarrier in some 26-tone RUs (for example, 26-tone RUs 9/5).

A cyclic unit 18 corresponds to subcarrier numbers 42 to 50. The cyclic unit 18 includes an 18^{th} subcarrier in some 26-tone RUs (for example, 26-tone RUs 1/6/3/8/2/7/4) and a 19^{th} subcarrier in some 26-tone RUs (for example, 26-tone RUs 9/5).

A cyclic unit 19 corresponds to subcarrier numbers 51 to 59. The cyclic unit 19 includes a 19^{th} subcarrier in some 26-tone RUs (for example, 26-tone RUs 1/6/3/8/2/7/4) and a 20^{th} subcarrier in some 26-tone RUs (for example, 26-tone RUs 9/5).

A cyclic unit 20 corresponds to subcarrier numbers 60 to 68. The cyclic unit 20 includes a 20^{th} subcarrier in some 26-tone RUs (for example, 26-tone RUs 1/6/3/8/2/7/4) and a 21^{st} subcarrier in some 26-tone RUs (for example, 26-tone RUs 9/5).

A cyclic unit 21 corresponds to subcarrier numbers 69 to 77. The cyclic unit 21 includes a 21^{st} subcarrier in some 26-tone RUs (for example, 26-tone RUs 1/6/3/8/2/7/4) and a 22^{nd} subcarrier in some 26-tone RUs (for example, 26-tone RUs 9/5).

A cyclic unit 22 corresponds to subcarrier numbers 78 to 86. The cyclic unit 22 includes a 22^{nd} subcarrier in some 26-tone RUs (for example, 26-tone RUs 1/6/3/8/2/7/4) and a 23^{rd} subcarrier in some 26-tone RUs (for example, 26-tone RUs 9/5).

A cyclic unit 23 corresponds to subcarrier numbers 87 to 95. The cyclic unit 23 includes a 23^{rd} subcarrier in some 26-tone RUs (for example, 26-tone RUs 1/6/3/8/2/7/4) and a 24^{th} subcarrier in some 26-tone RUs (for example, 26-tone RUs 9/5).

A cyclic unit 24 corresponds to subcarrier numbers 96 to 104. The cyclic unit 24 includes a 24^{th} subcarrier in some 26-tone RUs (for example, 26-tone RUs 1/6/3/8/2/7/4) and a 25^{th} subcarrier in some 26-tone RUs (for example, 26-tone RUs 9/5).

A cyclic unit 25 corresponds to subcarrier numbers 105 to 113. The cyclic unit 25 includes a 25^{th} subcarrier in some 26-tone RUs (for example, 26-tone RUs 1/6/3/8/2/7/4) and a 26^{th} subcarrier in some 26-tone RUs (for example, 26-tone RUs 9/5).

Based on this, for example, the first cyclic unit is a cyclic unit g₁, the second cyclic unit is a cyclic unit g₂, the third cyclic unit is a cyclic unit g₃, and the fourth cyclic unit is a cyclic unit g₄, and the following three cases (the following Case A, Case B, and Case C) may exist.

Case A: The first pilot subcarrier may include one subcarrier in the cyclic unit g₁ and one subcarrier in the cyclic unit g₂ (which may be understood as that the first pilot subcarrier is a g₁^{th} subcarrier and a g₂^{th} subcarrier in the first RU). In addition, the second pilot subcarrier may include one subcarrier in the cyclic unit g₁ and one subcarrier in the cyclic unit g₄ (which may be understood as that the second pilot subcarrier is a g₁^{th} subcarrier and a g₄^{th} subcarrier in the second RU).

For the cyclic unit g₁, it may be understood that a same cyclic unit may include pilot subcarriers of two or more RUs. For the cyclic unit g₂ or g₄, it may be understood that a same cyclic unit may include a pilot subcarrier of one RU. In other words, a same cyclic unit may include pilot subcarriers of one or more RUs.

Case B: The first pilot subcarrier may include one subcarrier in the cyclic unit g₁ and one subcarrier in the cyclic unit g₂ (which may be understood as that the first pilot subcarrier is a g₁^{th} subcarrier and a g₂^{th} subcarrier in the first RU). In addition, the second pilot subcarrier may include one subcarrier in the cyclic unit g₂ and one subcarrier in the cyclic unit g₃ (which may be understood as that the second pilot subcarrier is a g₂^{th} subcarrier and a g₃^{th} subcarrier in the second RU).

Case C: The first pilot subcarrier may include one subcarrier in the cyclic unit g₁ and one subcarrier in the cyclic unit g₂ (which may be understood as that the first pilot subcarrier is a g₁^{th} subcarrier and a g₂^{th} subcarrier in the first RU). In addition, the second pilot subcarrier may include one subcarrier in the cyclic unit g₃ and one subcarrier in the cyclic unit g₄ (which may be understood as that the second pilot subcarrier is a g₃^{th} subcarrier and a g₄^{th} subcarrier in the second RU).

In addition, it should be noted that in the foregoing three cases (namely, Case A, Case B, and Case C), values of g₁, g₂, g₃, and g₄ are different from each other, and are positive integers in [1, 25]. Values of g₁, g₂, g₃, and g₄ may be all consecutive, for example, 1, 2, 3, and 4, or may be partially consecutive and partially distributed, for example, 1, 3, 4, and 7, or may be all distributed, for example, 1, 3, 5, and 7. This is not limited in this application.

In addition, it should be noted that, in Embodiment 1, each cyclic unit is not required to include a pilot subcarrier, and a cyclic unit that does not include a pilot subcarrier may also exist.

In other words, the pilot subcarrier of the first RU and the pilot subcarrier of the second RU are distributed in different cyclic units. Different cyclic units may be understood as that, for cyclic units in which pilot subcarriers of the first RU or the second RU are distributed, in cyclic units in which pilot subcarriers are distributed and that correspond to the first RU, at least one cyclic unit is not included in cyclic units in which pilot subcarriers are distributed and that correspond to the second RU.

The foregoing describes the cyclic unit in which the pilot subcarrier of each RU is located.

The following describes a cyclic position of the pilot subcarrier of each RU in the cyclic unit.

In the K RUs, cyclic positions of the pilot subcarrier of each RU in different cyclic units are associated with the sequence used when the K RUs cyclically appear in the partial frequency range.

Specifically, cyclic positions of the first pilot subcarrier in the first cyclic unit and the second cyclic unit are determined based on the following two items: an identifier of the first RU and K RU identifiers. Cyclic positions of the second pilot subcarrier in the third cyclic unit and the fourth cyclic unit are determined based on the following two items: an identifier of the second RU and the K RU identifiers. The K RU identifiers are in a one-to-one correspondence with the K RUs.

It should be noted that, in Embodiment 1, the K RU identifiers are in a one-to-one correspondence with the K RUs. It may be understood that each of the K RU identifiers is used to identify one of the K RUs, and a sequence of the K RU identifiers is consistent with the sequence used when the K RUs cyclically appear in the partial frequency range. For example, when the first bandwidth is 20 MHz, the sequence used when the K RUs cyclically appear in the partial frequency range is 1, 6, 3, 8, 2, 7, 4, 9, and 5. Therefore, the arrangement sequence of the K RU identifiers is 1, 6, 3, 8, 2, 7, 4, 9, and 5. On the contrary, if there are K RU identifiers, but an arrangement sequence does not meet the foregoing cyclic sequence, the K RU identifiers are not referred to as K RU identifiers. For example, identifiers arranged in 9, 5, 1, 6, 3, 8, 2, 7, and 4 are not the K RU identifiers in this application.

Optionally, the identifier of the first RU is an M₁^{th} identifier in the K RU identifiers, the identifier of the second RU is an (M₁+N₁)^{th} identifier in the K RU identifiers, M₁ and N₁ are positive integers, and a sum of M₁ and N₁ is a positive integer less than or equal to K.

The first pilot subcarrier includes an M₁^{th} subcarrier in the first cyclic unit and an M₁^{th} subcarrier in the second cyclic unit, where the M₁^{th} subcarrier corresponds to the identifier of the first RU.

The second pilot subcarrier includes an (M₁+N₁)^{th} subcarrier in the third cyclic unit and an (M₁+N₁)^{th} subcarrier in the fourth cyclic unit, where the (M₁+N₁)^{th} subcarrier corresponds to the identifier of the second RU.

For example, N₁=1. In other words, the identifier of the first RU is adjacent to the identifier of the second RU in the K RU identifiers. In this case, if the first cyclic unit, the second cyclic unit, the third cyclic unit, and the fourth cyclic unit are different from each other, and are consecutive in frequency domain, it means that different pilot subcarriers of a same RU are distributed in different cyclic units, and pilot subcarriers of different RUs are distributed in different cyclic units.

In a possible implementation, for example, the first bandwidth is 20 MHz. Distribution of pilot subcarriers of the nine 26-tone RUs is shown in Table 8.

**Table 8**

| Colu mn 1 | Colu mn 2 | Colu mn 3 | Colu mn 4 | Colu mn 5 | Colu mn 6 | Colu mn 7 | Colu mn 8 | Colu mn 9 | Colu mn 10 | Colu mn 11 | Colu mn 12 | Colu mn 13 | Colu mn 14 | Colu mn 15 | Colu mn 16 |
|---|---|---|---|---|---|---|---|---|---|---|---|---|---|---|---|
| -128 | | -96 | 4 | -64 | 3 | -32 | **9** | 0 | DC | 32 | 5 | 64 | **2** | 96 | 1 |
| -127 | | -95 | 9 | -63 | 8 | -31 | 5 | 1 | DC | 33 | 1 | 65 | 7 | 97 | 6 |
| -126 | | -94 | 5 | -62 | **2** | -30 | 1 | 2 | 106-2 | 34 | **6** | 66 | 4 | 98 | 3 |
| -125 | | -93 | 1 | -61 | 7 | -29 | 6 | 3 | 106-1 | 35 | 3 | 67 | 9 | 99 | 8 |
| -124 | | -92 | **6** | -60 | 4 | -28 | 3 | 4 | 9 | 36 | 8 | 68 | 5 | 100 | 2 |
| -123 | | -91 | 3 | -59 | 9 | -27 | 8 | 5 | 5 | 37 | 2 | 69 | 1 | 101 | 7 |
| -122 | | -90 | 8 | -58 | 5 | -26 | 2 | 6 | 1 | 38 | 7 | 70 | 6 | 102 | 4 |
| -121 | | -89 | 2 | -57 | 1 | -25 | 7 | 7 | 6 | 39 | 4 | 71 | 3 | 103 | 9 |
| -120 | 1 | -88 | 7 | -56 | 6 | -24 | 4 | 8 | 3 | 40 | 9 | 72 | 8 | 104 | **5** |
| -119 | 6 | -87 | 4 | -55 | 3 | -23 | 9 | 9 | 8 | 41 | 5 | 73 | 2 | 105 | 1 |
| -118 | 3 | -86 | 9 | -54 | 8 | -22 | **5** | 10 | 2 | 42 | 1 | 74 | **7** | 106 | 6 |
| -117 | 8 | -85 | 5 | -53 | 2 | -21 | 1 | 11 | 7 | 43 | 6 | 75 | 4 | 107 | 3 |
| -116 | 2 | -84 | 1 | -52 | **7** | -20 | 6 | 12 | 4 | 44 | **3** | 76 | 9 | 108 | 8 |
| -115 | 7 | -83 | 6 | -51 | 4 | -19 | 3 | 13 | 9 | 45 | 8 | 77 | 5 | 109 | 2 |
| -114 | 4 | -82 | **3** | -50 | 9 | -18 | 8 | 14 | 5 | 46 | 2 | 78 | 1 | 110 | 7 |
| -113 | 9 | -81 | 8 | -49 | 5 | -17 | 2 | 15 | 1 | 47 | 7 | 79 | 6 | 111 | 4 |
| -112 | 5 | -80 | 2 | -48 | 1 | -16 | 7 | 16 | 6 | 48 | 4 | 80 | 3 | 112 | 9 |
| -111 | 1 | -79 | 7 | -47 | 6 | -15 | 4 | 17 | 3 | 49 | 9 | 81 | 8 | 113 | 5 |
| -110 | 6 | -78 | 4 | -46 | 3 | -14 | 9 | 18 | 8 | 50 | 5 | 82 | 2 | 114 | 1 |
| -109 | 3 | -77 | 9 | -45 | 8 | -13 | 5 | 19 | 2 | 51 | 1 | 83 | 7 | 115 | 6 |
| -108 | 8 | -76 | 5 | -44 | 2 | -12 | 1 | 20 | 7 | 52 | 6 | 84 | **4** | 116 | 3 |
| -107 | 2 | -75 | 1 | -43 | 7 | -11 | 6 | 21 | 4 | 53 | 3 | 85 | 9 | 117 | 8 |
| -106 | 7 | -74 | 6 | -42 | **4** | -10 | 3 | 22 | 9 | 54 | **8** | 86 | 5 | 118 | 2 |
| -105 | 4 | -73 | 3 | -41 | 9 | -9 | 8 | 23 | 5 | 55 | 2 | 87 | 1 | 119 | 7 |
| -104 | 9 | -72 | **8** | -40 | 5 | -8 | 2 | 24 | **1** | 56 | 7 | 88 | 6 | 120 | 4 |
| -103 | 5 | -71 | 2 | -39 | 1 | -7 | 7 | 25 | 6 | 57 | 4 | 89 | 3 | 121 | |
| -102 | **1** | -70 | 7 | -38 | 6 | -6 | 4 | 26 | 3 | 58 | 9 | 90 | 8 | 122 | |
| -101 | 6 | -69 | 4 | -37 | 3 | -5 | 9 | 27 | 8 | 59 | 5 | 91 | 2 | 123 | |
| -100 | 3 | -68 | 9 | -36 | 8 | -4 | 5 | 28 | 2 | 60 | 1 | 92 | 7 | 124 | |
| -99 | 8 | -67 | 5 | -35 | 2 | -3 | 106-1 | 29 | 7 | 61 | 6 | 93 | 4 | 125 | |
| -98 | 2 | -66 | 1 | -34 | 7 | -2 | 106-2 | 30 | 4 | 62 | 3 | 94 | **9** | 126 | |
| -97 | 7 | -65 | 6 | -33 | 4 | -1 | DC | 31 | 9 | 63 | 8 | 95 | 5 | 127 | |

In Table 8, odd-numbered columns (such as columns 1/3/5/7/9/11/13/15) show subcarrier numbers, and even-numbered columns (such as columns 2/4/6/8/10/12/14/16) show RU numbers, direct current subcarriers, other subcarriers, or the like.

In Table 8, numbers underlined in bold indicate positions of pilot subcarriers in different RUs.

With reference to Table 8, in terms of a relative position of a pilot subcarrier in an RU, each RU is described as follows:
In the 26-tone RU 2, the 7^{th} subcarrier and the 20^{th} subcarrier in the 26-tone RU 2 are pilot subcarriers.

In the 26-tone RU 8, the 6^{th} subcarrier and the 19^{th} subcarrier in the 26-tone RU 8 are pilot subcarriers.

In the 26-tone RU 3, the 5^{th} subcarrier and the 18^{th} subcarrier in the 26-tone RU 3 are pilot subcarriers.

In the 26-tone RU 6, the 4^{th} subcarrier and the 17^{th} subcarrier in the 26-tone RU 6 are pilot subcarriers.

In the 26-tone RU 1, the 3^{rd} subcarrier and the 16^{th} subcarrier in the 26-tone RU 1 are pilot subcarriers.

In the 26-tone RU 7, the 8^{th} subcarrier and the 21^{st} subcarrier in the 26-tone RU 7 are pilot subcarriers.

In the 26-tone RU 4, the 9^{th} subcarrier and the 22^{nd} subcarrier in the 26-tone RU 4 are pilot subcarriers.

In the 26-tone RU 9, the 10^{th} subcarrier and the 25^{th} subcarrier in the 26-tone RU 9 are pilot subcarriers.

In the 26-tone RU 5, the 11^{th} subcarrier and the 26^{th} subcarrier in the 26-tone RU 5 are pilot subcarriers.

With reference to Table 8, in terms of a cyclic unit in which pilot subcarriers are distributed and cyclic positions in the cyclic unit, each RU is described as follows:
In the 26-tone RU 2, pilot subcarriers in the 26-tone RU 2 are distributed in a 7^{th} cyclic unit and a 20^{th} cyclic unit. In addition, the pilot subcarriers in the 26-tone RU 2 include a 5^{th} subcarrier in the 7^{th} cyclic unit and a 5^{th} subcarrier in the 20^{th} cyclic unit.

In the 26-tone RU 8, pilot subcarriers in the 26-tone RU 8 are distributed in a 6^{th} cyclic unit and a 19^{th} cyclic unit. In addition, the pilot subcarriers in the 26-tone RU 8 include a 4^{th} subcarrier in the 6^{th} cyclic unit and a 4^{th} subcarrier in the 19^{th} cyclic unit.

In the 26-tone RU 3, pilot subcarriers in the 26-tone RU 3 are distributed in a 5^{th} cyclic unit and an 18^{th} cyclic unit. In addition, the pilot subcarriers in the 26-tone RU 3 include a 3^{rd} subcarrier in the 5^{th} cyclic unit and a 3^{rd} subcarrier in the 18^{th} cyclic unit.

In the 26-tone RU 6, pilot subcarriers in the 26-tone RU 6 are distributed in a 4^{th} cyclic unit and a 17^{th} cyclic unit. In addition, the pilot subcarriers in the 26-tone RU 6 include: a 2^{nd} subcarrier in the 4^{th} cyclic unit and a 2^{nd} subcarrier in the 17^{th} cyclic unit.

In the 26-tone RU 1, pilot subcarriers in the 26-tone RU 1 are distributed in a 3^{rd} cyclic unit and a 16^{th} cyclic unit. In addition, the pilot subcarriers in the 26-tone RU 1 include a 1^{st} subcarrier in the 3^{rd} cyclic unit and a 1^{st} subcarrier in the 16^{th} cyclic unit.

In the 26-tone RU 7, pilot subcarriers in the 26-tone RU 7 are distributed in an 8^{th} cyclic unit and a 21^{st} cyclic unit. In addition, the pilot subcarriers in the 26-tone RU 7 include a 6^{th} subcarrier in the 8^{th} cyclic unit and a 6^{th} subcarrier in the 21^{st} cyclic unit.

In the 26-tone RU 4, pilot subcarriers in the 26-tone RU 4 are distributed in a 9^{th} cyclic unit and a 22^{nd} cyclic unit. In addition, the pilot subcarriers in the 26-tone RU 4 include a 7^{th} subcarrier in the 9^{th} cyclic unit and a 7^{th} subcarrier in the 22^{nd} cyclic unit.

In the 26-tone RU 9, pilot subcarriers in the 26-tone RU 9 are distributed in a 10^{th} cyclic unit and a 24^{th} cyclic unit. In addition, the pilot subcarriers in the 26-tone RU 9 include an 8^{th} subcarrier in the 10^{th} cyclic unit and an 8^{th} subcarrier in the 24^{th} cyclic unit.

In the 26-tone RU 5, pilot subcarriers in the 26-tone RU 5 are distributed in an 11^{th} cyclic unit and a 25^{th} cyclic unit. In addition, the pilot subcarriers in the 26-tone RU 5 include a 9^{th} subcarrier in the 11^{th} cyclic unit and a 9^{th} subcarrier in the 25^{th} cyclic unit.

It can be learned from Table 8 that pilot subcarriers of the nine 26-tone RUs are distributed in a plurality of cyclic units, and one cyclic unit includes a maximum of eight pilot subcarriers (each cyclic unit in Table 8 includes one pilot subcarrier). In comparison with the case in which nine pilot subcarriers are centralized in Table 7, in this application, the pilot subcarriers can be scattered, and a maximum of eight pilot subcarriers are adjacent. This helps reduce a possibility of narrowband interference.

In addition, it should be noted that in this application, descriptions of the relative position and the cyclic position are as follows:

The relative position is a position of a pilot subcarrier in an RU. For example, if an x^{th} subcarrier and a y^{th} subcarrier in an RU are pilot subcarriers, it may be understood that relative positions of the pilot subcarriers in the RU are the x^{th} subcarrier and the y^{th} subcarrier.

The cyclic position is a position of a pilot subcarrier in a cyclic unit. For example, if a z^{th} subcarrier in a cyclic unit is a pilot subcarrier, it may be understood that a cyclic position of the pilot subcarrier in the cyclic unit is the z^{th} subcarrier.

For another example, N₁>1. In other words, the identifier of the first RU is not adjacent to the identifier of the second RU in the K RU identifiers. In this case, if the first cyclic unit, the second cyclic unit, the third cyclic unit, and the fourth cyclic unit are different from each other, and are consecutive in frequency domain, it means that different pilot subcarriers of a same RU are distributed in different cyclic units. For RUs corresponding to the M₁^{th} identifier and the (M₁+N₁)^{th} identifier in the K RU identifiers, pilot subcarriers of different RUs are distributed in different cyclic units.

In a possible implementation, for example, the first bandwidth is 20 MHz. Pilot subcarriers of the nine 26-tone RUs are shown in Table 9.

**Table 9**

| Colu mn 1 | Colu mn 2 | Colu mn 3 | Colu mn 4 | Colu mn 5 | Colu mn 6 | Colu mn 7 | Colu mn 8 | Colu mn 9 | Colu mn 10 | Colu mn 11 | Colu mn 12 | Colu mn 13 | Colu mn 14 | Colu mn 15 | Colu mn 16 |
|---|---|---|---|---|---|---|---|---|---|---|---|---|---|---|---|
| -128 | | -96 | 4 | -64 | 3 | -32 | 9 | 0 | DC | 32 | 5 | 64 | **2** | 96 | 1 |
| -127 | | -95 | 9 | -63 | 8 | -31 | 5 | 1 | DC | 33 | **1** | 65 | **7** | 97 | 6 |
| -126 | | -94 | 5 | -62 | **2** | -30 | 1 | 2 | 106-2 | 34 | **6** | 66 | 4 | 98 | 3 |
| -125 | | -93 | 1 | -61 | **7** | -29 | 6 | 3 | 106-1 | 35 | 3 | 67 | 9 | 99 | 8 |
| -124 | | -92 | 6 | -60 | 4 | -28 | 3 | 4 | 9 | 36 | 8 | 68 | 5 | 100 | 2 |
| -123 | | -91 | 3 | -59 | 9 | -27 | 8 | 5 | 5 | 37 | 2 | 69 | 1 | 101 | 7 |
| -122 | | -90 | 8 | -58 | 5 | -26 | 2 | 6 | 1 | 38 | 7 | 70 | 6 | 102 | 4 |
| -121 | | -89 | 2 | -57 | 1 | -25 | 7 | 7 | 6 | 39 | 4 | 71 | 3 | 103 | 9 |
| -120 | 1 | -88 | 7 | -56 | 6 | -24 | 4 | 8 | 3 | 40 | 9 | 72 | 8 | 104 | 5 |
| -119 | 6 | -87 | 4 | -55 | 3 | -23 | 9 | 9 | 8 | 41 | 5 | 73 | 2 | 105 | 1 |
| -118 | 3 | -86 | 9 | -54 | 8 | -22 | 5 | 10 | 2 | 42 | **1** | 74 | 7 | 106 | 6 |
| -117 | 8 | -85 | 5 | -53 | 2 | -21 | 1 | 11 | 7 | 43 | **6** | 75 | **4** | 107 | 3 |
| -116 | 2 | -84 | **1** | -52 | 7 | -20 | 6 | 12 | 4 | 44 | 3 | 76 | **9** | 108 | 8 |
| -115 | 7 | -83 | **6** | -51 | **4** | -19 | 3 | 13 | 9 | 45 | 8 | 77 | 5 | 109 | 2 |
| -114 | 4 | -82 | 3 | -50 | **9** | -18 | 8 | 14 | 5 | 46 | 2 | 78 | 1 | 110 | 7 |
| -113 | 9 | -81 | 8 | -49 | 5 | -17 | 2 | 15 | 1 | 47 | 7 | 79 | 6 | 111 | 4 |
| -112 | 5 | -80 | 2 | -48 | 1 | -16 | 7 | 16 | 6 | 48 | 4 | 80 | 3 | 112 | 9 |
| -111 | 1 | -79 | 7 | -47 | 6 | -15 | 4 | 17 | 3 | 49 | 9 | 81 | 8 | 113 | 5 |
| -110 | 6 | -78 | 4 | -46 | 3 | -14 | 9 | 18 | 8 | 50 | 5 | 82 | 2 | 114 | 1 |
| -109 | 3 | -77 | 9 | -45 | 8 | -13 | 5 | 19 | 2 | 51 | 1 | 83 | 7 | 115 | 6 |
| -108 | 8 | -76 | 5 | -44 | 2 | -12 | 1 | 20 | 7 | 52 | 6 | 84 | 4 | 116 | 3 |
| -107 | 2 | -75 | 1 | -43 | 7 | -11 | 6 | 21 | 4 | 53 | **3** | 85 | 9 | 117 | 8 |
| -106 | 7 | -74 | 6 | -42 | 4 | -10 | 3 | 22 | 9 | 54 | **8** | 86 | **5** | 118 | 2 |
| -105 | 4 | -73 | **3** | -41 | 9 | -9 | 8 | 23 | 5 | 55 | 2 | 87 | 1 | 119 | 7 |
| -104 | 9 | -72 | **8** | -40 | **5** | -8 | 2 | 24 | 1 | 56 | 7 | 88 | 6 | 120 | 4 |
| -103 | 5 | -71 | 2 | -39 | 1 | -7 | 7 | 25 | 6 | 57 | 4 | 89 | 3 | 121 | |
| -102 | 1 | -70 | 7 | -38 | 6 | -6 | 4 | 26 | 3 | 58 | 9 | 90 | 8 | 122 | |
| -101 | 6 | -69 | 4 | -37 | 3 | -5 | 9 | 27 | 8 | 59 | 5 | 91 | 2 | 123 | |
| -100 | 3 | -68 | 9 | -36 | 8 | -4 | 5 | 28 | 2 | 60 | 1 | 92 | 7 | 124 | |
| -99 | 8 | -67 | 5 | -35 | 2 | -3 | 106-1 | 29 | 7 | 61 | 6 | 93 | 4 | 125 | |
| -98 | 2 | -66 | 1 | -34 | 7 | -2 | 106-2 | 30 | 4 | 62 | 3 | 94 | 9 | 126 | |
| -97 | 7 | -65 | 6 | -33 | 4 | -1 | DC | 31 | 9 | 63 | 8 | 95 | 5 | 127 | |

In Table 9, odd-numbered columns (such as columns 1/3/5/7/9/11/13/15) show subcarrier numbers, and even-numbered columns (such as columns 2/4/6/8/10/12/14/16) show RU numbers, direct current subcarriers, other subcarriers, or the like.

In Table 9, numbers underlined in bold indicate positions of pilot subcarriers in different RUs.

It should be understood that, with reference to Table 9, the first RU may be the 26-tone RU 1, and the second RU may be the 26-tone RU 3. Alternatively, the second RU may be the 26-tone RU 6, and the fourth RU may be the 26-tone RU 8. Alternatively, the second RU may be the 26-tone RU 2, and the fourth RU may be the 26-tone RU 4. Alternatively, the second RU may be the 26-tone RU 7, and the fourth RU may be the 26-tone RU 9.

With reference to Table 9, in terms of a relative position of a pilot subcarrier in an RU, each RU is described as follows:
In the 26-tone RU 1, the 5^{th} subcarrier and the 18^{th} subcarrier in the 26-tone RU 1 are pilot subcarriers.

In the 26-tone RU 3, the 6^{th} subcarrier and the 19^{th} subcarrier in the 26-tone RU 3 are pilot subcarriers.

In the 26-tone RU 2, the 7^{th} subcarrier and the 20^{th} subcarrier in the 26-tone RU 2 are pilot subcarriers.

In the 26-tone RU 4, the 8^{th} subcarrier and the 21^{st} subcarrier in the 26-tone RU 4 are pilot subcarriers.

In the 26-tone RU 5, the 9^{th} subcarrier and the 22^{nd} subcarrier in the 26-tone RU 5 are pilot subcarriers.

Alternatively:
In the 26-tone RU 6, the 5^{th} subcarrier and the 18^{th} subcarrier in the 26-tone RU 6 are pilot subcarriers.

In the 26-tone RU 8, the 6^{th} subcarrier and the 19^{th} subcarrier in the 26-tone RU 8 are pilot subcarriers.

In the 26-tone RU 7, the 7^{th} subcarrier and the 20^{th} subcarrier in the 26-tone RU 7 are pilot subcarriers.

In the 26-tone RU 9, the 8^{th} subcarrier and the 21^{st} subcarrier in the 26-tone RU 9 are pilot subcarriers.

With reference to Table 9, in terms of a cyclic unit in which pilot subcarriers are distributed and cyclic positions in the cyclic unit, each RU is described as follows:

In the 26-tone RU 1, pilot subcarriers in the 26-tone RU 1 are distributed in a 5^{th} cyclic unit and an 18^{th} cyclic unit. In addition, the pilot subcarriers in the 26-tone RU 1 include a 1^{st} subcarrier in the 5^{th} cyclic unit and a 1^{st} subcarrier in the 18^{th} cyclic unit.

In the 26-tone RU 3, pilot subcarriers in the 26-tone RU 3 are distributed in a 6^{th} cyclic unit and a 19^{th} cyclic unit. In addition, the pilot subcarriers in the 26-tone RU 3 include a 3^{rd} subcarrier in the 6^{th} cyclic unit and a 3^{rd} subcarrier in the 19^{th} cyclic unit.

In the 26-tone RU 2, pilot subcarriers in the 26-tone RU 2 are distributed in a 7^{th} cyclic unit and a 20^{th} cyclic unit. In addition, the pilot subcarriers in the 26-tone RU 2 include a 5^{th} subcarrier in the 7^{th} cyclic unit and a 5^{th} subcarrier in the 20^{th} cyclic unit.

In the 26-tone RU 4, pilot subcarriers in the 26-tone RU 4 are distributed in an 8^{th} cyclic unit and a 21^{st} cyclic unit. In addition, the pilot subcarriers in the 26-tone RU 4 include a 7^{th} subcarrier in the 8^{th} cyclic unit and a 7^{th} subcarrier in the 21^{st} cyclic unit.

In the 26-tone RU 5, pilot subcarriers in the 26-tone RU 5 are distributed in a 9^{th} cyclic unit and a 22^{nd} cyclic unit. In addition, the pilot subcarriers in the 26-tone RU 5 include a 9^{th} subcarrier in the 9^{th} cyclic unit and a 9^{th} subcarrier in the 22^{nd} cyclic unit.

Alternatively:
In the 26-tone RU 6, pilot subcarriers in the 26-tone RU 6 are distributed in a 5^{th} cyclic unit and an 18^{th} cyclic unit. In addition, the pilot subcarriers in the 26-tone RU 6 include: a 2^{nd} subcarrier in the 5^{th} cyclic unit and a 2^{nd} subcarrier in the 18^{th} cyclic unit.

In the 26-tone RU 8, pilot subcarriers in the 26-tone RU 8 are distributed in a 6^{th} cyclic unit and a 19^{th} cyclic unit. In addition, the pilot subcarriers in the 26-tone RU 8 include a 4^{th} subcarrier in the 6^{th} cyclic unit and a 4^{th} subcarrier in the 19^{th} cyclic unit.

In the 26-tone RU 7, pilot subcarriers in the 26-tone RU 7 are distributed in a 7^{th} cyclic unit and a 20^{th} cyclic unit. In addition, the pilot subcarriers in the 26-tone RU 7 include a 6^{th} subcarrier in the 7^{th} cyclic unit and a 6^{th} subcarrier in the 20^{th} cyclic unit.

In the 26-tone RU 9, pilot subcarriers in the 26-tone RU 9 are distributed in an 8^{th} cyclic unit and a 21^{st} cyclic unit. In addition, the pilot subcarriers in the 26-tone RU 9 include an 8^{th} subcarrier in the 8^{th} cyclic unit and an 8^{th} subcarrier in the 21^{st} cyclic unit.

It can be learned from Table 9 that pilot subcarriers of the nine 26-tone RUs are distributed in a plurality of cyclic units, and one cyclic unit includes a maximum of eight pilot subcarriers (each cyclic unit in Table 9 includes two pilot subcarriers). In comparison with the case in which nine pilot subcarriers are centralized in Table 7, in this application, the pilot subcarriers can be scattered, and a maximum of eight pilot subcarriers are adjacent. This helps reduce a possibility of narrowband interference.

Further, the K RUs further include a fourth RU, the fourth RU includes a third pilot subcarrier, and a relative position of the third pilot subcarrier in the fourth RU is the same as the relative position of the second pilot subcarrier in the second RU. An identifier of the fourth RU and the identifier of the second RU may be adjacent or may not be adjacent in the K RU identifiers. This is not limited in this application.

It should be noted that, that the relative position of the third pilot subcarrier in the fourth RU is the same as the relative position of the second pilot subcarrier in the second RU may be understood as that relative positions of all pilot subcarriers in the fourth RU are the same as relative positions of all pilot subcarriers in the second RU.

Optionally, the identifier of the second RU is the (M₁+N₁)^{th} identifier in the K RU identifiers, and the identifier of the fourth RU is an (M₁+N₁+p)^{th} identifier in the K RU identifiers, where p is a positive integer, and M₁+N₁+p is a positive integer less than or equal to K.

The second pilot subcarrier includes an (M₁+N₁)^{th} subcarrier in the third cyclic unit and an (M₁+N₁)^{th} subcarrier in the fourth cyclic unit. The third pilot subcarrier includes an (M₁+N₁+p)^{th} subcarrier in the third cyclic unit and an (M₁+N₁+p)^{th} subcarrier in the fourth cyclic unit.

Table 9 is used as an example, and p=1. For example, a subcarrier whose subcarrier number is -73 is a pilot subcarrier of the 26-tone RU 3, for example, a 1^{st} pilot subcarrier of the 26-tone RU 3. A subcarrier whose subcarrier number is -72 is a pilot subcarrier of the 26-tone RU 8, for example, a 1^{st} pilot subcarrier of the 26-tone RU 8. The 26-tone RU 3 may be understood as the second RU. The 26-tone RU 8 may be understood as the fourth RU.

It should be understood that, with reference to Table 9, the second RU may be the 26-tone RU 1, and the fourth RU may be the 26-tone RU 6. Alternatively, the second RU may be the 26-tone RU 3, and the fourth RU may be the 26-tone RU 8. Alternatively, the second RU may be the 26-tone RU 2, and the fourth RU may be the 26-tone RU 7. Alternatively, the second RU may be the 26-tone RU 4, and the fourth RU may be the 26-tone RU 9.

It should be understood that in Table 9, p=1 is used as an example for description. Certainly, p>1 may alternatively be used. This is not limited in this application.

It may be understood that, in Embodiment 1, it can be learned from Table 8 or Table 9 that, for the pilot subcarriers of the K RUs, distribution of the pilot subcarriers may correspond to the cyclic unit, for example, is performed in the arrangement sequence of 1, 6, 3, 8, 2, 7, 4, 9, and 5.

Certainly, distribution of pilot subcarriers may alternatively be arranged in another cyclic sequence. There may be a plurality of other cyclic sequences, for example, 9, 5, 1, 6, 3, 8, 2, 7, and 4; or 5, 9, 4, 7, 2, 8, 3, 6, and 1; or 3, 8, 1, 6, 4, 9, 2, 7, and 5. In addition, a cycle may alternatively be performed based on 8 numbers, for example, in a cycle sequence of 1, 6, 3, 8, 2, 7, 4, and 9. This is not limited in this application.

It may be understood that, in Embodiment 1, it can be learned from Table 8 that, for the pilot subcarriers of the K RUs, that relative positions of pilot subcarriers of different RUs in the corresponding RUs are different may be understood as that there are a total of K types of RUs. It can be learned from Table 9 that, for the pilot subcarriers of the K RUs, pilot subcarriers of a part of RUs have a same relative position in the corresponding RUs, and pilot subcarriers of another part of RUs have a same relative position in the corresponding RUs. For different parts of RUs, that pilot subcarriers of different RUs have different relative positions in the corresponding RUs may be understood as that there are a total of K/2 types of RUs, or a rounding-up operation is performed on K/2.

### Embodiment 2

A core idea of Embodiment 2: There are a specific quantity (for example, less than K) of relative positions as defined, and pilot subcarriers of a part of K RUs may be obtained by performing a shift operation on the relative positions. Further, after the shift processing, fine tuning may be allowed. This manner may be referred to as a "shift-based pilot position design".

In Embodiment 2, two manners (the following Manner 1 and Manner 2) are used for description.

Manner 1: A relative position of a pilot subcarrier of an RU in the RU is defined, and a shift operation is performed based on the relative position.

First, initial parameters are described.

An initial parameter k may be understood as that the initial parameter k indicates an RU reference identifier, and the RU reference identifier is a k^{th} identifier in K RU identifiers. The parameter k is a positive integer less than or equal to K.

Initial parameters X₁ and Y₁ may be understood as that the initial parameters X₁ and Y₁ correspond to a first relative position, and the first relative position indicates that an X₁^{th} subcarrier and a Y₁^{th} subcarrier of the RU are pilot subcarriers. Values of the parameters X₁ and Y₁ are different, and both are positive integers less than or equal to K. The initial parameters X₁ and Y₁ may be denoted as [X₁, Y₁].

It should be noted that, in Manner 1 of Embodiment 2, in an example, k=2, X₁=7, and Y₁=20.

It should be noted that, in Manner 1 of Embodiment 2, the initial parameters may be predefined or preconfigured.

Then, pilot subcarriers of each RU are described based on the foregoing initial parameters.

An identifier of a first RU is an M₂^{th} RU identifier in the K RU identifiers. M₂ is a positive integer less than or equal to K. The first pilot subcarrier includes an (X₁-a)^{th} subcarrier in the first RU and a (Y₁-a)^{th} subcarrier in the first RU, where a=k-M₂.

An identifier of a second RU is an N₂^{th} RU identifier in the K RU identifiers, and N₂ is a positive integer less than or equal to K. The second pilot subcarrier includes an (X₁-b)^{th} subcarrier in the second RU and a (Y₁-b)^{th} subcarrier in the second RU, where b=k-N₂.

It may be understood that each of the K RUs is determined based on the initial parameters X₁ and Y₁ (or understood as the first relative position).

In a possible implementation, for example, the first bandwidth is 20 MHz. When k=2, X₁=7, and Y₁=20, the pilot subcarriers of each RU are shown in Table 10.

**Table 10**

| Colu mn 1 | Colu mn 2 | Colu mn 3 | Colu mn 4 | Colu mn 5 | Colu mn 6 | Colu mn 7 | Colu mn 8 | Colu mn 9 | Colu mn 10 | Colu mn 11 | Colu mn 12 | Colu mn 13 | Colu mn 14 | Colu mn 15 | Colu mn 16 |
|---|---|---|---|---|---|---|---|---|---|---|---|---|---|---|---|
| -128 | | -96 | 4 | -64 | 3 | -32 | **9** | 0 | DC | 32 | 5 | 64 | **2** | 96 | 1 |
| -127 | | -95 | 9 | -63 | 8 | -31 | 5 | 1 | DC | 33 | 1 | 65 | 7 | 97 | 6 |
| -126 | | -94 | 5 | -62 | **2** | -30 | 1 | 2 | 106-2 | 34 | **6** | 66 | 4 | 98 | 3 |
| -125 | | -93 | 1 | -61 | 7 | -29 | 6 | 3 | 106-1 | 35 | 3 | 67 | 9 | 99 | 8 |
| -124 | | -92 | **6** | -60 | 4 | -28 | 3 | 4 | 9 | 36 | 8 | 68 | 5 | 100 | 2 |
| -123 | | -91 | 3 | -59 | 9 | -27 | 8 | 5 | 5 | 37 | 2 | 69 | 1 | 101 | 7 |
| -122 | | -90 | 8 | -58 | 5 | -26 | 2 | 6 | 1 | 38 | 7 | 70 | 6 | 102 | 4 |
| -121 | | -89 | 2 | -57 | 1 | -25 | 7 | 7 | 6 | 39 | 4 | 71 | 3 | 103 | 9 |
| -120 | 1 | -88 | 7 | -56 | 6 | -24 | 4 | 8 | 3 | 40 | 9 | 72 | 8 | 104 | 5 |
| -119 | 6 | -87 | 4 | -55 | 3 | -23 | 9 | 9 | 8 | 41 | 5 | 73 | 2 | 105 | 1 |
| -118 | 3 | -86 | 9 | -54 | 8 | -22 | **5** | 10 | 2 | 42 | 1 | 74 | **7** | 106 | 6 |
| -117 | 8 | -85 | 5 | -53 | 2 | -21 | 1 | 11 | 7 | 43 | 6 | 75 | 4 | 107 | 3 |
| -116 | 2 | -84 | 1 | -52 | **7** | -20 | 6 | 12 | 4 | 44 | **3** | 76 | 9 | 108 | 8 |
| -115 | 7 | -83 | 6 | -51 | 4 | -19 | 3 | 13 | 9 | 45 | 8 | 77 | 5 | 109 | 2 |
| -114 | 4 | -82 | **3** | -50 | 9 | -18 | 8 | 14 | 5 | 46 | 2 | 78 | 1 | 110 | 7 |
| -113 | 9 | -81 | 8 | -49 | 5 | -17 | 2 | 15 | 1 | 47 | 7 | 79 | 6 | 111 | 4 |
| -112 | 5 | -80 | 2 | -48 | 1 | -16 | 7 | 16 | 6 | 48 | 4 | 80 | 3 | 112 | 9 |
| -111 | 1 | -79 | 7 | -47 | 6 | -15 | 4 | 17 | 3 | 49 | 9 | 81 | 8 | 113 | 5 |
| -110 | 6 | -78 | 4 | -46 | 3 | -14 | 9 | 18 | 8 | 50 | 5 | 82 | 2 | 114 | 1 |
| -109 | 3 | -77 | 9 | -45 | 8 | -13 | 5 | 19 | 2 | 51 | 1 | 83 | 7 | 115 | 6 |
| -108 | 8 | -76 | 5 | -44 | 2 | -12 | 1 | 20 | 7 | 52 | 6 | 84 | **4** | 116 | 3 |
| -107 | 2 | -75 | 1 | -43 | 7 | -11 | 6 | 21 | 4 | 53 | 3 | 85 | **9** | 117 | 8 |
| -106 | 7 | -74 | 6 | -42 | **4** | -10 | 3 | 22 | 9 | 54 | **8** | 86 | 5 | 118 | 2 |
| -105 | 4 | -73 | 3 | -41 | 9 | -9 | 8 | 23 | 5 | 55 | 2 | 87 | 1 | 119 | 7 |
| -104 | 9 | -72 | **8** | -40 | 5 | -8 | 2 | 24 | **1** | 56 | 7 | 88 | 6 | 120 | 4 |
| -103 | 5 | -71 | 2 | -39 | 1 | -7 | 7 | 25 | 6 | 57 | 4 | 89 | 3 | 121 | |
| -102 | **1** | -70 | 7 | -38 | 6 | -6 | 4 | 26 | 3 | 58 | 9 | 90 | 8 | 122 | |
| -101 | 6 | -69 | 4 | -37 | 3 | -5 | 9 | 27 | 8 | 59 | 5 | 91 | 2 | 123 | |
| -100 | 3 | -68 | 9 | -36 | 8 | -4 | 5 | 28 | 2 | 60 | 1 | 92 | 7 | 124 | |
| -99 | 8 | -67 | 5 | -35 | 2 | -3 | 106-1 | 29 | 7 | 61 | 6 | 93 | 4 | 125 | |
| -98 | 2 | -66 | 1 | -34 | 7 | -2 | 106-2 | 30 | 4 | 62 | 3 | 94 | 9 | 126 | |
| -97 | 7 | -65 | 6 | -33 | 4 | -1 | DC | 31 | 9 | 63 | 8 | 95 | **5** | 127 | |

In Table 10, odd-numbered columns (such as columns 1/3/5/7/9/11/13/15) show subcarrier numbers, and even-numbered columns (such as columns 2/4/6/8/10/12/14/16) show RU numbers, direct current subcarriers, other subcarriers, or the like.

In Table 10, numbers underlined in bold indicate positions of pilot subcarriers in different RUs. Examples are as follows:
In the 26-tone RU 2, the 7^{th} subcarrier and the 20^{th} subcarrier in the 26-tone RU 2 are pilot subcarriers.

In the 26-tone RU 8, the 6^{th} subcarrier and the 19^{th} subcarrier in the 26-tone RU 8 are pilot subcarriers.

In the 26-tone RU 3, the 5^{th} subcarrier and the 18^{th} subcarrier in the 26-tone RU 3 are pilot subcarriers.

In the 26-tone RU 6, the 4^{th} subcarrier and the 17^{th} subcarrier in the 26-tone RU 6 are pilot subcarriers.

In the 26-tone RU 1, the 3^{rd} subcarrier and the 16^{th} subcarrier in the 26-tone RU 1 are pilot subcarriers.

In the 26-tone RU 7, the 8^{th} subcarrier and the 21^{st} subcarrier in the 26-tone RU 7 are pilot subcarriers.

In the 26-tone RU 4, the 9^{th} subcarrier and the 22^{nd} subcarrier in the 26-tone RU 4 are pilot subcarriers.

In the 26-tone RU 9, the 10^{th} subcarrier and the 23^{rd} subcarrier in the 26-tone RU 9 are pilot subcarriers.

In the 26-tone RU 5, the 11^{th} subcarrier and the 24^{th} subcarrier in the 26-tone RU 5 are pilot subcarriers.

With reference to Table 10, the first RU may be the 26-tone RU 1, and the second RU may be the 26-tone RU 6. In this case, the first subcarrier includes a 3^{rd} subcarrier and a 16^{th} subcarrier of the first RU, and the second subcarrier includes a 4^{th} subcarrier and a 17^{th} subcarrier of the second RU.

Alternatively, the first RU may be the 26-tone RU 6, and the second RU may be the 26-tone RU 3. In this case, the first subcarrier includes a 4^{th} subcarrier and a 17^{th} subcarrier of the first RU, and the second subcarrier includes a 5^{th} subcarrier and an 18^{th} subcarrier of the second RU.

Alternatively, the first RU may be the 26-tone RU 3, and the second RU may be the 26-tone RU 8. In this case, the first subcarrier includes a 5^{th} subcarrier and an 18^{th} subcarrier of the first RU, and the second subcarrier includes a 6^{th} subcarrier and a 19^{th} subcarrier of the second RU.

Alternatively, the first RU may be the 26-tone RU 8, and the second RU may be the 26-tone RU 2. In this case, the first subcarrier includes a 6^{th} subcarrier and a 19^{th} subcarrier of the first RU, and the second subcarrier includes a 7^{th} subcarrier and a 20^{th} subcarrier of the second RU.

Alternatively, the first RU may be the 26-tone RU 2, and the second RU may be the 26-tone RU 7. In this case, the first subcarrier includes a 7^{th} subcarrier and a 20^{th} subcarrier of the first RU, and the second subcarrier includes an 8^{th} subcarrier and a 21^{st} subcarrier of the second RU.

Alternatively, the first RU may be the 26-tone RU 7, and the second RU may be the 26-tone RU 4. In this case, the first subcarrier includes an 8^{th} subcarrier and a 21^{st} subcarrier of the first RU, and the second subcarrier includes a 9^{th} subcarrier and a 22^{nd} subcarrier of the second RU.

Alternatively, the first RU may be the 26-tone RU 4, and the second RU may be the 26-tone RU 9. In this case, the first subcarrier includes a 9^{th} subcarrier and a 22^{nd} subcarrier of the first RU, and the second subcarrier includes a 10^{th} subcarrier and a 23^{rd} subcarrier of the second RU.

Alternatively, the first RU may be the 26-tone RU 9, and the second RU may be the 26-tone RU 5. In this case, the first subcarrier includes a 10^{th} subcarrier and a 23^{rd} subcarrier of the first RU, and the second subcarrier includes an 11^{th} subcarrier and a 24^{th} subcarrier of the second RU.

It can be learned from Table 10 that pilot subcarriers of the nine 26-tone RUs are distributed in a plurality of cyclic units, and one cyclic unit includes a maximum of two pilot subcarriers. In comparison with the case in which nine pilot subcarriers are centralized in Table 7, in this application, the pilot subcarriers can be more scattered, and a maximum of two pilot subcarriers are adjacent. This helps reduce a possibility of narrowband interference.

Manner 2: Relative positions of pilot subcarriers of two RUs in the RUs are defined, and a shift operation is performed based on the two relative positions.

First, initial parameters are described.

An initial parameter k may be understood as that the initial parameter k indicates an RU reference identifier, and the RU reference identifier is a k^{th} identifier in K RU identifiers. The parameter k is a positive integer less than or equal to K.

Initial parameters X₁ and Y₁ may be understood as that the initial parameters X₁ and Y₁ correspond to a first relative position, and the first relative position indicates that an X₁^{th} subcarrier and a Y₁^{th} subcarrier of the RU are pilot subcarriers. Values of the parameters X₁ and Y₁ are different, and both are positive integers less than or equal to K. The initial parameters X₁ and Y₁ may be denoted as [X₁, Y₁].

Initial parameters X₂ and Y₂ may be understood as that the initial parameters X₂ and Y₂ correspond to a second relative position, and the second relative position indicates that an X₂^{th} subcarrier and a Y₂^{th} subcarrier of the RU are pilot subcarriers. Values of the parameters X₂ and Y₂ are different, and both are positive integers less than or equal to K. The initial parameters X₂ and Y₂ may be denoted as [X₂, Y₂].

In Manner 2, both the initial parameters X₁ and Y₁ are associated with a first part of identifiers in the K RU identifiers, and both the initial parameters X₂ and Y₂ are associated with a second part of identifiers in the K RU identifiers. For example, the first bandwidth is 20 MHz. The first part of identifiers in the K RU identifiers includes 1, 6, 3, 8, 2, 7, and 4, and the second part of identifiers in the K RU identifiers includes 9 and 5.

It should be noted that, in Manner 2 of Embodiment 2, in an example, k=2, X₁=7, Y₁=20, X₂=7, and Y₂=21. Certainly, values of X₁ and X₂ are different, and/or values of Y₁ and Y₂ are different. This is not limited in this application.

It should be noted that, in Manner 2 of Embodiment 2, the initial parameters may be predefined or preconfigured.

Then, pilot subcarriers of each RU are described based on the foregoing initial parameters.

An identifier of a first RU is an M₂^{th} RU identifier in the K RU identifiers. M₂ is a positive integer less than or equal to K. An identifier of a second RU is an N₂^{th} RU identifier in the K RU identifiers. N₂ is a positive integer less than or equal to K.

Optionally, if the identifier of the first RU is included in the first part of identifiers, the first pilot subcarrier includes an (X₁-a)^{th} subcarrier in the first RU and a (Y₁-a)^{th} subcarrier in the first RU, where a=k-M₂.

If the identifier of the second RU is included in the first part of identifiers, the second pilot subcarrier includes an (X₁-b)^{th} subcarrier in the second RU and a (Y₁-b)^{th} subcarrier in the second RU, where b=k-N₂.

It may be understood that the first RU or the second RU is determined based on the initial parameters X1 and Y1 (or understood as the first relative position).

Optionally, if the identifier of the first RU is included in the first part of identifiers, the first pilot subcarrier includes an (X₁-a)^{th} subcarrier in the first RU and a (Y₁-a)^{th} subcarrier in the first RU, where a=k-M₂.

If the identifier of the second RU is included in the second part of identifiers, the second pilot subcarrier includes an (X₂-c)^{th} subcarrier in the second RU and a (Y₂-c)^{th} subcarrier in the second RU, where c=k-N₂.

It may be understood that the first RU is determined based on the initial parameters X₁ and Y₁ (or understood as the first relative position), and the second RU is determined based on the initial parameters X₂ and Y₂ (or understood as the second relative position).

For example, the first bandwidth is 20 MHz. When k=2, X₁=7, Y₁=20, X₂=7, and Y₂=21, the pilot subcarriers of each RU are shown in Table 8.

With reference to Table 8, the first RU may be the 26-tone RU 1, and the second RU may be the 26-tone RU 6. In this case, the first subcarrier includes a 3^{rd} subcarrier and a 16^{th} subcarrier of the first RU, and the second subcarrier includes a 4^{th} subcarrier and a 17^{th} subcarrier of the second RU.

Alternatively, the first RU may be the 26-tone RU 6, and the second RU may be the 26-tone RU 3. In this case, the first subcarrier includes a 4^{th} subcarrier and a 17^{th} subcarrier of the first RU, and the second subcarrier includes a 5^{th} subcarrier and an 18^{th} subcarrier of the second RU.

Alternatively, the first RU may be the 26-tone RU 3, and the second RU may be the 26-tone RU 8. In this case, the first subcarrier includes a 5^{th} subcarrier and an 18^{th} subcarrier of the first RU, and the second subcarrier includes a 6^{th} subcarrier and a 19^{th} subcarrier of the second RU.

Alternatively, the first RU may be the 26-tone RU 8, and the second RU may be the 26-tone RU 2. In this case, the first subcarrier includes a 6^{th} subcarrier and a 19^{th} subcarrier of the first RU, and the second subcarrier includes a 7^{th} subcarrier and a 20^{th} subcarrier of the second RU.

Alternatively, the first RU may be the 26-tone RU 2, and the second RU may be the 26-tone RU 7. In this case, the first subcarrier includes a 7^{th} subcarrier and a 20^{th} subcarrier of the first RU, and the second subcarrier includes an 8^{th} subcarrier and a 21^{st} subcarrier of the second RU.

Alternatively, the first RU may be the 26-tone RU 7, and the second RU may be the 26-tone RU 4. In this case, the first subcarrier includes an 8^{th} subcarrier and a 21^{st} subcarrier of the first RU, and the second subcarrier includes a 9^{th} subcarrier and a 22^{nd} subcarrier of the second RU.

Alternatively, the first RU may be the 26-tone RU 4, and the second RU may be the 26-tone RU 9. In this case, the first subcarrier includes a 9^{th} subcarrier and a 22^{nd} subcarrier of the first RU, and the second subcarrier includes a 10^{th} subcarrier and a 24^{th} subcarrier of the second RU.

Alternatively, the first RU may be the 26-tone RU 9, and the second RU may be the 26-tone RU 5. In this case, the first subcarrier includes a 10^{th} subcarrier and a 24^{th} subcarrier of the first RU, and the second subcarrier includes an 11^{th} subcarrier and a 25^{th} subcarrier of the second RU.

### Embodiment 3

A core idea of Embodiment 3 is that for K RUs, at least two types of RUs may be defined. A quantity of RU types is greater than or equal to 2, and is less than K. It may be understood that at least two RUs in the K RUs belong to a same type. The RU type is related to a relative position of a pilot subcarrier in an RU.

Next, two examples (Example 1 and Example 2) are further used for description.

Example 1: Two types of RUs may be defined. To be specific, a first part of RUs in the K RUs belong to one RU type, and the first part of RUs includes a first RU. A second part of RUs in the K RUs belongs to another RU type, and the second part of RUs includes at least one of a second RU, a fifth RU, and a sixth RU. The fifth RU includes a fourth pilot subcarrier, and the sixth RU includes a fifth pilot subcarrier.

From a perspective of cyclic units, a cyclic unit in which the fourth pilot subcarrier is located is the same as a cyclic unit in which a second pilot subcarrier is located. It may be understood that all cyclic units in which pilot subcarriers of the fifth RU are located are the same as all cyclic units in which pilot subcarriers of the second RU are located. A cyclic unit in which the fifth pilot subcarrier is located is different from the cyclic unit in which the second pilot subcarrier is located. It may be understood that at least one of all cyclic units in which pilot subcarriers of the sixth RU are located is different from all the cyclic units in which the pilot subcarriers of the second RU are located.

From a perspective of relative positions, a relative position of the fourth pilot subcarrier in the fifth RU is the same as a relative position of the second pilot subcarrier in the second RU. It may be understood that relative positions of all the pilot subcarriers in the fifth RU are the same as relative positions of all the pilot subcarriers in the second RU.

A relative position of the fifth pilot subcarrier in the sixth RU is different from the relative position of the second pilot subcarrier in the second RU. It may be understood that a relative position of at least one pilot subcarrier of the sixth RU is different from the relative positions of all the pilot subcarriers of the second RU.

For the first part of RUs, the first RU is used as an example for description.

The first RU includes a first pilot subcarrier. A relative position of the first pilot subcarrier in the first RU is as follows: The first pilot subcarrier includes an A₁^{th} subcarrier and a B₁^{th} subcarrier in the first RU.

For the second part of RUs, the second RU, the fifth RU, and the sixth RU are used as an example for description.

The second RU includes the second pilot subcarrier. The relative position of the second pilot subcarrier in the second RU is as follows: The second pilot subcarrier includes an A₂^{th} subcarrier and a B₂^{th} subcarrier in the second RU.

The fifth RU includes the fourth pilot subcarrier. A relative position of the fourth pilot subcarrier in the fifth RU is as follows: The fourth pilot subcarrier includes an A₂^{th} subcarrier and a B₂^{th} subcarrier in the fifth RU.

The sixth RU includes the fifth pilot subcarrier. A relative position of the fifth pilot subcarrier in the sixth RU is as follows: The fifth pilot subcarrier includes an A₃^{th} subcarrier and a B₃^{th} subcarrier in the sixth RU.

It should be noted that, from a perspective of cyclic units, pilot subcarriers of each RU are described as follows:
First, the A₁^{th} subcarrier in the first RU and the B₁^{th} subcarrier in the first RU belong to different cyclic units.
Second, the A₂^{th} subcarrier in the second RU and the B₂^{th} subcarrier in the second RU belong to different cyclic units.
Third, the A₂^{th} subcarrier in the fifth RU and the A₂^{th} subcarrier in the second RU belong to a same cyclic unit. In addition, the B₂^{th} subcarrier in the fifth RU and the B₂^{th} subcarrier in the second RU belong to a same cyclic unit.
Fourth, the A₃^{th} subcarrier in the sixth RU and the A₂^{th} subcarrier in the second RU may belong to a same cyclic unit. In addition, the B₃^{th} subcarrier in the sixth RU and the B₂^{th} subcarrier in the second RU belong to different cyclic units.

It should be noted that values of the parameters A₁, B₁, A₂, and B₂ are described as follows: In an example, A₁=6, B₁=20, A₂=7, and B₂=21. Alternatively, in another example, A₁=6, B₁=21, A₂=7, and B₂=20.

For example, the first bandwidth is 20 MHz, and the K RUs are nine 26-tone RUs. The first part of RUs may include a 26-tone RU 1, a 26-tone RU 6, a 26-tone RU 3, and a 26-tone RU 8, and the second part of RUs may include a 26-tone RU 2, a 26-tone RU 7, a 26-tone RU 4, a 26-tone RU 9, and a 26-tone RU 5. An identifier of the first RU is one of the following: 1, 6, 3, and 8. An identifier of the second RU is one of the following: 2, 7, and 4. An identifier of the fifth RU is one of the following: 2, 7, and 4. An identifier of the sixth RU is one of the following: 9 and 5.

In other words, in an example, A₁=6 and B₁=20 are applicable to the first part of RUs, and A₂=7 and B₂=21 are applicable to the second part of RUs. Alternatively, on the contrary, A₁=6 and B₁=20 are applicable to the second part of RUs, and A₂=7 and B₂=21 are applicable to the first part of RUs.

In another example, A₁=6 and B₁=21 are applicable to the first part of RUs, and A₂=7 and B₂=20 are applicable to the second part of RUs. Alternatively, on the contrary, A₁=6 and B₁=21 are applicable to the second part of RUs, and A₂=7 and B₂=20 are applicable to the first part of RUs.

In a possible implementation, for example, the first bandwidth is 20 MHz, A₁=6, B₁=20, A₂=7, and B₂=21. Distribution of the pilot subcarriers of each RU is shown in Table 11.

**Table 11**

| Colu mn 1 | Colu mn 2 | Colu mn 3 | Colu mn 4 | Colu mn 5 | Colu mn 6 | Colu mn 7 | Colu mn 8 | Colu mn 9 | Colu mn 10 | Colu mn 11 | Colu mn 12 | Colu mn 13 | Colu mn 14 | Colu mn 15 | Colu mn 16 |
|---|---|---|---|---|---|---|---|---|---|---|---|---|---|---|---|
| -128 | | -96 | 4 | -64 | 3 | -32 | 9 | 0 | DC | 32 | 5 | 64 | 2 | 96 | 1 |
| -127 | | -95 | 9 | -63 | 8 | -31 | 5 | 1 | DC | 33 | 1 | 65 | 7 | 97 | 6 |
| -126 | | -94 | 5 | -62 | **2** | -30 | 1 | 2 | 106-2 | 34 | 6 | 66 | 4 | 98 | 3 |
| -125 | | -93 | 1 | -61 | **7** | -29 | 6 | 3 | 106-1 | 35 | 3 | 67 | **9** | 99 | 8 |
| -124 | | -92 | 6 | -60 | **4** | -28 | 3 | 4 | 9 | 36 | 8 | 68 | **5** | 100 | 2 |
| -123 | | -91 | 3 | -59 | **9** | -27 | 8 | 5 | 5 | 37 | 2 | 69 | 1 | 101 | 7 |
| -122 | | -90 | 8 | -58 | **5** | -26 | 2 | 6 | 1 | 38 | 7 | 70 | 6 | 102 | 4 |
| -121 | | -89 | 2 | -57 | 1 | -25 | 7 | 7 | 6 | 39 | 4 | 71 | 3 | 103 | 9 |
| -120 | 1 | -88 | 7 | -56 | 6 | -24 | 4 | 8 | 3 | 40 | 9 | 72 | 8 | 104 | 5 |
| -119 | 6 | -87 | 4 | -55 | 3 | -23 | 9 | 9 | 8 | 41 | 5 | 73 | **2** | 105 | 1 |
| -118 | 3 | -86 | 9 | -54 | 8 | -22 | 5 | 10 | 2 | 42 | 1 | 74 | **7** | 106 | 6 |
| -117 | 8 | -85 | 5 | -53 | 2 | -21 | 1 | 11 | 7 | 43 | 6 | 75 | **4** | 107 | 3 |
| -116 | 2 | -84 | 1 | -52 | 7 | -20 | 6 | 12 | 4 | 44 | 3 | 76 | 9 | 108 | 8 |
| -115 | 7 | -83 | 6 | -51 | 4 | -19 | 3 | 13 | 9 | 45 | 8 | 77 | 5 | 109 | 2 |
| -114 | 4 | -82 | 3 | -50 | 9 | -18 | 8 | 14 | 5 | 46 | 2 | 78 | 1 | 110 | 7 |
| -113 | 9 | -81 | 8 | -49 | 5 | -17 | 2 | 15 | 1 | 47 | 7 | 79 | 6 | 111 | 4 |
| -112 | 5 | -80 | 2 | -48 | 1 | -16 | 7 | 16 | 6 | 48 | 4 | 80 | 3 | 112 | 9 |
| -111 | 1 | -79 | 7 | -47 | 6 | -15 | 4 | 17 | 3 | 49 | 9 | 81 | 8 | 113 | 5 |
| -110 | 6 | -78 | 4 | -46 | 3 | -14 | 9 | 18 | 8 | 50 | 5 | 82 | 2 | 114 | 1 |
| -109 | 3 | -77 | 9 | -45 | 8 | -13 | 5 | 19 | 2 | 51 | 1 | 83 | 7 | 115 | 6 |
| -108 | 8 | -76 | 5 | -44 | 2 | -12 | 1 | 20 | 7 | 52 | 6 | 84 | 4 | 116 | 3 |
| -107 | 2 | -75 | **1** | -43 | 7 | -11 | 6 | 21 | 4 | 53 | 3 | 85 | 9 | 117 | 8 |
| -106 | 7 | -74 | **6** | -42 | 4 | -10 | 3 | 22 | 9 | 54 | 8 | 86 | 5 | 118 | 2 |
| -105 | 4 | -73 | **3** | -41 | 9 | -9 | 8 | 23 | 5 | 55 | 2 | 87 | 1 | 119 | 7 |
| -104 | 9 | -72 | **8** | -40 | 5 | -8 | 2 | 24 | 1 | 56 | 7 | 88 | 6 | 120 | 4 |
| -103 | 5 | -71 | 2 | -39 | 1 | -7 | 7 | 25 | 6 | 57 | 4 | 89 | 3 | 121 | |
| -102 | 1 | -70 | 7 | -38 | 6 | -6 | 4 | 26 | 3 | 58 | 9 | 90 | 8 | 122 | |
| -101 | 6 | -69 | 4 | -37 | 3 | -5 | 9 | 27 | 8 | 59 | 5 | 91 | 2 | 123 | |
| -100 | 3 | -68 | 9 | -36 | 8 | -4 | 5 | 28 | 2 | 60 | **1** | 92 | 7 | 124 | |
| -99 | 8 | -67 | 5 | -35 | 2 | -3 | 106-1 | 29 | 7 | 61 | **6** | 93 | 4 | 125 | |
| -98 | 2 | -66 | 1 | -34 | 7 | -2 | 106-2 | 30 | 4 | 62 | **3** | 94 | 9 | 126 | |
| -97 | 7 | -65 | 6 | -33 | 4 | -1 | DC | 31 | 9 | 63 | **8** | 95 | 5 | 127 | |

In Table 11, odd-numbered columns (such as columns 1/3/5/7/9/11/13/15) show subcarrier numbers, and even-numbered columns (such as columns 2/4/6/8/10/12/14/16) show RU numbers, direct current subcarriers, other subcarriers, or the like.

In Table 11, numbers underlined in bold indicate positions of pilot subcarriers in different RUs. Examples are as follows:
In the 26-tone RU 1, the 6^{th} subcarrier and the 20^{th} subcarrier in the 26-tone RU 1 are pilot subcarriers.

In the 26-tone RU 6, the 6^{th} subcarrier and the 20^{th} subcarrier in the 26-tone RU 6 are pilot subcarriers.

In the 26-tone RU 3, the 6^{th} subcarrier and the 20^{th} subcarrier in the 26-tone RU 3 are pilot subcarriers.

In the 26-tone RU 8, the 6^{th} subcarrier and the 20^{th} subcarrier in the 26-tone RU 8 are pilot subcarriers.

In the 26-tone RU 2, the 7^{th} subcarrier and the 21^{st} subcarrier in the 26-tone RU 2 are pilot subcarriers.

In the 26-tone RU 7, the 7^{th} subcarrier and the 21^{st} subcarrier in the 26-tone RU 7 are pilot subcarriers.

In the 26-tone RU 4, the 7^{th} subcarrier and the 21^{st} subcarrier in the 26-tone RU 4 are pilot subcarriers.

In the 26-tone RU 9, the 7^{th} subcarrier and the 21^{st} subcarrier in the 26-tone RU 9 are pilot subcarriers.

In the 26-tone RU 5, the 7^{th} subcarrier and the 21^{st} subcarrier in the 26-tone RU 5 are pilot subcarriers.

It can be learned from Table 11 that pilot subcarriers of the nine 26-tone RUs are centralized in five parts, namely, a frequency range of subcarriers numbered from -75 to -72, a frequency range of subcarriers numbered from -62 to -58, a frequency range of subcarriers numbered from 60 to 63, a frequency range of subcarriers numbered from 67 to 68, and a frequency range of subcarriers numbered from 73 to 75. In comparison with the case in which nine pilot subcarriers are centralized in Table 7, in this application, the pilot subcarriers can be more scattered, for example, scattered into five parts, and a quantity of pilot subcarriers in each part is reduced. This helps reduce a possibility of narrowband interference.

It should be noted that in the second part of RUs, although relative positions of pilot subcarriers in different RUs are consistent, pilot subcarriers in different RUs are located in different cyclic units. For example, pilot subcarriers of the 26-tone RU 2, the 26-tone RU 7, and the 26-tone RU 4 are all distributed in the cyclic unit 7 and the cyclic unit 21. Pilot subcarriers of the 26-tone RU 9 and the 26-tone RU 5 are all distributed in the cyclic unit 7 and the cyclic unit 20. This is because the subcarrier whose subcarrier number is 4 is a subcarrier of the 26-tone RU 9. Therefore, the 21^{st} subcarrier of the 26-tone RU 9 appears in the cyclic unit 20. Similarly, the subcarrier whose subcarrier number is 5 is a subcarrier of the 26-tone RU 5. Therefore, the 21^{st} subcarrier of the 26-tone RU 5 appears in the cyclic unit 20.

### Example 2

In Example 2, different RU types mean that relative positions of pilot subcarriers in RUs are different. For example, an RU type 1 may be understood as that a relative position of a pilot subcarrier in an RU is a relative position 1. An RU type 2 may be understood as that a relative position of a pilot subcarrier in an RU is a relative position 2. The relative position 1 is different from the relative position 2. In other words, for a same part of RUs, relative positions of pilot subcarriers in different RUs are the same in the corresponding RUs. For different parts of RUs, relative positions of pilot subcarriers in different RUs are different in the corresponding RUs.

Three types of RUs may be defined. To be specific, a first part of RUs in the K RUs belong to one RU type, and the first part of RUs includes a first RU. A second part of RUs in the K RUs belongs to another RU type, and the second part of RUs includes a second RU. A third part of RUs in the K RUs belongs to another RU type, and the third part of RUs includes a seventh RU. The seventh RU includes a sixth pilot subcarrier.

From a perspective of cyclic units, a cyclic unit in which the sixth pilot subcarrier is located is the same as a cyclic unit in which a second pilot subcarrier is located. It may be understood that all cyclic units in which pilot subcarriers of the seventh RU are located are the same as all cyclic units in which pilot subcarriers of the second RU are located.

From a perspective of relative positions, a relative position of the sixth pilot subcarrier in the seventh RU is different from a relative position of the second pilot subcarrier in the second RU. It may be understood that a relative position of at least one pilot subcarrier of the seventh RU is different from the relative positions of all the pilot subcarriers of the second RU.

For the first part of RUs, the first RU is used as an example for description.

The first RU includes a first pilot subcarrier. A relative position of the first pilot subcarrier in the first RU is as follows: The first pilot subcarrier includes an A₁^{th} subcarrier and a B₁^{th} subcarrier in the first RU.

For the second part of RUs, the second RU is used as an example for description.

The second RU includes the second pilot subcarrier. The relative position of the second pilot subcarrier in the second RU is as follows: The second pilot subcarrier includes an A₂^{th} subcarrier and a B₂^{th} subcarrier in the second RU.

For the third part of RUs, the seventh RU is used as an example for description.

The seventh RU includes the sixth pilot subcarrier. The relative position of the sixth pilot subcarrier in the seventh RU is as follows: The sixth pilot subcarrier includes an A₄^{th} subcarrier and a B₄^{th} subcarrier in the seventh RU.

It should be noted that, from a perspective of cyclic units, pilot subcarriers of each RU are described as follows:
First, the A₁^{th} subcarrier in the first RU and the B₁^{th} subcarrier in the first RU belong to different cyclic units.
Second, the A₂^{th} subcarrier in the second RU and the B₂^{th} subcarrier in the second RU belong to different cyclic units.
Third, the A₄^{th} subcarrier in the seventh RU and the A₂^{th} subcarrier in the second RU may belong to a same cyclic unit. In addition, the B₄^{th} subcarrier in the seventh RU and the B₂^{th} subcarrier in the second RU belong to a same cyclic unit.

It should be noted that values of the parameters A₁, B₁, A₂, B₂, A₄, and B₄ are described as follows: In an example, A₁=6, B₁=20, A₂=7, B₂=21, A₄=7, and B₄=22. Alternatively, in another example, A₁=6, B₁=21, A₂=7, B₂=20, A₄=7, and B₄=21.

For example, the first bandwidth is 20 MHz, and the K RUs are nine 26-tone RUs. The first part of RUs may include a 26-tone RU 1, a 26-tone RU 6, a 26-tone RU 3, and a 26-tone RU 8; the second part of RUs may include a 26-tone RU 2, a 26-tone RU 7 and a 26-tone RU 4; and the third part of RUs may include a 26-tone RU 9 and a 26-tone RU 5. An identifier of the first RU is one of the following: 1, 6, 3, and 8. An identifier of the second RU is one of the following: 2, 7, and 4. An identifier of the seventh RU is one of the following: 9 and 5.

In other words, in an example, A₁=6 and B₁=20 are applicable to the first part of RUs, A₂=7 and B₂=21 are applicable to the second part of RUs, and A₂=7 and B₂=22 are applicable to the third part of RUs.

In a possible implementation, for example, the first bandwidth is 20 MHz, A₁=6, B₁=20, A₂=7, B₂=21, A₂=7, and B₂=22. Distribution of the pilot subcarriers of each RU is shown in Table 12.

**Table 12**

| Colu mn 1 | Colu mn 2 | Colu mn 3 | Colu mn 4 | Colu mn 5 | Colu mn 6 | Colu mn 7 | Colu mn 8 | Colu mn 9 | Colu mn 10 | Colu mn 11 | Colu mn 12 | Colu mn 13 | Colu mn 14 | Colu mn 15 | Colu mn 16 |
|---|---|---|---|---|---|---|---|---|---|---|---|---|---|---|---|
| -128 | | -96 | 4 | -64 | 3 | -32 | 9 | 0 | DC | 32 | 5 | 64 | 2 | 96 | 1 |
| -127 | | -95 | 9 | -63 | 8 | -31 | 5 | 1 | DC | 33 | 1 | 65 | 7 | 97 | 6 |
| -126 | | -94 | 5 | -62 | **2** | -30 | 1 | 2 | 106-2 | 34 | 6 | 66 | 4 | 98 | 3 |
| -125 | | -93 | 1 | -61 | **7** | -29 | 6 | 3 | 106-1 | 35 | 3 | 67 | 9 | 99 | 8 |
| -124 | | -92 | 6 | -60 | **4** | -28 | 3 | 4 | 9 | 36 | 8 | 68 | 5 | 100 | 2 |
| -123 | | -91 | 3 | -59 | **9** | -27 | 8 | 5 | 5 | 37 | 2 | 69 | 1 | 101 | 7 |
| -122 | | -90 | 8 | -58 | **5** | -26 | 2 | 6 | 1 | 38 | 7 | 70 | 6 | 102 | 4 |
| -121 | | -89 | 2 | -57 | 1 | -25 | 7 | 7 | 6 | 39 | 4 | 71 | 3 | 103 | 9 |
| -120 | 1 | -88 | 7 | -56 | 6 | -24 | 4 | 8 | 3 | 40 | 9 | 72 | 8 | 104 | 5 |
| -119 | 6 | -87 | 4 | -55 | 3 | -23 | 9 | 9 | 8 | 41 | 5 | 73 | **2** | 105 | 1 |
| -118 | 3 | -86 | 9 | -54 | 8 | -22 | 5 | 10 | 2 | 42 | 1 | 74 | **7** | 106 | 6 |
| -117 | 8 | -85 | 5 | -53 | 2 | -21 | 1 | 11 | 7 | 43 | 6 | 75 | **4** | 107 | 3 |
| -116 | 2 | -84 | 1 | -52 | 7 | -20 | 6 | 12 | 4 | 44 | 3 | 76 | **9** | 108 | 8 |
| -115 | 7 | -83 | 6 | -51 | 4 | -19 | 3 | 13 | 9 | 45 | 8 | 77 | **5** | 109 | 2 |
| -114 | 4 | -82 | 3 | -50 | 9 | -18 | 8 | 14 | 5 | 46 | 2 | 78 | 1 | 110 | 7 |
| -113 | 9 | -81 | 8 | -49 | 5 | -17 | 2 | 15 | 1 | 47 | 7 | 79 | 6 | 111 | 4 |
| -112 | 5 | -80 | 2 | -48 | 1 | -16 | 7 | 16 | 6 | 48 | 4 | 80 | 3 | 112 | 9 |
| -111 | 1 | -79 | 7 | -47 | 6 | -15 | 4 | 17 | 3 | 49 | 9 | 81 | 8 | 113 | 5 |
| -110 | 6 | -78 | 4 | -46 | 3 | -14 | 9 | 18 | 8 | 50 | 5 | 82 | 2 | 114 | 1 |
| -109 | 3 | -77 | 9 | -45 | 8 | -13 | 5 | 19 | 2 | 51 | 1 | 83 | 7 | 115 | 6 |
| -108 | 8 | -76 | 5 | -44 | 2 | -12 | 1 | 20 | 7 | 52 | 6 | 84 | 4 | 116 | 3 |
| -107 | 2 | -75 | **1** | -43 | 7 | -11 | 6 | 21 | 4 | 53 | 3 | 85 | 9 | 117 | 8 |
| -106 | 7 | -74 | **6** | -42 | 4 | -10 | 3 | 22 | 9 | 54 | 8 | 86 | 5 | 118 | 2 |
| -105 | 4 | -73 | **3** | -41 | 9 | -9 | 8 | 23 | 5 | 55 | 2 | 87 | 1 | 119 | 7 |
| -104 | 9 | -72 | **8** | -40 | 5 | -8 | 2 | 24 | 1 | 56 | 7 | 88 | 6 | 120 | 4 |
| -103 | 5 | -71 | 2 | -39 | 1 | -7 | 7 | 25 | 6 | 57 | 4 | 89 | 3 | 121 | |
| -102 | 1 | -70 | 7 | -38 | 6 | -6 | 4 | 26 | 3 | 58 | 9 | 90 | 8 | 122 | |
| -101 | 6 | -69 | 4 | -37 | 3 | -5 | 9 | 27 | 8 | 59 | 5 | 91 | 2 | 123 | |
| -100 | 3 | -68 | 9 | -36 | 8 | -4 | 5 | 28 | 2 | 60 | **1** | 92 | 7 | 124 | |
| -99 | 8 | -67 | 5 | -35 | 2 | -3 | 106-1 | 29 | 7 | 61 | **6** | 93 | 4 | 125 | |
| -98 | 2 | -66 | 1 | -34 | 7 | -2 | 106-2 | 30 | 4 | 62 | **3** | 94 | 9 | 126 | |
| -97 | 7 | -65 | 6 | -33 | 4 | -1 | DC | 31 | 9 | 63 | **8** | 95 | 5 | 127 | |

In Table 12, odd-numbered columns (such as columns 1/3/5/7/9/11/13/15) show subcarrier numbers, and even-numbered columns (such as columns 2/4/6/8/10/12/14/16) show RU numbers, direct current subcarriers, other subcarriers, or the like.

In Table 12, numbers underlined in bold indicate positions of pilot subcarriers in different RUs. Examples are as follows:
In the 26-tone RU 1, the 6^{th} subcarrier and the 20^{th} subcarrier in the 26-tone RU 1 are pilot subcarriers.

In the 26-tone RU 6, the 6^{th} subcarrier and the 20^{th} subcarrier in the 26-tone RU 6 are pilot subcarriers.

In the 26-tone RU 3, the 6^{th} subcarrier and the 20^{th} subcarrier in the 26-tone RU 3 are pilot subcarriers.

In the 26-tone RU 8, the 6^{th} subcarrier and the 20^{th} subcarrier in the 26-tone RU 8 are pilot subcarriers.

In the 26-tone RU 2, the 7^{th} subcarrier and the 21^{st} subcarrier in the 26-tone RU 2 are pilot subcarriers.

In the 26-tone RU 7, the 7^{th} subcarrier and the 21^{st} subcarrier in the 26-tone RU 7 are pilot subcarriers.

In the 26-tone RU 4, the 7^{th} subcarrier and the 21^{st} subcarrier in the 26-tone RU 4 are pilot subcarriers.

In the 26-tone RU 9, the 7^{th} subcarrier and the 22^{nd} subcarrier in the 26-tone RU 9 are pilot subcarriers.

In the 26-tone RU 5, the 7^{th} subcarrier and the 22^{nd} subcarrier in the 26-tone RU 5 are pilot subcarriers.

It can be learned from Table 12 that pilot subcarriers of the nine 26-tone RUs are centralized in four parts, namely, a frequency range of subcarriers numbered from -75 to -72, a frequency range of subcarriers numbered from -62 to -58, a frequency range of subcarriers numbered from 60 to 63, and a frequency range of subcarriers numbered from 73 to 77. In comparison with the case in which nine pilot subcarriers are centralized in Table 7, in this application, the pilot subcarriers can be more scattered, for example, scattered into four parts, and a quantity of pilot subcarriers in each part is reduced. This helps reduce a possibility of narrowband interference.

In an alternative description of Embodiment 3, a specific quantity of relative positions (for example, less than K) are defined, and each relative position is applicable to RUs in different parts of the K RUs. The following examples (Example 3 and Example 4) may be used for description.

Example 3: Two relative positions are defined. One relative position is applicable to the first part of RUs in the K RUs, and the other relative position is applicable to the second part of RUs in the K RUs. Alternatively, it may be described as follows: One relative position is associated with the first part of RUs in the K RUs, and the other relative position is associated with the second part of RUs in the K RUs.

Specifically, the two relative positions may be denoted as a third relative position and a fourth relative position.

The third relative position indicates that an X₃^{th} subcarrier and a Y₃^{th} subcarrier of an RU are pilot subcarriers. Values of the parameters X₃ and Y₃ are different, and both are positive integers less than or equal to K. The initial parameters X₃ and Y₃ may be denoted as [X₃, Y₃].

The fourth relative position indicates that an X₄^{th} subcarrier and a Y₄^{th} subcarrier of an RU are pilot subcarriers. Values of the parameters X₄ and Y₄ are different, and both are positive integers less than or equal to K. The initial parameters X₄ and Y₄ may be denoted as [X₄, Y₄].

It should be noted that, in an example, X₃=6, Y₃=20, X₄=7, and Y₄=21. Alternatively, in another example, X₃=6, Y₃=21, X₄=7, and Y₄=20.

Specifically, two parts of the K RUs may be denoted as the first part of RUs and the second part of RUs.

The first part of RUs may be two or more of the K RUs, for example, RUs having higher ranking positions in the K RUs.

The second part of RUs may be two or more of the K RUs, for example, RUs having lower ranking positions in the K RUs.

For example, the first bandwidth is 20 MHz, the K RUs are nine 26-tone RUs, and identifiers of the K RUs are 1, 6, 3, 8, 2, 7, 4, 9, and 5. Identifiers of the first part of RUs include 1, 6, 3, and 8, and identifiers of the second part of RUs include 2, 7, 4, 9, and 5. Alternatively, identifiers of the first part of RUs include 1, 6, 3, 8, and 5, and identifiers of the second part of RUs include 2, 7, 4, and 9.

For example, the first bandwidth is 20 MHz, X₃=6, Y₃=20, X₄=7, and Y₄=21. As shown in Table 11, the identifiers of the first part of RUs include 1, 6, 3, and 8, and the identifiers of the second part of RUs include 2, 7, 4, 9, and 5.

Example 4: Three relative positions are defined. One relative position is applicable to the first part of RUs in the K RUs, one relative position is applicable to the second part of RUs in the K RUs, and the other relative position is applicable to the third part of RUs in the K RUs. Alternatively, it may be described as follows: One relative position is associated with the first part of RUs in the K RUs, one relative position is associated with the second part of RUs in the K RUs, and the other relative position is associated with the third part of RUs in the K RUs.

Specifically, the three relative positions may be denoted as a third relative position, a fourth relative position, and a fifth relative position.

For the third relative position and the fourth relative position, refer to the descriptions in Example 3. Details are not described again.

The fifth relative position indicates that an X₅^{th} subcarrier and a Y₅^{th} subcarrier of an RU are pilot subcarriers. Values of the parameters X₅ and Y₅ are different, and both are positive integers less than or equal to K. The initial parameters X₅ and Y₅ may be denoted as [X₅, Y₅].

It should be noted that, in an example, X₃=6, Y₃=20, X₄=7, Y₄=21, X₅=7, and Y₅=22. Alternatively, in another example, X₃=6, Y₃=21, X₄=7, Y₄=20, X₅=7, and Y₅=21.

Specifically, three parts of the K RUs may be denoted as the first part of RUs, the second part of RUs, and the third part of RUs.

For example, the first bandwidth is 20 MHz, the K RUs are nine 26-tone RUs, and identifiers of the K RUs are 1, 6, 3, 8, 2, 7, 4, 9, and 5. Identifiers of the first part of RUs include 1, 6, 3, and 8, identifiers of the second part of RUs include 2, 7, and 4, and identifiers of the third part of RUs include 9 and 5.

For example, the first bandwidth is 20 MHz, X₃=6, Y₃=20, X₄=7, Y₄=21, X₅=7, and Y₅=22. As shown in Table 12, the identifiers of the first part of RUs include 1, 6, 3, and 8, the identifiers of the second part of RUs include 2, 7, and 4, and the identifiers of the third part of RUs include 9 and 5.

With reference to FIG. 9, the communication method provided in embodiments of this application is described in detail. A communication method 900 provided in an embodiment of this application includes the following operations.

S901: A first communication apparatus generates a pilot signal of a third RU.

For example, the first communication apparatus may be an AP, or may be a STA.

For example, the third RU belongs to a first bandwidth, the third RU includes one or more RUs in the K RUs, and the K RUs are RUs included in a tone plan of the first bandwidth.

The tone plan of the first bandwidth meets the following two conditions.

Condition 1: A part of subcarriers of each of the K RUs appear cyclically at an equal interval in a partial frequency domain range. For details, refer to the descriptions in the foregoing paragraphs. Details are not described again.

Condition 2: The K RUs include a first RU and a second RU, the first RU includes a first pilot subcarrier, the second RU includes a second pilot subcarrier, and a relative position of the first pilot subcarrier in the first RU is different from a relative position of the second pilot subcarrier in the second RU. For details, refer to the descriptions in the foregoing paragraphs. Details are not described again.

For example, the first bandwidth is 20 MHz. The K RUs included in the tone plan of the first bandwidth may be nine 26-tone RUs, as shown in Table 5.

If an RU size is a 26-tone RU, the third RU may be one of the nine 26-tone RUs, for example, any one of the nine 26-tone RUs.

If an RU size is a 52-tone RU, the third RU may be one of four 52-tone RUs, for example, any one of the four 52-tone RUs.

If an RU size is a 106-tone RU, the third RU may be one of two 106-tone RUs, for example, any one of the two 106-tone RUs.

For example, the first bandwidth is 40 MHz. The K RUs included in the tone plan of the first bandwidth may be eighteen 26-tone RUs, as shown in Table 6.

If an RU size is a 26-tone RU, the third RU may be one of the eighteen 26-tone RUs, for example, any one of the eighteen 26-tone RUs.

If an RU size is a 52-tone RU, the third RU may be one of eight 52-tone RUs, for example, any one of the eight 52-tone RUs.

If an RU size is a 106-tone RU, the third RU may be one of four 106-tone RUs, for example, any one of the four 106-tone RUs.

If an RU size is a 242-tone RU, the third RU may be one of two 242-tone RUs, for example, any one of the two 242-tone RUs.

For a process of generating the pilot signal, refer to the related technology. Details are not described again.

S902: The first communication apparatus sends the pilot signal to a second communication apparatus on a pilot subcarrier of the third RU. Correspondingly, the second communication apparatus receives the pilot signal from the first communication apparatus on the pilot subcarrier of the third RU.

For example, the second communication apparatus may be an AP, or may be a STA.

For example, if the third RU includes the one or more RUs in the K RUs, the pilot subcarrier of the third RU includes a part or all of pilot subcarriers of at least one RU in the one or more RUs.

For example, the first bandwidth is 20 MHz. The K RUs included in the tone plan of the first bandwidth may be nine 26-tone RUs.

If the RU size is the 26-tone RU, the third RU may be one of the nine 26-tone RUs. For example, the third RU is a first RU, or the third RU is a second RU. The pilot subcarriers of the third RU include all pilot subcarriers of one of the K RUs.

If the RU size is the 52-tone RU, the third RU may be one of the four 52-tone RUs. For example, the third RU includes two of the K RUs. The pilot subcarriers of the third RU include all pilot subcarriers of each of the two RUs.

If the RU size is the 106-tone RU, the third RU may be one of two 106-tone RUs. For example, the third RU includes a plurality of RUs in the K RUs. The pilot subcarriers of the third RU include a part of pilot subcarriers of each of the plurality of RUs.

S903: The second communication apparatus parses the pilot signal.

For example, the second communication apparatus performs phase estimation, frequency correction, phase correction, or the like based on the pilot signal, to improve communication performance.

### Implementation 2

It can be learned from Table 7 that a sequence of pilot subcarriers is not neat, and signal receiving performance of the second communication apparatus (namely, the receive end apparatus) is affected. The problem that "the sequence of pilot subcarriers is not neat" is described as follows:

That the sequence of pilot subcarriers is not neat may be understood as that, in a partial consecutive frequency range, an arrangement sequence of RU identifiers corresponding to adjacent pilot subcarriers is not neat. Details are as follows:

In a distributed RU (for example, dRU) pilot design based on an even allocation method, for all 26-tone dRUs, pilot subcarriers of different 26-tone dRUs have same and fixed relative positions in the corresponding 26-tone dRUs, for example, are always 7^{th} and 20^{th}, and pilot subcarriers of different dRUs are centralized in two parts, for example, a frequency range of subcarriers numbered from -75 to -67, and a frequency range of subcarriers numbered from 58 to 66, as shown in Table 7.

In Table 7, subcarriers with subcarrier numbers from -75 to -67 are pilot subcarriers, and an occurrence sequence of RUs corresponding to the nine pilot subcarriers is: 1, 6, 3, 8, 2, 7, 4, 9, and 5.

In Table 7, subcarriers with subcarrier numbers from 58 to 66 are pilot subcarriers, and an occurrence sequence of RUs corresponding to the nine pilot subcarriers is: 9, 5, 1, 6, 3, 8, 2, 7, and 4. The occurrence sequence is inconsistent with that of the RUs corresponding to the previous part, and receiving performance of the second communication apparatus (namely, the receive end apparatus) is affected.

This application provides a tone plan of the first bandwidth. For example, the tone plan of the first bandwidth includes K RUs (K is a positive integer greater than or equal to 2), and the tone plan of the first bandwidth meets the following two conditions.

Condition 3: A part of subcarriers of each of the K RUs appear cyclically at an equal interval in a partial frequency domain range. For details, refer to the descriptions in Condition 1. Details are not described again.

Condition 4: The K RUs are divided into two parts of RUs: a first part of RUs and a second part of RUs. RU identifiers of the first part of RUs include: 1, 6, 3, 8, 2, 7, and 4. RU identifiers of the second part of RUs include 9 and 5. For the first part of RUs, the 7^{th} subcarrier and the 20^{th} subcarrier of each RU are pilot subcarriers. For the second part of RUs, the 7^{th} subcarrier and the 21^{st} subcarrier of each RU are pilot subcarriers.

For example, the first bandwidth is 20 MHz. Distribution of pilot subcarriers of the K RUs is shown in Table 13.

**Table 13**

| Colu mn 1 | Colu mn 2 | Colu mn 3 | Colu mn 4 | Colu mn 5 | Colu mn 6 | Colu mn 7 | Colu mn 8 | Colu mn 9 | Colu mn 10 | Colu mn 11 | Colu mn 12 | Colu mn 13 | Colu mn 14 | Colu mn 15 | Colu mn 16 |
|---|---|---|---|---|---|---|---|---|---|---|---|---|---|---|---|
| -128 | | -96 | 4 | -64 | 3 | -32 | 9 | 0 | DC | 32 | 5 | 64 | **2** | 96 | 1 |
| -127 | | -95 | 9 | -63 | 8 | -31 | 5 | 1 | DC | 33 | 1 | 65 | **7** | 97 | 6 |
| -126 | | -94 | 5 | -62 | 2 | -30 | 1 | 2 | 106-2 | 34 | 6 | 66 | **4** | 98 | 3 |
| -125 | | -93 | 1 | -61 | 7 | -29 | 6 | 3 | 106-1 | 35 | 3 | 67 | **9** | 99 | 8 |
| -124 | | -92 | 6 | -60 | 4 | -28 | 3 | 4 | 9 | 36 | 8 | 68 | **5** | 100 | 2 |
| -123 | | -91 | 3 | -59 | 9 | -27 | 8 | 5 | 5 | 37 | 2 | 69 | 1 | 101 | 7 |
| -122 | | -90 | 8 | -58 | 5 | -26 | 2 | 6 | 1 | 38 | 7 | 70 | 6 | 102 | 4 |
| -121 | | -89 | 2 | -57 | 1 | -25 | 7 | 7 | 6 | 39 | 4 | 71 | 3 | 103 | 9 |
| -120 | 1 | -88 | 7 | -56 | 6 | -24 | 4 | 8 | 3 | 40 | 9 | 72 | 8 | 104 | 5 |
| -119 | 6 | -87 | 4 | -55 | 3 | -23 | 9 | 9 | 8 | 41 | 5 | 73 | 2 | 105 | 1 |
| -118 | 3 | -86 | 9 | -54 | 8 | -22 | 5 | 10 | 2 | 42 | 1 | 74 | 7 | 106 | 6 |
| -117 | 8 | -85 | 5 | -53 | 2 | -21 | 1 | 11 | 7 | 43 | 6 | 75 | 4 | 107 | 3 |
| -116 | 2 | -84 | 1 | -52 | 7 | -20 | 6 | 12 | 4 | 44 | 3 | 76 | 9 | 108 | 8 |
| -115 | 7 | -83 | 6 | -51 | 4 | -19 | 3 | 13 | 9 | 45 | 8 | 77 | 5 | 109 | 2 |
| -114 | 4 | -82 | 3 | -50 | 9 | -18 | 8 | 14 | 5 | 46 | 2 | 78 | 1 | 110 | 7 |
| -113 | 9 | -81 | 8 | -49 | 5 | -17 | 2 | 15 | 1 | 47 | 7 | 79 | 6 | 111 | 4 |
| -112 | 5 | -80 | 2 | -48 | 1 | -16 | 7 | 16 | 6 | 48 | 4 | 80 | 3 | 112 | 9 |
| -111 | 1 | -79 | 7 | -47 | 6 | -15 | 4 | 17 | 3 | 49 | 9 | 81 | 8 | 113 | 5 |
| -110 | 6 | -78 | 4 | -46 | 3 | -14 | 9 | 18 | 8 | 50 | 5 | 82 | 2 | 114 | 1 |
| -109 | 3 | -77 | 9 | -45 | 8 | -13 | 5 | 19 | 2 | 51 | 1 | 83 | 7 | 115 | 6 |
| -108 | 8 | -76 | 5 | -44 | 2 | -12 | 1 | 20 | 7 | 52 | 6 | 84 | 4 | 116 | 3 |
| -107 | 2 | -75 | **1** | -43 | 7 | -11 | 6 | 21 | 4 | 53 | 3 | 85 | 9 | 117 | 8 |
| -106 | 7 | -74 | **6** | -42 | 4 | -10 | 3 | 22 | 9 | 54 | 8 | 86 | 5 | 118 | 2 |
| -105 | 4 | -73 | **3** | -41 | 9 | -9 | 8 | 23 | 5 | 55 | 2 | 87 | 1 | 119 | 7 |
| -104 | 9 | -72 | **8** | -40 | 5 | -8 | 2 | 24 | 1 | 56 | 7 | 88 | 6 | 120 | 4 |
| -103 | 5 | -71 | **2** | -39 | 1 | -7 | 7 | 25 | 6 | 57 | 4 | 89 | 3 | 121 | |
| -102 | 1 | -70 | **7** | -38 | 6 | -6 | 4 | 26 | 3 | 58 | 9 | 90 | 8 | 122 | |
| -101 | 6 | -69 | **4** | -37 | 3 | -5 | 9 | 27 | 8 | 59 | 5 | 91 | 2 | 123 | |
| -100 | 3 | -68 | **9** | -36 | 8 | -4 | 5 | 28 | 2 | 60 | **1** | 92 | 7 | 124 | |
| -99 | 8 | -67 | **5** | -35 | 2 | -3 | 106-1 | 29 | 7 | 61 | **6** | 93 | 4 | 125 | |
| -98 | 2 | -66 | 1 | -34 | 7 | -2 | 106-2 | 30 | 4 | 62 | **3** | 94 | 9 | 126 | |
| -97 | 7 | -65 | 6 | -33 | 4 | -1 | DC | 31 | 9 | 63 | **8** | 95 | 5 | 127 | |

In Table 13, odd-numbered columns (such as columns 1/3/5/7/9/11/13/15) show subcarrier numbers, and even-numbered columns (such as columns 2/4/6/8/10/12/14/16) show RU numbers, direct current subcarriers, other subcarriers, or the like.

In Table 13, for nine distributed RUs, pilot subcarriers of different RUs are centralized in two parts, for example, the frequency range of subcarriers numbered from -75 to -67, and the frequency range of subcarriers numbered from 60 to 68.

As shown in Table 13, subcarriers with subcarrier numbers from -75 to -67 are pilot subcarriers, and an occurrence sequence of RUs corresponding to the nine pilot subcarriers is: 1, 6, 3, 8, 2, 7, 4, 9, and 5.

As shown in Table 13, subcarriers with subcarrier numbers from 60 to 68 are pilot subcarriers, and an occurrence sequence of RUs corresponding to the nine pilot subcarriers is: 1, 6, 3, 8, 2, 7, 4, 9, and 5. The occurrence sequence is consistent with that of the RUs corresponding to the previous part.

In this way, based on the tone plan of the first bandwidth, in a process in which a communication apparatus (for example, the first communication apparatus or the second communication apparatus) performs the communication method 900, for the second communication apparatus, the second communication apparatus may receive the pilot signal based on a same cyclic sequence (namely, the occurrence sequence of the RUs corresponding to the nine pilot subcarriers: 1, 6, 3, 8, 2, 7, 4, 9, and 5), to facilitate pilot signal receiving by the second communication apparatus, thereby improving pilot signal receiving performance.

It should be noted that, in this application, in Implementation 1, the problem that "positions of pilot subcarriers are excessively close" can be resolved, and in Implementation 2, the problem that "the sequence of the pilot subcarriers is not neat" can be resolved. Implementation 1 and implementation 2 are independent of each other, and are not used at the same time, or are not used in combination.

It should be noted that, in this application, the RU is used as an example for description. The RU may alternatively be replaced with an MRU, namely, a multi-user resource unit. For details, refer to the descriptions in the term explanation part. Details are not described again. In other words, it may be considered that the RU in this application includes the MRU. Alternatively, a part or all of the RUs may be understood as an MRU, that is, the "part or all of the RUs" and the "MRU" may be replaced with each other.

It should be noted that, in this application, the sequence from a low frequency to a high frequency is used as an example, and a sequence of index values (or referred to as pilot values) of pilot subcarriers may be consistent with a sequence of index values (or referred to as pilot values) of pilot subcarriers in a regular RU. In other words, the index value of the pilot subcarrier in the regular RU is also applicable to the technical solution of this application. Certainly, the index value of the pilot subcarrier in this application may alternatively be designed in different manners. This is not limited in this application.

It should be noted that FIG. 7 shows a pilot design manner. In FIG. 7, each RU is a regular RU (namely, an rRU). For example, for rRUs whose subcarriers are numbered from -238 to -10, for example, a 6^{th} subcarrier and a 20^{th} subcarrier of each 26-tone rRU are pilot subcarriers, and corresponding subcarrier numbers are -238, -224, -212, -198, -184, -170, -158, -144, -130, -116, -104, -90, -78, -64, -50, -36, -24, and -10 in ascending order. For rRUs whose subcarriers are numbered from 10 to 238, for example, a 7^{th} subcarrier and a 21^{st} subcarrier of each 26-tone rRU are pilot subcarriers, and corresponding subcarrier numbers are 238, 224, 212, 198, 184, 170, 158, 144, 130, 116, 104, 90, 78, 64, 50, 36, 24 and 10 in descending order.

Pilot subcarriers of a 52-tone rRU include pilot subcarriers of two 26-tone rRUs that form the 52-tone rRU, and pilot subcarriers of a 106-tone rRU are selected from pilot subcarriers of two 52-tone rRUs that form the 106-tone rRU. For example, four pilot subcarriers are selected from eight pilot subcarriers. Pilot subcarriers of a 242-tone rRU include pilot subcarriers of two 106-tone rRUs that form the 242-tone rRU, pilot subcarriers of a 484-tone RU include pilot subcarriers of two 242-tone rRUs that form the 484-tone RU, and pilot subcarriers of a 996-tone rRU are selected from pilot subcarriers of two 484-tone rRUs that form the 996-tone rRU.

It should be noted that, for RUs of a larger size, pilot subcarriers of these RUs are selected from pilot subcarriers of smaller RUs that form the RUs. In the selection process, selection is performed as evenly as possible. Examples are as follows:

For example, pilots of a 106-tone RU are selected from pilots of two 52-tone RUs that form the 106-tone RU. For example, four pilot subcarriers are selected from eight pilot subcarriers. The cyclic units "1, 6, 3, 8, 2, 7, 4, 9, and 5" are used as an example. When pilot subcarriers are selected for the 106-tone RU, pilot subcarriers may be selected from the 26-tone RU 1 and the 26-tone RU 2, or pilot subcarriers may be selected from the 26-tone RU 3 and the 26-tone RU 4, so that the pilot subcarriers are distributed more evenly.

Based on the foregoing arrangement sequence of the cyclic units, because the 26-tone RU 1 is close to the 26-tone RU 3, and the 26-tone RU 2 is close to the 26-tone RU 4, when pilot subcarriers are selected for the 106-tone RU, pilot subcarriers are not selected from the 26-tone RU 1 and the 26-tone RU 3, or pilot subcarriers are not selected from the 26-tone RU 2 and the 26-tone RU 4. In this way, a possibility that pilot subcarriers are distributed excessively close is reduced as much as possible.

It should be noted that in this application, the first bandwidth may be one of the following: 20 MHz, 40 MHz, 80 MHz, 160 MHz, or 320 MHz, or the first bandwidth may have another bandwidth value. This is not limited in this application.

A communication apparatus provided in embodiments of this application is described below.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that the division of the modules in embodiments of this application is an example, and is merely logical functional division, and other division may be used in an actual implementation.

FIG. 10 is a diagram of a structure of a communication apparatus 1000. The communication apparatus 1000 includes a processing module 1001 and a transceiver module 1002. The communication apparatus 1000 may be configured to implement a function of the first communication apparatus or the second communication apparatus.

In some embodiments, the communication apparatus 1000 may further include a storage module (not shown in FIG. 10), configured to store program instructions and data.

In some embodiments, the transceiver module 1002 may also be referred to as a transceiver unit, and is configured to implement a sending function and/or a receiving function. The transceiver module 1002 may include a transceiver circuit, a transceiver machine, a transceiver, or a communication interface.

In some embodiments, the transceiver module 1002 may include a receiving module and a sending module, respectively configured to perform receiving and sending steps performed by the first communication apparatus or the second communication apparatus in the foregoing method embodiments, and/or configured to support another process of the technology described in this specification. The processing module 1001 may be configured to perform a processing (for example, determining) step performed by the first communication apparatus or the second communication apparatus in the foregoing method embodiments, and/or configured to support another process of the technology described in this specification.

All related content of the steps in the foregoing method embodiments may be cited in function descriptions of the corresponding functional modules. Details are not described herein again.

Optionally, in this application, that the transceiver module receives/sends information may alternatively be understood as that the processing module receives/sends the information through the transceiver module. That the processing module receives/sends the information through the transceiver module may alternatively be understood as that the processing module controls the transceiver module to receive/send the information. Alternatively, that the processing module sends the information through the transceiver module may be understood as that the processing module outputs the information to the transceiver module, and the transceiver module sends the information; and that the processing module receives the information through the transceiver module may be understood as that the transceiver module receives the information and inputs the information to the processing module.

In this application, the communication apparatus 1000 is presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 1000 in FIG. 10 is a chip or a chip system, a function/an implementation process of the transceiver module 1002 may be implemented by an input/output interface (or a communication interface) of the chip or the chip system, and a function/an implementation process of the processing module 1001 may be implemented by a processor (or a processing circuit) of the chip or the chip system.

Because the communication apparatus 1000 provided in this embodiment may perform the foregoing methods, for technical effect that can be obtained by the terminal device, refer to the foregoing method embodiments. Details are not described herein again.

In a possible product form, the first communication apparatus or the second communication apparatus in embodiments of this application may be further implemented through the following: one or more field programmable gate arrays (field programmable gate arrays, FPGAs), a programmable logic device (programmable logic device, PLD), a controller, a state machine, a logic gate, a distributed hardware component, any other suitable circuit, or any combination of circuits that can perform various functions described throughout this application.

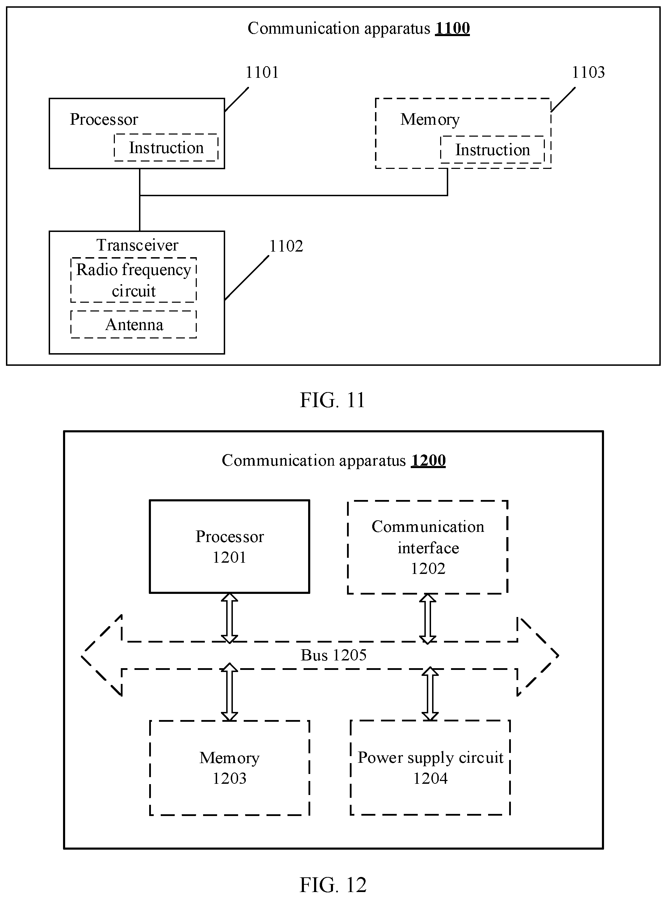

In another possible product form, the first communication apparatus or the second communication apparatus in embodiments of this application may be implemented by a general bus architecture. For ease of description, FIG. 11 is a diagram of a structure of a communication apparatus 1100 according to an embodiment of this application. The communication apparatus 1100 includes a processor 1101 and a transceiver 1102. The communication apparatus 1100 may be a first communication apparatus, or a chip or a chip system thereof. Alternatively, the communication apparatus 1100 may be a second communication apparatus, or a chip or a module thereof. FIG. 11 shows only main components of the communication apparatus 1100. In addition to the processor 1101 and the transceiver 1102, the communication apparatus 1100 may further include a memory 1103 and an input/output apparatus (not shown in the figure).

Optionally, the processor 1101 is mainly configured to: process a communication protocol and communication data, control the entire communication apparatus, execute a software program, and process data of the software program. The memory 1103 is mainly configured to store the software program and data. The transceiver 1102 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

Optionally, the processor 1101, the transceiver 1102, and the memory 1103 may be connected through a communication bus.

It should be noted that, the memory 1103 may exist independently of the processor 1101, or may be integrated with the processor 1101. The memory 1103 may be located inside the communication apparatus 1100, or may be located outside the communication apparatus 1100. This is not limited.

After the communication apparatus is powered on, the processor 1101 may read the software program in the memory 1103, explain and execute instructions of the software program, and process data of the software program. When data needs to be sent wirelessly, the processor 1101 performs baseband processing on the to-be-sent data, and then outputs a baseband signal to a radio frequency circuit. The radio frequency circuit performs radio frequency processing on the baseband signal, and then sends a radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 1101. The processor 1101 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, in terms of hardware implementation, a person skilled in the art may figure out that the communication apparatus 1000 may be in a form of the communication apparatus 1100 shown in FIG. 11.

In an example, a function/an implementation process of the processing module 1001 in FIG. 10 may be implemented by the processor 1101 in the communication apparatus 1100 shown in FIG. 11 by invoking the computer-executable instructions stored in the memory 1103. A function/an implementation process of the transceiver module 1002 in FIG. 10 may be implemented by the transceiver 1102 in the communication apparatus 1100 shown in FIG. 11.

In another possible product form, the first communication apparatus or the second communication apparatus in this application may use a composition structure shown in FIG. 12, or include components shown in FIG. 12. FIG. 12 is a diagram of composition of a communication apparatus 1200 according to this application.

As shown in FIG. 12, the communication apparatus 1200 includes at least one processor 1201. Optionally, the communication apparatus further includes a communication interface 1202.

When related program instructions are executed in the at least one processor 1201, the apparatus 1200 may implement the method provided in any one of the foregoing embodiments and any possible design thereof. Alternatively, the processor 1201 is configured to implement, through a logic circuit or by executing code instructions, the method provided in any one of the foregoing embodiments and any possible design thereof.

The communication interface 1202 may be configured to receive the program instructions and transmit the program instructions to the processor. Alternatively, the communication interface 1202 may be configured to perform communication interaction between the communication apparatus 1200 and another communication device, for example, exchange control signaling and/or service data. For example, the communication interface 1202 may be configured to receive a signal from an apparatus other than the communication apparatus 1200, and transmit the signal to the processor 1201; or send a signal from the processor 1201 to a communication apparatus other than the communication apparatus 1200.

Optionally, the communication interface 1202 may be a code and/or data read/write interface circuit, or the communication interface 1202 may be a signal transmission interface circuit between a communication processor and a transceiver, or may be a pin of a chip.

Optionally, the communication apparatus 1200 may further include at least one memory 1203, and the memory 1203 may be configured to store related program instructions and/or data that are/is required.

It should be noted that, the memory 1203 may exist independently of the processor 1201, or may be integrated with the processor 1201. The memory 1203 may be located inside the communication apparatus 1200, or may be located outside the communication apparatus 1200. This is not limited.

Optionally, the communication apparatus 1200 may further include a power supply circuit 1204, and the power supply circuit 1204 may be configured to supply power to the processor 1201. The power supply circuit 1204 may be located in a same chip as the processor 1201, or may be located in a chip other than a chip in which the processor 1201 is located.

Optionally, the communication apparatus 1200 may further include a bus 1205, and parts of the communication apparatus 1200 may be interconnected through the bus 1205.

In some embodiments, in terms of hardware implementation, a person skilled in the art may figure out that the communication apparatus 1000 shown in FIG. 10 may be in a form of the communication apparatus 1200 shown in FIG. 12.

In an example, a function/an implementation process of the processing module 1001 in FIG. 10 may be implemented by the processor 1201 in the communication apparatus 1200 shown in FIG. 12 by invoking the computer-executable instructions stored in the memory 1203. A function/an implementation process of the transceiver module 1002 in FIG. 10 may be implemented by the communication interface 1202 in the communication apparatus 1200 shown in FIG. 12.

It should be noted that the structure shown in FIG. 12 does not constitute a specific limitation on the first communication apparatus or the second communication apparatus. For example, in some other embodiments of this application, the first communication apparatus or the second communication apparatus may include more or fewer components than those shown in the figure, or some components may be combined, or some components may be split, or different component arrangements may be used. The components shown in the figure may be implemented by hardware, software, or a combination of software and hardware.

Optionally, in this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a distributed gate or a transistor logic device, a distributed hardware component, or the like. The general-purpose processor may be a microprocessor, or the processor may be any conventional processor or the like.

Optionally, in this application, the memory may be a volatile memory or a non-volatile memory, or may include the volatile memory and the non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of a random access memory (random access memory, RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Optionally, in this embodiment of this application, the power supply circuit includes but is not limited to at least one of the following: a power supply line, a power supply subsystem, a power management chip, a power consumption management processor, or a power consumption management control circuit.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read through another component) and send the computer-executable instructions to the processor.

In another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another distributed device. This is not specifically limited in embodiments of this application.

This application further provides a computer-readable storage medium. The computer-readable storage medium stores computer programs or instructions. When the computer programs or instructions are executed by a computer, functions in any one of the foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatus, and unit, refer to a corresponding process in the foregoing method embodiments. Details are not described herein again.

It may be understood that the system, apparatuses, and methods described in this application may alternatively be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, that is, may be in one position, or may be distributed on a plurality of network units. Parts displayed as units may be or may be not physical units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

All or some of the foregoing embodiments may be implemented by using software, hardware, firmware, or any combination thereof. When a software program is used for implementation, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a plurality. A single processor or another unit may implement several functions enumerated in the claims. Some measures are recorded in dependent claims that are different from each other, but this does not mean that these measures cannot be combined to produce a better effect.

## Claims

1. A communication method, comprising:
generating a pilot signal of a third resource unit RU; and
sending the pilot signal on a pilot subcarrier of the third RU, wherein the third RU belongs to a first bandwidth, the third RU comprises one or more RUs in K RUs, the K RUs are RUs comprised in a tone plan of the first bandwidth, each of the K RUs comprises 26 subcarriers, and K is a positive integer greater than or equal to 2, wherein
the tone plan of the first bandwidth meets:
a part of subcarriers of each of the K RUs appear cyclically at an equal interval in a partial frequency domain range, and
the K RUs comprise a first RU and a second RU, the first RU comprises a first pilot subcarrier, the second RU comprises a second pilot subcarrier, and a relative position of the first pilot subcarrier in the first RU is different from a relative position of the second pilot subcarrier in the second RU; and
the pilot subcarrier of the third RU comprises a part or all of pilot subcarriers of at least one RU in the one or more RUs.

2. A communication method, comprising:
receiving a pilot signal on a pilot subcarrier of a third resource unit RU; and
parsing the pilot signal, wherein
the third RU belongs to a first bandwidth, the third RU comprises one or more RUs in K RUs, the K RUs are RUs comprised in a tone plan of the first bandwidth, each of the K RUs comprises 26 subcarriers, and K is a positive integer greater than or equal to 2;
the tone plan of the first bandwidth meets:
a part of subcarriers of each of the K RUs appear cyclically at an equal interval in a partial frequency domain range, and
the K RUs comprise a first RU and a second RU, the first RU comprises a first pilot subcarrier, the second RU comprises a second pilot subcarrier, and a relative position of the first pilot subcarrier in the first RU is different from a relative position of the second pilot subcarrier in the second RU; and
the pilot subcarrier of the third RU comprises a part or all of pilot subcarriers of at least one RU in the one or more RUs.

3. The method according to claim 1 or 2, wherein
the K RUs further comprise a fourth RU, the fourth RU comprises a third pilot subcarrier, and a relative position of the third pilot subcarrier in the fourth RU is the same as the relative position of the second pilot subcarrier in the second RU.

4. The method according to any one of claims 1 to 3, wherein
the first pilot subcarrier comprises one subcarrier in a first cyclic unit and one subcarrier in a second cyclic unit, the first cyclic unit is different from the second cyclic unit, and the relative position of the first pilot subcarrier in the first RU is determined based on the first cyclic unit and the second cyclic unit;
the second pilot subcarrier comprises one subcarrier in a third cyclic unit and one subcarrier in a fourth cyclic unit, the third cyclic unit is different from the fourth cyclic unit, and the relative position of the second pilot subcarrier in the second RU is determined based on the third cyclic unit and the fourth cyclic unit; and
the first cyclic unit is different from the third cyclic unit, and/or the second cyclic unit is different from the fourth cyclic unit; and the first cyclic unit, the second cyclic unit, the third cyclic unit, and the fourth subcarrier each comprise one subcarrier of each of the K RUs.

5. The method according to claim 4, wherein
cyclic positions of the first pilot subcarrier in the first cyclic unit and the second cyclic unit are determined based on the following two items: an identifier of the first RU and K RU identifiers; and
cyclic positions of the second pilot subcarrier in the third cyclic unit and the fourth cyclic unit are determined based on the following two items: an identifier of the second RU and the K RU identifiers, wherein
the K RU identifiers are in a one-to-one correspondence with the K RUs.

6. The method according to claim 5, wherein
the identifier of the first RU is an M₁^{th} identifier in the K RU identifiers, the identifier of the second RU is an (M₁+N₁)^{th} identifier in the K RU identifiers, M₁ and N₁ are positive integers, and a sum of M₁ and N₁ is a positive integer less than or equal to K;
the first pilot subcarrier comprises an M₁^{th} subcarrier in the first cyclic unit and an M₁^{th} subcarrier in the second cyclic unit, wherein the M₁^{th} subcarrier corresponds to the identifier of the first RU; and
the second pilot subcarrier comprises an (M₁+N₁)^{th} subcarrier in the third cyclic unit and an (M₁+N₁)^{th} subcarrier in the fourth cyclic unit, wherein the (M₁+N₁)^{th} subcarrier corresponds to the identifier of the second RU.

7. The method according to claim 3, wherein the K RU identifiers comprise 1, 6, 3, 8, 2, 7, 4, 9, and 5, and the K RU identifiers are in a one-to-one correspondence with the K RUs;
an identifier of the second RU is different from an identifier of the fourth RU; and
the identifier of the second RU is one of the following: 1, 6, 3, and 8, and the identifier of the fourth RU is one of the following: 1, 6, 3, and 8; or the identifier of the second RU is one of the following: 2, 7, and 4, and the identifier of the fourth RU is one of the following: 2, 7, and 4; or the identifier of the second RU is one of the following: 9 and 5, and the identifier of the fourth RU is one of the following: 9 and 5; or the identifier of the second RU is one of the following: 2, 7, 4, 9, and 5, and the identifier of the fourth RU is one of the following: 2, 7, 4, 9, and 5.

8. The method according to any one of claims 1 to 3, wherein the first pilot subcarrier comprises an X₃^{th} subcarrier and a Y₃^{th} subcarrier of the first RU, and the second pilot subcarrier comprises an X₄^{th} subcarrier and a Y₄^{th} subcarrier of the second RU, wherein
X₃=6, Y₃=20, X₄=7, and Y₄=21; or X₃=6, Y₃=21, X₄=7, and Y₄=20; or
X₃=7, Y₃=21, X₄=7, and Y₄=22; or X₃=6, Y₃=20, X₄=7, and Y₄=22; or
X₃=7, Y₃=20, X₄=7, and Y₄=21; or X₃=6, Y₃=21, X₄=7, and Y₄=21.

9. The method according to any one of claims 1 to 3, wherein
the K RUs further comprise a fifth RU, the fifth RU comprises a fourth pilot subcarrier, and a cyclic unit in which the fourth pilot subcarrier is located is the same as a cyclic unit in which the second pilot subcarrier is located.

10. The method according to claim 9, wherein the K RU identifiers comprise 1, 6, 3, 8, 2, 7, 4, 9, and 5, and the K RU identifiers are in a one-to-one correspondence with the K RUs; and
an identifier of the second RU is different from an identifier of the fifth RU, the identifier of the second RU is one of the following: 2, 7, and 4, and the identifier of the fifth RU is one of the following: 2, 7, and 4.

11. The method according to any one of claims 1 to 3, wherein a fourth pilot subcarrier comprises an X₅^{th} subcarrier and a Y₅^{th} subcarrier of a fifth RU, wherein
X₅=6 and Y₅=20; or X₅=7 and Y₅=21; or X₅=7 and Y₅=22; or
X₅=6 and Y₅=21; or X₅=7 and Y₅=20; or X₅=7 and Y₅=21.

12. The method according to claim 1 or 2, wherein an identifier of the first RU is an M₂^{th} RU identifier in K RU identifiers, the K RU identifiers are in a one-to-one correspondence with the K RUs, and M₂ is a positive integer less than or equal to K; and
the first pilot subcarrier comprises an (X₁-a)^{th} subcarrier in the first RU and a (Y₁-a)^{th} subcarrier in the first RU, wherein a=k-M₂, k is a positive integer less than or equal to K, and X₁ and Y₁ are positive integers.

13. The method according to claim 12, wherein both the parameters X₁ and Y₁ are associated with a first part of identifiers in the K RU identifiers, and the first part of identifiers comprises the identifier of the first RU.

14. The method according to claim 12 or 13, wherein X₁=7, and Y₁=20.

15. The method according to any one of claims 12 to 14, wherein an identifier of the second RU is an N₂^{th} RU identifier in the K RU identifiers, and N₂ is a positive integer less than or equal to K; and
the second pilot subcarrier comprises an (X₁-b)^{th} subcarrier in the second RU and a (Y₁-b)^{th} subcarrier in the second RU, wherein b=k-N₂.

16. The method according to claim 15, wherein both the parameters X₁ and Y₁ are associated with the first part of identifiers in the K RU identifiers, and the first part of identifiers comprises the identifier of the second RU.

17. The method according to any one of claims 12 to 16, wherein
the first subcarrier comprises a 3^{rd} subcarrier and a 16^{th} subcarrier of the first RU, and the second subcarrier comprises a 4^{th} subcarrier and a 17^{th} subcarrier of the second RU; or
the first subcarrier comprises a 4^{th} subcarrier and a 17^{th} subcarrier of the first RU, and the second subcarrier comprises a 5^{th} subcarrier and an 18^{th} subcarrier of the second RU; or
the first subcarrier comprises a 5^{th} subcarrier and an 18^{th} subcarrier of the first RU, and the second subcarrier comprises a 6^{th} subcarrier and a 19^{th} subcarrier of the second RU; or
the first subcarrier comprises a 6^{th} subcarrier and a 19^{th} subcarrier of the first RU, and the second subcarrier comprises a 7^{th} subcarrier and a 20^{th} subcarrier of the second RU; or
the first subcarrier comprises a 7^{th} subcarrier and a 20^{th} subcarrier of the first RU, and the second subcarrier comprises an 8^{th} subcarrier and a 21^{st} subcarrier of the second RU; or
the first subcarrier comprises an 8^{th} subcarrier and a 21^{st} subcarrier of the first RU, and the second subcarrier comprises a 9^{th} subcarrier and a 22^{nd} subcarrier of the second RU; or
the first subcarrier comprises a 9^{th} subcarrier and a 22^{nd} subcarrier of the first RU, and the second subcarrier comprises a 10^{th} subcarrier and a 23^{rd} subcarrier of the second RU; or
the first subcarrier comprises a 10^{th} subcarrier and a 23^{rd} subcarrier of the first RU, and the second subcarrier comprises an 11^{th} subcarrier and a 24^{th} subcarrier of the second RU.

18. The method according to any one of claims 12 to 14, wherein an identifier of the second RU is an N₃^{th} RU identifier in the K RU identifiers, and N₃ is a positive integer less than or equal to K; and
the second pilot subcarrier comprises an (X₂-c)^{th} subcarrier in the second RU and a (Z₂-c)^{th} subcarrier in the second RU, wherein c=k-N₃, X₂ and Y₂ are positive integers, and values of X₁ and X₂ are different, and/or values of Y₁ and Y₂ are different.

19. The method according to claim 18, wherein both the parameters X₂ and Y₂ are associated with a second part of identifiers in the K RU identifiers, and the second part of identifiers comprises the identifier of the second RU.

20. The method according to claim 18 or 19, wherein X₂=7, and Y₂=21.

21. The method according to any one of claims 1 to 6 and claims 18 to 20, wherein
the first subcarrier comprises a 3^{rd} subcarrier and a 16^{th} subcarrier of the first RU, and the second subcarrier comprises a 4^{th} subcarrier and a 17^{th} subcarrier of the second RU; or
the first subcarrier comprises a 4^{th} subcarrier and a 17^{th} subcarrier of the first RU, and the second subcarrier comprises a 5^{th} subcarrier and an 18^{th} subcarrier of the second RU; or
the first subcarrier comprises a 5^{th} subcarrier and an 18^{th} subcarrier of the first RU, and the second subcarrier comprises a 6^{th} subcarrier and a 19^{th} subcarrier of the second RU; or
the first subcarrier comprises a 6^{th} subcarrier and a 19^{th} subcarrier of the first RU, and the second subcarrier comprises a 7^{th} subcarrier and a 20^{th} subcarrier of the second RU; or
the first subcarrier comprises a 7^{th} subcarrier and a 20^{th} subcarrier of the first RU, and the second subcarrier comprises an 8^{th} subcarrier and a 21^{st} subcarrier of the second RU; or
the first subcarrier comprises an 8^{th} subcarrier and a 21^{st} subcarrier of the first RU, and the second subcarrier comprises a 9^{th} subcarrier and a 22^{nd} subcarrier of the second RU; or
the first subcarrier comprises a 9^{th} subcarrier and a 22^{nd} subcarrier of the first RU, and the second subcarrier comprises a 10^{th} subcarrier and a 24^{th} subcarrier of the second RU; or
the first subcarrier comprises a 10^{th} subcarrier and a 24^{th} subcarrier of the first RU, and the second subcarrier comprises an 11^{th} subcarrier and a 25^{th} subcarrier of the second RU.

22. A communication apparatus, comprising a module configured to perform the method according to any one of claims 1 to 21.

23. A communication apparatus, comprising a processor, wherein the processor is configured to perform the method according to any one of claims 1 to 21.

24. A communication apparatus, comprising a logic circuit and an interface, wherein the logic circuit is coupled to the interface; and
the interface is configured to input and/or output information, and the logic circuit is configured to perform the method according to any one of claims 1 to 21.

25. A computer-readable storage medium, wherein the computer-readable storage medium is configured to store a computer program, and when the computer program is executed, the method according to any one of claims 1 to 21 is performed.

26. A computer program product, wherein when the computer program product is executed, the method according to any one of claims 1 to 21 is performed.

27. A communication system, wherein the communication system comprises a first communication apparatus and a second communication apparatus, the first communication apparatus is configured to perform the method according to any one of claim 1 and claims 3 to 21, and the second communication apparatus is configured to perform the method according to any one of claims 2 to 21.
